# EUROPEAN PATENT SPECIFICATION

(11) **EP 4 337 734 B1**
(45) Date of publication and mention of the grant of the patent: **23.04.2025**
(21) Application number: 22728579.8
(22) Date of filing: 11.05.2022
(51) Int. Cl.: C09D 7/40, C09D 7/61, B42D 25/425, B42D 25/30, C08F 222/00, C08F 222/10, C08F 287/00, C08F 292/00, C08F 293/00, C08K 3/08, C08L 53/00, C09D 5/00, C09D 151/10, C09D 153/00, C09D 4/00, C08F 220/10, C08F 220/56

(54) **COMPOSITIONS, COMPRISING PLATELET-SHAPED TRANSITION METAL PARTICLES**
ZUSAMMENSETZUNGEN MIT PLÄTTCHENFÖRMIGEN ÜBERGANGSMETALLPARTIKELN
COMPOSITIONS COMPRENANT DES PARTICULES DE MÉTAL DE TRANSITION SOUS FORME DE PLAQUETTES

(30) Priority: 12.05.2021 EP 21173520
(43) Date of publication of application: 20.03.2024
(73) Proprietor: BASF SE, 67056 Ludwigshafen am Rhein (DE)
(72) Inventor: GRIGORENKO, Nikolay A, 4057 Basel (CH); OSWALD, Andre, 4133 Schweizerhalle (Muttenz) (CH); LEYBACH, Holger, 4057 Basel (CH); KNISCHKA, Ralf, 67056 Ludwigshafen (DE); GERNANDT, Andreas, 67056 Ludwigshafen (DE)
(74) Representative: BASF IP Association
(86) International application number: PCT/EP2022/062753
(87) International publication number: WO 2022/238468

(56) References cited:
- WO-A1-2020/224982
- JP-A- 2019 182 984
- US-A1- 2020 230 646

## Description

The present invention relates to compositions, comprising
(A) platelet-shaped transition metal particles, wherein the number mean diameter of the platelet-shaped transition metal particles, present in the composition, is in the range of from 15 nm to 1000 nm, the transition metal is selected from silver, copper, gold and palladium, especially silver and copper, very especially silver;
(B) one, or more reactive diluents (B);
(C) optionally one, or more oligomers (C);
(D) one, or more photonitiators (D);
(E) at least a surfactant (E), which is a block copolymer, comprising at least a block A and a block B, wherein
   a) the block A comprises
      a1) monomer units (A1) derived from a compound selected from alkyl (meth)acrylates, alkyl (meth)acrylamides, or any mixture thereof, and
      a2) monomer units (A2) derived from a hydroxy group, or ether group containing alkyl (meth)acrylate;
   b) the block B comprises monomer units (B) derived from a compound selected from fluorinated (meth)acrylic esters of formula

      H₂C=CR⁴⁶(C(O)OR_{F-1}) (XX),

      wherein
      R⁴⁶ is H, or a methyl group; and
      R_{F-1} is an organic residue containing a perfluorinated alkyl group;
(F) optionally one, or more polymeric binders;
(G) optionally one, or more solvents; and
(H) optionally further additives.

The coatings, obtained with said compositions, show one color, when observed in transmission and another color, when observed in reflection on both sides of the cured coating.

WO2014/058904A1 relates to a process for increasing the optical density of a stable, silver nanoplate solution, comprising:
providing a solution comprising a plurality of silver nanoplates having a plate shape and having a peak optical density between 0.1 - 10 cm⁻¹;
adding a stabilizing agent to the solution;
adding a buffer to the solution; and
concentrating the buffer-containing solution to form a concentrated solution, wherein the concentrated solution comprises a plurality of silver nanoplates having the plate shape, and
wherein the concentrated solution has a peak optical density greater than 10 cm⁻¹ as well as a composition comprising:
   a solution of silver nanoplates,
   wherein the silver nanoplates comprises a stabilizing agent and a buffer, wherein the stabilizing agent is a poly vinyl polymer,
   wherein the optical density of the solution is greater than 100 cm⁻¹.

JP2019182984A relates to a water-based inkjet ink containing water, a water soluble organic solvent, metal particles, a dispersant adsorbed on a surface of the metal particle, a surfactant, and content of an aprotic polar solvent based on all mass of the water-based inkjet ink is 40 mass% or less, and the surfactant is a fluorine-based surfactant having a hydrophilic group and a hydrophobic group.

US2017246690 (EP3157697) discloses a method for synthesizing metal nanoparticles, the method comprising:
(a) preparing a metal precursor mixture comprising a metal precursor compound and a first aqueous liquid medium,
(b) preparing a reducing agent mixture comprising a reducing agent and a second aqueous liquid medium,
(c) optionally adding an acid or a base to the mixture prepared in step (a) or to the mixture prepared in step (b),
   wherein the metal precursor mixture and the reducing agent mixture are both free of stabilizing agent and free of seed particles,
(d) combining the metal precursor mixture with the reducing agent mixture so as to allow the metal precursor compound to react with the reducing agent,
thereby synthesizing the metal nanoparticles.

EP3156156 relates to a fine silver particle dispersion, which comprises fine silver particles, a short chain amine having 5 or less carbon atoms and a highly polar solvent, and a partition coefficient logP of the short chain amine is -1.0 to 1.4. The method for producing the fine silver particles of EP3156156 comprises a first step for preparing a mixed liquid of a silver compound which is decomposed by reduction to produce a metal silver, and a short chain amine having a partition coefficient logP of -1.0 to 1.4, and a second step for reducing the silver compound in the mixed liquid to produce a fine silver particle where a short chain amine having 5 or less carbon atoms which is adhered to at least a part of the surface of the particle.

EP2559786 discloses a method comprising:
a) providing a substrate;
b) applying an aqueous catalyst solution to the substrate, the aqueous catalyst solution comprises nanoparticles of one or more metal chosen from silver, gold, platinum, palladium, iridium, copper, aluminum, cobalt, nickel and iron, and one or more stabilizing compounds chosen from gallic acid, gallic acid derivatives and salts thereof, the aqueous catalyst solution is free of tin; and
c) electrolessly depositing metal onto the substrate using an electroless metal plating bath.

US9028724 discloses a method for preparing a dispersion of nanoparticles, comprising: dispersing nanoparticles having hydrophobic ligands on the surface in a hydrophobic solvent to form a first dispersion; mixing the first dispersion with a surface modification solution comprising (a) at least one wetting-dispersing agent selected from polydimethylsilane, alkylol ammonium salt of an acidic polyester and alkylol ammonium salt of a polyacrylic acid, (b) a surfactant, and (c) an aqueous-based solvent to form a first mixture solution; mixing the first mixture solution with a ligand removal agent to form a second mixture solution containing hydrophilic nanoparticles and separating the hydrophilic nanoparticles from the second mixture solution; and dispersing the hydrophilic nanoparticles in an aqueous-based solvent, wherein the nanoparticles comprise one of a metal and a metal oxide.

EP2667990B1 relates to a process comprising:
forming an insoluble complex of a metal salt from a reaction mixture comprising a solvent, a first surfactant, a second surfactant, and a third surfactant, each surfactant being present in the insoluble complex of the metal salt, and
reacting the insoluble complex of the metal salt with a reducing agent in the reaction mixture to form metal nanoparticles;
wherein the first surfactant comprises a primary amine, the second surfactant comprises a secondary amine, and the third surfactant comprises a chelating agent comprising N,N'-dialkylethylenediamine.

EP1791702B9 relates to an ink for ink-jet printing or digital printing comprising a vehicle and metallic particles having a weight average particle size of from 40 nm to 1 micrometres, preferably from 50 nm to 500 nm, wherein the loading of metallic nanoparticles in the ink is comprised between 2 percent by weight and 75 percent by weight, preferably from 2 percent to 40 percent by weight, and the viscosity of the ink is comprised between 10 and 40 cP.

WO09/056401 relates to a method for the synthesis, isolation and re-dispersion in organic matrixes of nano-shaped transition metal particles, selected from the group consisting of Zn, Ag, Cu, Au, Ta, Ni, Pd, Pt, Co, Rh, Ir, Fe, Ru, and Ti, comprising
a) adding to an aqueous solution of the transition metal salt an acrylate or methacrylate monomer or oligomer, or a polyacrylate or polymethacrylate and a reducing agent;
b1) treating the colloidal solution with a peroxide; or
b2) exposing the colloidal solution to UV- or visible light;
c) adding a water soluble amine; and
d) isolating the nano-shaped transition metal particles or re-disperse the nano shaped
transition metal particles together with a dispersing agent in a liquid acrylate or methacrylate monomer.

WO2010108837 relates to a method of manufacturing shaped transition metal particles in the form of nanoplatelets, which metal is selected from the group consisting of Cu, Ag, Au, Zn, Cd, Ti, Cr, Mn, Fe, Co, Ni, Ru, Rh, Pd, Os, Ir and Pt, which method comprises the steps of first a) adding a reducing agent to an aqueous mixture comprising a transition metal salt and a polymeric dispersant, and subsequently b) treating the obtained colloidal dispersion with a peroxide, wherein the aqueous mixture in step a) comprises the transition metal salt in a concentration of higher than 2 mmol per liter.

WO11064162 relates to security, or decorative element, comprising a substrate, which may contain indicia or other visible features in or on its surface, and on at least part of the said substrate surface, a coating comprising platelet shaped transition metal particles having a longest dimension of edge length of from 15 nm to 1000 nm, preferably from 15 nm to 600 nm and particularly from 20 nm to 500 nm, and a thickness of from 2 nm to 100 nm, preferably from 2 to 40 nm and particularly from 4 to 30 nm and a method for forming for forming an optically variable image (an optically variable device) on a substrate comprising the steps of: forming an optically variable image (OVI) on a discrete portion of the substrate; and depositing a coating composition comprising platelet shaped transition metal particles having a longest dimension of edge length of from 15 nm to 1000 nm, preferably from 15 nm to 600 nm and particularly from 20 nm to 500 nm, and a thickness of from 2 nm to 100 nm, preferably from 2 to 40 nm and particularly from 4 to 30 nm and a binder on at least a portion of the OVI.

WO2013/186167 discloses a method for forming a surface relief microstructure, especially an optically variable image (an optically variable device, OVD) on a substrate comprising the steps of:
A) applying a curable composition to at least a portion of the substrate wherein the curable composition comprises
   a1) at least one ethylenically unsaturated resin, a monomer or a mixture thereof;
   a2) at least one photoinitiator; and
   a3) a metal pigment which is in the form of platelet shaped transition metal particles having a longest dimension of edge length of from 5 nm to 1000 nm, preferably from 7 nm to 600 nm and particularly from 10 nm to 500 nm, and a thickness of from 1 nm to 100 nm, preferably from 2 to 40 nm and particularly from 3 to 30 nm;
B) contacting at least a portion of the curable composition with a surface relief microstructure, especially optically variable image forming means;
C) curing the composition by using at least one UV lamp.

WO2014/041121 and WO2014/187750 relate to security elements, comprising a coating comprising platelet shaped transition metal particles having a longest dimension of edge length of from 15 nm to 1000 nm, preferably from 15 nm to 600 nm and particularly from 20 nm to 500 nm, and a thickness of from 2 nm to 100 nm, preferably from 2 to 40 nm and particularly from 4 to 30 nm.

WO2020/083794 relates to compositions, comprising silver nanoplatelets, wherein the mean diameter of the silver nanoplatelets, present in the composition, is in the range of 20 to 70 nm with standard deviation being less than 50% and the mean thickness of the silver nanoplatelets, present in the composition, is in the range of 5 to 30 nm with standard deviation being less than 50%, wherein the mean aspect ratio of the silver nanoplatelets is higher than 1.5, a process for its production, printing inks containing the compositions and their use in security products. The highest wavelength absorption maximum of the population of all silver nanoplatelets in the composition being within the range of 450 to 550 nm. A coating, comprising the composition, shows a red, or magenta color in transmission and a greenish-metallic color in reflection.

WO2020/224982 relates to compositions, comprising silver nanoplatelets, wherein the number mean diameter of the silver nanoplatelets, present in the composition, is in the range of 50 to 150 nm with standard deviation being less than 60% and the number mean thickness of the silver nanoplatelets, present in the composition, is in the range of 5 to 30 nm with standard deviation being less than 50%, wherein the mean aspect ratio of the silver nanoplatelets is higher than 2.0 and the highest wavelength absorption maximum of the population of all silver nanoplatelets in the composition being within the range of 560 to 800 nm.

European patent application no. 20171077.9 relates to compositions, comprising platelet-shaped transition metal particles, which bear a surface modifying agent of formula A-(CHR⁹)ᵣ-R¹⁰ (V), wherein if r is 1, A is a C₁-C₂₅alkyl group substituted with one, or more fluorine atoms; a C₂-C₂₅alkenyl substituted with one, or more fluorine atoms; a C₂-C₂₅alkynyl group substituted with one, or more fluorine atoms; a C₃-C₂₀cycloalkyl group substituted with one, or more fluorine atoms; or a C₆-C₂₄aryl group substituted with one, or more fluorine atoms, CF₃ or -O-CF₃ groups; if r is 0, A is a C₆-C₂₄aryl group substituted with one, or more fluorine atoms, CF₃ or -O-CF₃ groups; or a C₇-C₂₄aralkyl group substituted with one, or more fluorine atoms, CF₃ or -O-CF₃ groups;
R⁹ is H, or a C₁-C₄alkyl group; and R¹⁰ is a thiol group, or an amino group.

European patent application no. 21154989.4 relates to A radically curable composition, comprising
(A) silver nanoplatelets,
(B) one reactive diluent comprising 1 to 4 (meth)acrylate groups;
(C) one, or more urethane (meth)acrylates (C), which are obtainable by reaction of the following components:
   (a) at least one isocyanate having two isocyanate groups,
   (b) at least one polyalkylene oxide polyether having at least 2 hydroxyl groups,
   (c) at least one hydroxy-functional (meth)acrylate having one hydroxyl group and one (meth)acrylate group,
   (d) at least one compound having at least one isocyanate reactive group and at least one acid function,
   (e) at least one basic compound which is present for neutralization or partial neutralization of the acid groups of component (d),
   (f) optionally at least one monoalcohol having one hydroxy function ;
(D) one, or more photonitiators;
(E) optionally one, or more reactive diluents, which are different from component (B);
(F) optionally one, or more oligomers, which are different from component (C); (G) optionally one, or more surfactants;
(I) optionally one, or more polymeric binder; and
(H) optionally further additives.

It has now been found, surprisingly, that coatings obtained after curing of the radically curable compositions of the present invention, show one color, when observed in transmission and another color, when observed in reflection on both sides of the cured coating.

Accordingly, the present application relates to radically curable compositions, comprising
(A) platelet-shaped transition metal particles, wherein the number mean diameter of the platelet-shaped transition metal particles, present in the composition, is in the range of from 15 nm to 1000 nm, the transition metal is selected from silver, copper, gold and palladium, especially silver and copper, very especially silver;
(B) one, or more reactive diluents (B);
(C) optionally one, or more oligomers (C);
(D) one, or more photonitiators (D);
(E) at least a surfactant (E), which is a block copolymer, comprising at least a block A and a block B, wherein
   a) the block A comprises
      a1) monomer units (A1) derived from a compound selected from alkyl (meth)acrylates, alkyl (meth)acrylamides, or any mixture thereof, and
      a2) monomer units (A2) derived from a hydroxy group, or ether group containing alkyl (meth)acrylate;
   b) the block B comprises monomer units (B) derived from a compound selected from fluorinated (meth)acrylic esters of formula

      H₂C=CR⁴⁶(C(O)OR_{F-1}) (XX),

      wherein
      R⁴⁶ is H, or a methyl group; and
      R_{F-1} is an organic residue containing a perfluorinated alkyl group;
(F) optionally one, or more polymeric binders;
(G) optionally one, or more solvents; and
(H) optionally further additives.

The number mean diameter and the number mean thickness are determined by transmission electron microscopy (TEM).

The term "security document" refers to a document which is usually protected against counterfeit or fraud by at least one security feature. Examples of security documents include without limitation value documents and value commercial goods.

The term "UV-Vis curable" and "UV-Vis curing" refers to radiation-curing by photopolymerization, under the influence of an irradiation having wavelength components in the UV or in the UV and visible part of the electromagnetic spectrum (typically 100 nm to 800 nm, preferably between 150 and 600 nm and more preferably between 200 and 400 nm).

The present invention preferably provides UV-Vis radiation radically curable printing inks, preferably selected from the group consisting of UV-Vis radiation radically curable rotogravure printing inks, UV-Vis radiation radically curable flexography security inks and UV-Vis radiation radically curable screen printing security inks and more preferably UV-Vis radiation radically curable screen printing security inks.

### (B) Reactive diluents

Reactive diluents are generally described in P. K. T. Oldring (ed.), Chemistry & Technology of UV & EB Formulations for Coatings, Inks & paints, Vol. II, Chapter III: Reactive Diluents for UV & EB Curable Formulations, Wiley and SITA technology, London 1997.

A "reactive diluent" is a component that contains at least one free radically reactive group (e.g., an ethylenically-unsaturated group) that can co-react with components (C) (e.g., is capable of undergoing addition polymerization).

The reactive diluent (B) may comprise two different types of radically polymerizable ethylenically unsaturated groups in one molecule, for example, acrylate and methacrylate, acrylate and acrylamide, or acrylate and vinyl ester groups.

The reactive diluent (B) is a relatively low molecular weight compound having a weight average molecular weight MW less than 800 g/mol.

The reactive diluent (B) may be a single diluent, or a mixture of two, or more diluents.

If the composition of the present invention comprises the reactive diluent(s) (B), it is contained in an amount of 5 to 90 % by weight , preferably 10 to 90 % by weight, more preferably 30 to 90 % by weight based on the total weight of the composition.

The composition of the present invention may contain a monofunctional, difunctional, trifunctional, or tetrafunctional diluent having one, two, three, or four unsaturated carbon-carbon bonds.

The reactive diluent B may be an epoxyacrylate selected from reaction products of (meth)acrylic acid with aromatic glycidyl ethers or aliphatic glycidyl ethers. Aromatic glycidyl ethers are, for example, bisphenol A diglycidyl ether, bisphenol F diglycidyl ether, bisphenol B diglycidyl ether, bisphenol S diglycidyl ether, hydroquinone diglycidyl ether, alkylation products of phenol/dicyclopentadiene, e.g., 2,5-bis[(2,3-epoxypropoxy)phenyl]octahydro-4,7-methano-5H-indene (CAS No. [13446-85-0]), and tris[4-(2,3-epoxypropoxy)phenyl]methane isomers (CAS No. [66072-39-7]). Examples of aliphatic glycidyl ethers include 1,4-butanediol diglycidyl ether, 1,6-hexanediol diglycidyl ether, trimethylolpropane triglycidyl ether, pentaerythritol tetraglycidyl ether, 1,1,2,2-tetrakis[4-(2,3-epoxypropoxy)phenyl]ethane (CAS No. [27043-37-4]), diglycidyl ether of polypropylene glycol (α,ω-bis(2,3-epoxypropoxy)poly(oxypropylene), CAS No. [16096-30-3]) and of hydrogenated bisphenol A (2,2-bis[4-(2,3-epoxypropoxy)cyclohexyl]propane, CAS No. [13410-58-7]).

The reactive diluent (B) is preferably selected from monofunctional (meth)acrylates, difunctional (meth)acrylates, trifunctional (meth)acrylates, tetrafunctional (meth)acrylates, pentafunctional (meth)acrylates, hexafunctional (meth)acrylates, monofunctional vinylamides, monofunctional vinyl esters, monofunctional (meth)acrylamides, di(meth)acrylamides, divinyl esters, divinyl amide, trimethylolpropane formal (meth)acrylates, N-vinyloxazolidinones, N-Vinyl-caprolactam (NVC) and N-Vinyl-pyrrolidone (NVP) and mixtures thereof.

An example of monofunctional vinyl esters is 1-hexanoic acid vinyl ester.

Examples of monofunctional vinylamides include N-vinyl-pyrrolidone, N-vinylcaprolactame, N-(hydroxymethyl)vinylamide, N-hydroxyethyl vinylamide, N-isopropylvinylamide, N-isopropylmethvinylamide, N-tert-butylvinylamide, N,N'-methylenebisvinylamide, N-(isobutoxymethyl)vinylamide, N-(butoxymethyl)vinylamide, N-[3-(dimethylamino)propyl]methvinylamide, N,N-dimethylvinylamide, N,N-diethylvinylamide and N-methyl-N-vinylacetamide.

Examples of monofunctional (meth)acrylamides include acryloylmorpholine, methacryloylmorpholine, N-(hydroxymethyl)acrylamide, N-hydroxyethyl acrylamide, N-isopropylacrylamide, N-isopropylmethacrylamide, N-tert-butylacrylamide, N,N'-methylenebisacrylamide, N-(isobutoxymethyl)acrylamide, N-(butoxymethyl)acrylamide, N-[3-(dimethylamino)propyl]methacrylamide, N,N-dimethylacrylamide, N,N-diethylacrylamide, N-(hydroxymethyl)methacrylamide, N-hydroxyethyl methacrylamide, N-isopropylmethacrylamide, N-isopropylmethmethacrylamide, N-tert-butylmethacrylamide, N-(isobutoxymethyl)methacrylamide, N-(butoxymethyl)methacrylamide, N-[3-(dimethylamino)propyl]methmethacrylamide, N,N-dimethylmethacrylamide and N,N-diethylmethacrylamide.

Further examples of a monofunctional diluent are N-vinyloxazolidinones of formula 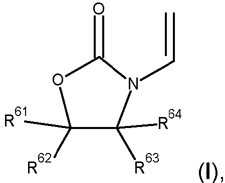 wherein
R⁶¹, R⁶², R⁶³ and R⁶⁴ are independently of each other a hydrogen atom or an organic group having not more than 10 carbon atoms, such as, for example, N-vinyloxazolidinone (NVO), or N-vinyl-5-methyl oxazolidinone (NVMO);
N-Vinyl-pyrrolidone (NVP), N-Vinyl-caprolactam (NVC), trimethylolpropane formal (meth)acrylates, such as, for example, 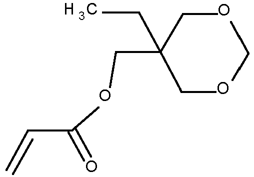 (trimethylolpropane formal acrylate) 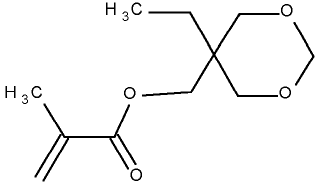 (trimethylolpropane formal methacrylate); - di(meth)acrylamides of formula 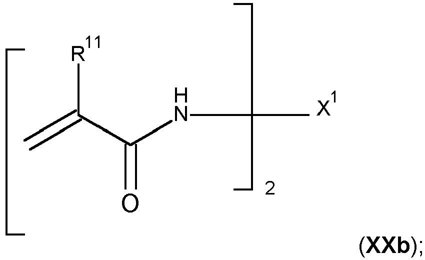 wherein
   R¹¹ is independently in each occurrence H, or a methyl group,
   X¹ is a group of formula 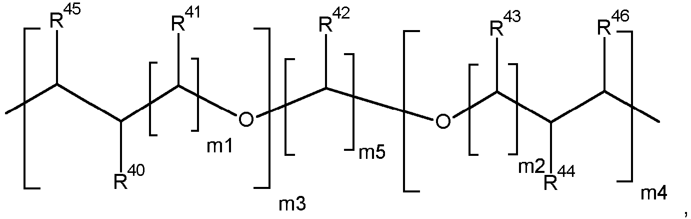 wherein
      m1 is 0, or 1; m2 is 0, or 1;
      m3 is 0, or an integer of 1 to 10; m4 is 0, or an integer of 1 to 10;
      m5 is 0, or an integer 1 to 8;
      R⁴² is independently in each occurrence H, or a C₁-C₄alkyl group;
      R⁴⁰, R⁴¹, R⁴³, R⁴⁴, R⁴⁵ and R⁴⁶ are independently of each other H, or a C₁-C₄alkyl group; divinyl esters of formula 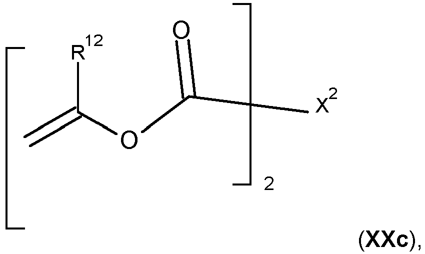 such as, for example, divinyl adipate, succinic acid divinyl ester, and
      divinyl amides of formula 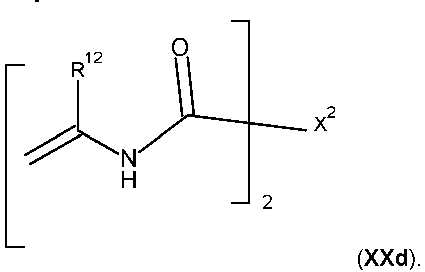
         R¹² **is** independently in each occurrence H, or a methyl group,
         X² is a group of formula 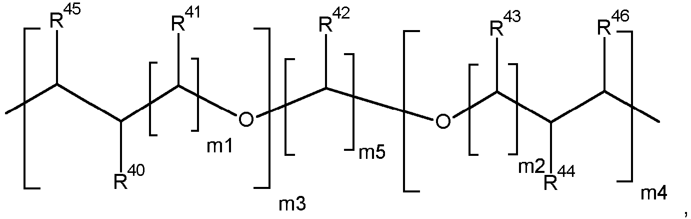 wherein
            m1 is 0, or 1; m2 is 0, or 1;
            m3 is 0, or an integer of 1 to 10; m4 is 0, or an integer of 1 to 10;
            m5 is 0, or an integer 1 to 8;
            R⁴² is independently in each occurrence H, or a C₁-C₄alkyl group;
            R⁴⁰, R⁴¹, R⁴³, R⁴⁴, R⁴⁵ and R⁴⁶ are independently of each other H, or a C₁-C₄alkyl group.

The reactive diluent (B) is preferably selected from monofunctional (meth)acrylates, difunctional (meth)acrylates, trifunctional (meth)acrylates, tetrafunctional (meth)acrylates, pentafunctional (meth)acrylates, hexafunctional (meth)acrylates, divinyl esters and mixtures thereof.

Examples of monofunctional (meth)acrylates include without limitation octyl acrylate; decyl acrylate; lauryl acrylate, tridecyl acrylate; isodecyl acrylate; stearyl acrylate, 2-(2-ethoxyethoxy)ethyl acrylate, octyl methacrylate, lauryl methacrylate, isodecyl methacrylate, tridecyl methacrylate; tetradecyl methacrylate; isodecyl methacrylate and stearyl methacrylate, 3,3,5-trimethylcyclohexyl acrylate; isobornyl acrylate; 4-tert-butylcyclohexyl acrylate; cyclohexylmethacrylate, isobornyl methacrylate, tetrahydrofurfuryl acrylate, (5-ethyl-1,3-dioxan-5-yl)methyl acrylate, ethoxylated phenyl acrylate, ethoxylated phenyl methacrylate, nonyl phenol acrylate, nonyl phenol methacrylate, methoxy polyethyleneglycol acrylates, methoxy polyethyleneglycol methacrylates, methoxy polypropyleneglycol acrylates, methoxy polypropyleneglycol methacrylates, tetrahydrofurfuryl methacrylate, cyclic trimethylolpropane formal methacrylate, hydroxyethyl acrylate, hydroxypropyl acrylate and glycidyl acrylate, N-(2-hydroxyethyl)acrylate, hydroxyethyl methacrylate, hydroxypropyl methacrylate and glycidyl methacrylate, benzyl acrylate, 2-phenoxyethyl acrylate, ethoxylated (EO4) phenol acrylate; mixtures of ethoxylated (EO4) phenol acrylate and ethoxylated (EO8) nonylphenol acrylate; propoxylated (PO2) nonylphenol acrylate, ethoxylated o-phenylphenol acrylate, p-cumylphenoxylethyl acrylate, dicyclopentenyl acrylate and dicyclopentenyloxyethyl acrylate and 2-(N-butylcarbamoyloxy)ethyl acrylate.

The monofunctional (meth)acrylates may include hydroxyethyl acrylate, hydroxypropyl acrylate and glycidyl acrylate, N-(2-hydroxyethyl)acrylate, hydroxyethyl methacrylate, hydroxypropyl methacrylate, benzyl acrylate and glycidyl methacrylate.

Examples of the difunctional (meth)acrylate are bisphenol A ethoxylate diacrylate, bisphenol A glycerolate diacrylate, glycerol diacrylate, triglycerol diacrylate, poly(ethylene glycol)-block-poly(propylene glycol)-block-poly(ethylene glycol) diacrylate, tricyclo[5.2.1.0^{2,6}]decanedimethanol diacrylate, (ethoxylated) trimethylolpropane methyl ether diacrylate, (propoxylated) trimethylolpropane methyl ether diacrylate, cyclohexanediol diacrylate, cyclohexanedimethanol diacrylate, cyclohexanedimethanol diacrylate, bisphenol A ethoxylate dimethacrylate, bisphenol A glycerolate dimethacrylate, glycerol dimethacrylate, triglycerol dimethacrylate, poly(ethylene glycol)-block-poly(propylene glycol)-block-poly(ethylene glycol) dimethacrylate, tricyclo[5.2.1.0^{2,6}]decanedimethanol dimethacrylate, (ethoxylated) trimethylolpropane methyl ether dimethacrylate, (propoxylated) trimethylolpropane methyl ether dimethacrylate, cyclohexanediol dimethacrylate and cyclohexanedimethanol dimethacrylate.

The difunctional (meth)acrylate is preferably a compound of formula 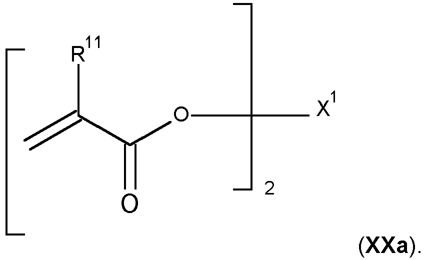
R¹¹ is independently in each occurrence H, or a methyl group;
X¹ is a group of formula 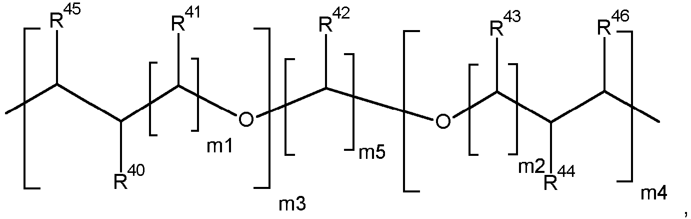 or 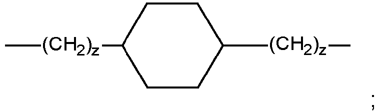 wherein
   m1 is 0, or 1; m2 is 0, or 1;
   m3 is 0, or an integer of 1 to 10; m4 is 0, or an integer of 1 to 10;
   m5 is 0, an integer 1 to 8;
   z is 0, or 1;
   R⁴² is independently in each occurrence H, or a C₁-C₄alkyl group;
   R⁴⁰, R⁴¹, R⁴³, R⁴⁴, R⁴⁵ and R⁴⁶ are independently of each other H, or a C₁-C₄alkyl group.

Examples of difunctional (meth)acrylates of formula (XXa) are propylene glycol diacrylate, dipropylene glycol diacrylate, tripropylene glycol diacrylate, tetrapropylene glycol diacrylate, ethylene glycol diacrylate, diethylene glycol diacrylate, triethylene glycol diacrylate, tetraethylene glycol diacrylate, 1,3-propanediol diacrylate, 1,2-butanediol diacrylate, 1,3-butanediol diacrylate, 1,4-butanediol diacrylate, pentanediol diacrylate, hexanediol diacrylate, (ethoxylated) 1,4-butanediol diacrylate, (propoxylated) 1,4-butanediol diacrylate, (ethoxylated) 1,5-pentanediol diacrylate, (propoxylated) 1,5-pentanediol diacrylate, (ethoxylated) 1,6-hexanediol diacrylate, (propoxylated) 1,6-hexanediol diacrylate, (ethoxylated) 1,8-octanediol diacrylate,(propoxylated) 1,8-octanediol diacrylate, (ethoxylated)neopentyl glycol diacrylate, (propoxylated)neopentyl glycol diacrylate, propylene glycol dimethacrylate, dipropylene glycol dimethacrylate, tripropylene glycol dimethacrylate, tetrapropylene glycol dimethacrylate, ethylene glycol dimethacrylate, diethylene glycol dimethacrylate, triethylene glycol dimethacrylate, tetraethylene glycol dimethacrylate, 1,3-propanediol dimethacrylate, 1,2-butanediol dimethacrylate, 1,3-butanediol dimethacrylate, 1,4-butanediol dimethacrylate, pentanediol dimethacrylate, hexanediol dimethacrylate, (ethoxylated) 1,4-butanediol dimethacrylate, (propoxylated) 1,4-butanediol dimethacrylate, (ethoxylated) 1,5-pentanediol dimethacrylate, (propoxylated) 1,5-pentanediol dimethacrylate, (ethoxylated) 1,6-hexanediol dimethacrylate, (propoxylated) 1,6-hexanediol dimethacrylate, (ethoxylated) 1,8-octanediol dimethacrylate,(propoxylated) 1,8-octanediol dimethacrylate, (ethoxylated)neopentyl glycol dimethacrylate, (propoxylated)neopentyl glycol dimethacrylate, polyethylene glycol diacrylate, polyethyleneglycol dimethacrylate, poly(propylene glycol) diacrylate, poly(propylene glycol) dimethacrylate.

Examples of trifunctional (meth)acrylates are trimethylolpropane triacrylate (TMPTA), trimethylolpropane trimethacrylate (TMPTMA), ethoxylated trimethylolpropane triacrylates (in particular selected from the group consisting of ethoxylated (EO3) trimethylolpropane triacrylates, ethoxylated (EO6) trimethylolpropane triacrylates, ethoxylated (EO9) trimethylolpropane triacrylates), propoxylated trimethylolpropane triacrylates (PO3 TMPTA), ethoxylated glycerol triacrylates and propoxylated glycerol triacrylates (GPTA), pentaerythritol triacrylates (PETA), a mixture of pentaerythritol triacrylate and tetraacrylate, ethoxylated pentaerythritol triacrylates, propoxylated pentaerythritol triacrylates (ethoxylated (EO3) pentaerythritol triacrylates, ethoxylated (EO6) pentaerythritol triacrylates, ethoxylated (EO9) pentaerythritol triacrylates) and mixtures thereof.

Examples of tetrafunctional (meth)acrylates are bistrimethylolpropane tetraacrylate (DiTMPTA), pentaerythritol tetracrylate (PETA), tetramethylolmethane tetramethacrylate, pentaerythritol tetramethacrylate, bistrimethylolpropane tetraacrylate, bistrimethylolpropane tetramethacrylate, ethoxylated bistrimethylolpropane tetraacrylate, propoxylated bistrimethylolpropane tetraacrylate, ethoxylated pentaerythritol tetraacrylate (EPETA), propoxylated pentaerythritol tetraacrylate, dipentaerythritol tetraacrylate, ethoxylated dipentaerythritol tetraacrylate, propoxylated dipentaerythritol tetraacrylate and mixtures thereof.

Examples of pentafunctional (meth)acrylates are dipentaerythritol pentaacrylate, sorbitol pentaacrylate and mixtures thereof.

Examples of hexafunctional (meth)acrylates are dipentaerythritol hexaacrylate, EBECRYL^{®} 1290, which is a hexafunctional aliphatic urethane hexaacrylate and mixtures thereof.

More preferably the reactive diluent (B) is selected from divinyladipate, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

### Oligomer (C)

Radically curable oligomers as used herein refers to relatively high molecular weight polymeric compounds having a weight average molecular weight (MW) higher than about 800 g/mol. The weight average molecular weights described herein are determined by GPC (gel permeation chromatography).

The radically curable oligomers (C) are preferably (meth)acrylate oligomers which may be branched or essentially linear, and the (meth)acrylate functional group or groups, respectively, can be terminal groups and/or pendant side groups bonded to the oligomer backbone. The term "(meth)acrylate" in the context of the present invention refers to the acrylate as well as the corresponding methacrylate. Preferably, the radically curable oligomers are (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers and epoxy (meth)acrylate oligomers. The functionality of the oligomer is not limited but is preferably not greater than 3.

The oligomer (C) is preferably selected from (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers, polyester (meth)acrylate oligomers, polyether based (meth)acrylate oligomers, and epoxy (meth)acrylate oligomers and mixtures thereof.

Suitable examples of urethane (meth)acrylate oligomers include aliphatic urethane (meth)acrylate oligomers, in particular diacrylates, triacrylates, tetraacrylates and hexaacrylates, such as those sold by Sartomer under the grade number starting with CN90, CN92, CN93, CN94, CN95, CN96, CN98, CN99 and those sold by Allnex under the designation Ebecryl^{®} 225, 230, 242, 244, 245, 246, 264, 265, 266, 267, 271 , 280/15IB, 284, 286, 294/25HD, 1258, 1291 , 4101 , 4141 , 4201 , 4250, 4220, 4265, 4396, 4397, 4491, 4513, 4666, 4680, 4683, 4738, 4740, 4820, 4858, 4859, 5129, 81 10, 8209, 8254, 8296, 8307, 8402 , 8465 and 8602; and aromatic (meth)acrylate oligomers, in particular diacrylates, triacrylates, tetraacrylates and hexaacrylates, such as those sold by Sartomer under the grade number starting with CN91 (except CN910A70) and grades starting with CN97 and those sold by Allnex under the designations Ebecryl^{®} 204, 205,206, 210, 214, 215, 220, 2221 , 4501 , 6203, 8232 and 8310. The urethane (meth)acrylate oligomers may be based upon polyethers or polyesters, which are reacted with aromatic, aliphatic, or cycloaliphatic diisocyanates and capped with hydroxy acrylates. Particularly suitable aliphatic urethane (meth)acrylate oligomers are sold by Rahn under the designation Genomer^{®} 4316 and particularly suitable aromatic urethane (meth)acrylate oligomers are sold by Allnex under the designation Ebercryl^{®} 2003.

Suitable examples of epoxy (meth)acrylate oligomers include without limitation aliphatic epoxy (meth)acrylate oligomers, in particular monoacrylates, diacrylates and triacrylates, and aromatic epoxy (meth)acrylate oligomers, in particular bisphenol-A (meth)acrylate oligomers, such as those sold by Sartomer under the grade number starting with 104, 109.1XX as well as CN2003EU, UVE150/80 and UVE151 M; such as those sold by Allnex under the designation Ebecryl^{®} 600, 604, 605, 609, 641 , 646, 648, 812, 1606, 1608, 3105, 3300, 3203, 3416, 3420, 3608, 3639, 3700, 3701 , 3702, 3703, 3708, 3730, 3740, 5848, 6040.

In a preferred embodiment of the present invention the oligomer (C) is an urethane (meth)acrylate (C) which is obtainable by reaction of the following components:
(a) at least one isocyanate having two isocyanate groups,
(b) at least one polyalkylene oxide polyether having at least 2 hydroxyl groups,
(c) at least one hydroxy-functional (meth)acrylate having one hydroxyl group and one (meth)acrylate group,
(d) at least one compound having at least one isocyanate reactive group and at least one acid function,
(e) at least one basic compound which is present for neutralization or partial neutralization of the acid groups of component (d),
(f) optionally at least one monoalcohol having one hydroxy function.

The production of the urethane (meth)acrylate (C) can be done in the presence of at least one reactive diluent.

Preferably, the isocyanate component (a) is added to a mixture of components (b), (c) and (d).

### Component (a)

Aromatic diisocyanates are preferred and include naphthylene 1.5- diisocyanate (NDI), tolylene 2,4- and/or 2,6-diisocyanate (TDI), diphenylmethane 2,2'-, 2,4'- and/or 4,4'-diisocyanate (MDI), 3,3'-dimethyl-4,4'-diisocyanato-diphenyl (TODI), p-phenylene diisocyanate (PDI), diphenylethan-4,4'-diisoyanate (EDI), diphenylmethandiisocyanate, 3,3'-dimethyl-diphenyl-diisocyanate, 1,2-diphenylethandiisocyanate and/or phenylene diisocyanat.

4,4'-, 2,4'- and/or 2,2'-methylenedicyclohexyl diisocyanate (H12MDI), isophorone diisocyanates (IPDI), and tolylene 2,4- and/or 2,6-diisocyanate (TDI) are preferred. TDI is most preferred.

### Component (b)

Preferred components (b) are polyalkylene ether with 2 hydroxy groups, which are essentially, preferably exclusively formed from ethylene oxide and/or propylene oxide. Such compounds are often referred to as polyethylene/propylene glycols or polyalkylene glycols.

The structure of the polyalkylene glycols is generally as follows HO-[-Xᵢ-]ₙ₄-H, wherein Xᵢ for each i = 1 to n4 independently of each other is selected from -CH₂-CH₂-O-, -CH₂-CH(CH₃)-O-and-CH(CH₃)-CH₂-O-, especially -CH₂-CH₂-O- and n4 is an integer from 5 to 60 can, preferably 10 to 45 and more preferably 7 to 50.

The number average molecular weight Mn may range preferably from 500 and 2000 g/mol. The OH numbers (53240 DIN, potentiometric) are preferably in a range of about 20 to 300 mg KOH/g of polymer.

### Component (c)

The hydroxyalkylacrylate, or hydroxyalkylmethacrylate (A1) is preferably a compound of formula 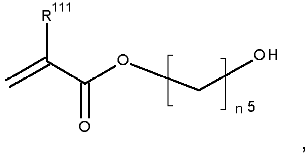 wherein R¹¹¹ is a hydrogen atom, or a methyl group, and n5 is 2 to 6, especially 2 to 4. Examples of (A1) include 2-hydroxyethyl acrylate, 2-hydroxyethyl methacrylate, 2- or 3-hydroxypropyl acrylate, 2- or 3-hydroxypropyl methacrylate, 4-hydroxybutyl methacrylate and 4-hydroxybutyl acrylate. 2-Hydroxyethyl acrylate is most preferred.

### Component (d)

The component (d) comprises at least one, e.g. 1 to 3, more preferably 2 to 3 and most preferably exactly 2 isocyanate-reactive groups and at least one, preferably one, or two acid function.

The acid groups are preferably carboxylic acid groups.

The isocyanate-reactive groups are selected from hydroxyl, mercapto, primary and/or secondary amino groups. Hydroxy groups are preferred.

As compounds (d) mercaptoacetic acid (thioglycolic acid), mercaptopropionic acid, mercaptosuccinic acid, hydroxyacetic acid, hydroxypropionic acid (lactic acid), 2-hydroxysuccinic acid, hydroxypivalic acid, dimethylolpropionic acid, dimethylolbutyric acid, hydroxydecanoic acid, hydroxydodecanoic acid, 12-hydroxystearic acid, glycine (aminoacetic acid),
Dimethylolbutyric acid is preferred and dimethylolpropionic acid is especially preferred.

### Component (e)

At least one, preferably one basic compound is present for neutralization or partial neutralization of the acid groups of component (d).

Examples of basic compounds (e) are inorganic and organic bases such as alkali and alkaline earth metal hydroxides, oxides, carbonates, bicarbonates and ammonia or tert-amines. Preferably the neutralization or partial neutralization is done with sodium hydroxide or potassium hydroxide or tert-amines, such as triethylamine, tri-n-butylamine or ethyl diisopropylamine. The amount of introduced chemically bonded acid groups and the degree of neutralization of the acid groups (which is usually 40 to 100% of the equivalent basis) should preferably be sufficient to ensure the dispersion of the polyurethane in an aqueous medium, which is known in the art.

### Component (f)

The component (f) is a monoalcohol having exactly one hydroxy function and comprising no further functional group.

Examples of the optional component (f) are methanol, ethanol, n-propanol, isopropanol and n-butanol.

The function of the compounds (f) is, in the preparation of the urethane (meth) acrylates (C) to saturate any remaining, unreacted isocyanate groups.

The preparation of the urethane (meth)acrylate (C) can be done in the presence of a reactive diluent.

Preferred compounds reactive diluents have one to four, preferably one two to four, more preferably two (meth)acrylate groups.

Particularly preferred reactive diluents have a boiling point higher than 200 °C at atmospheric pressure. Examples are the reactive diluents comprising 1 to 4 (meth)acrylate groups (B) described above. The same preferences apply as with respect to the reactive diluent (B). In case the preparation of the urethane (meth)acrylate (C) is done in the presence of a reactive diluent (B), the obtained urethane (meth)acrylate (C) already contains reactive diluent (B), which is preferably selected from dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate and cyclohexanedimethanol diacrylate. Dipropylene glycol diacrylate is most preferred.

### D) Photoinitiator

Examples of photoinitiators are known to the person skilled in the art and for example published by Kurt Dietliker in "A compilation of photoinitiators commercially available for UV today", Sita Technology Textbook, Edinburgh, London, 2002 and include aminoketones (e.g. alpha-aminoketones), hydroxyketones (e.g. alpha-hydroxyketones), alkoxyketones (e.g. alpha-alkoxyketones), acetophenones, benzophenones, ketosulfones, benzyl ketals, benzoin ethers, phosphine oxides, phenylglyoxylates, and thioxanthones.

A suitable example of ketosulfone includes 1-[4-(4- benzoylphenylsulfanyl)phenyl]-2-methyl-2-(4-methylphenylsulfonyl)propan-1 -one.

A suitable example of benzyl ketals includes 2,2-dimethoxy-2-phenylacetophenone.

Suitable examples of benzoin ethers include without limitation 2-ethoxy-1 ,2-diphenylethanone; 2-isopropoxy-1,2-diphenylethanone; 2-isobutoxy-1,2- diphenylethanone (CAS no. 22499-12-3); 2-butoxy-1,2-diphenylethanone; 2,2- dimethoxy-1 ,2-diphenylethanone; and 2,2-diethoxyacetophenone.

Examples of suitable acylphosphine oxide compounds are of the formula XII 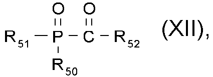 wherein
R₅₀ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄;
or R₅₀ is unsubstituted C₁-C₂₀alkyl or is C₁-C₂₀alkyl which is substituted by one or more halogen, C₁-C₁₂alkoxy, C₁-C₁₂alkylthio, NR₅₃R₅₄ or by -(CO)-O-C₁-C₂₄alkyl;
R₅₁ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄; or R₅₁ is -(CO)R'₅₂; or R_{S1} is C₁-C₁₂alkyl which is unsubstituted or substituted by one or more halogen, C₁-C₁₂alkoxy, C₁-C₁₂alkylthio, or by NR₅₃R₅₄;
R₅₂ and R'₅₂ independently of each other are unsubstituted cyclohexyl, cyclopentyl, phenyl, naphthyl or biphenylyl, or are cyclohexyl, cyclopentyl, phenyl, naphthyl or biphenylyl substituted by one or more halogen, C₁-C₄alkyl or C₁-C₄alkoxy; or R₅₂ is a 5- or 6-membered heterocyclic ring comprising an S atom or N atom;
R₅₃ and R₅₄ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₃ and R₅₄ independently of one another are C₂-C₁₂-alkenyl, cyclopentyl, cyclohexyl, benzyl or phenyl;
Specific examples are bis(2,4,6-trimethylbenzoyl)-phenylphosphine oxide; 2,4,6-trimethylbenzoyl-diphenyl-phosphine oxide; ethyl (2,4,6 trimethylbenzoyl phenyl) phosphinic acid ester; (2,4,6-trimethylbenzoyl)-2,4-dipentoxyphenylphosphine oxide, bis(2,6-dimethoxybenzoyl)-2,4,4-trimethylpentylphosphine oxide.

Interesting further are mixtures of the compounds of the formula XII with compounds of the formula XI as well as mixtures of different compounds of the formula XII.

Examples are mixtures of bis(2,6-dimethoxybenzoyl)-2,4,4-trimethylpentylphosphine oxide with 1-hydroxy-cyclohexyl-phenyl-ketone, of bis(2,4,6-trimethylbenzoyl)-phenylphosphine oxide with 2-hydroxy-2-methyl-1-phenyl-propan-1-one, of bis(2,4,6-trimethylbenzoyl)-phenylphosphine oxide with ethyl (2,4,6 trimethylbenzoyl phenyl) phosphinic acid ester, etc.

Examples of suitable benzophenone compounds are compounds of the formula X: 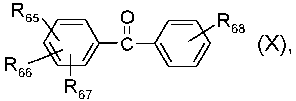 wherein
R₆₅, R₆₆ and R₆₇ independently of one another are hydrogen, C₁-C₄alkyl, C₁-C₄-halogenalkyl, C₁-C₄alkoxy, Cl or N(C₁-C₄alkyl)₂;
R₆₈ is hydrogen, C₁-C₄alkyl, C₁-C₄halogenalkyl, phenyl, N(C₁-C₄alkyl)₂, COOCH₃, 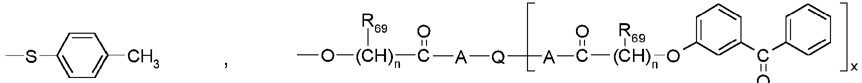 or 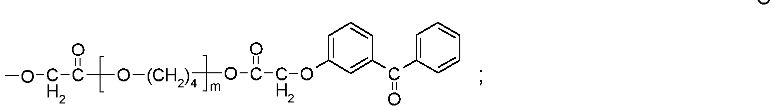
   Q is a residue of a polyhydroxy compound having 2 to 6 hydroxy groups;
   x is a number greater than 1 but no greater than the number of available hydroxyl groups in Q;
   A is -[O(CH₂)_{b}CO]_{y}- or -[O(CH₂)_{b}CO]_{(y-1)}-[O(CHR₇₁CHR₇₀)ₐ]_{y}- ;
   R₆₉ is hydrogen, methyl or ethyl; and if N is greater than 1 the radicals R₆₉ may be the same as or different from each other;
   a is a number from 1 to 2;
   b is a number from 4 to 5;
   y is a number from 1 to 10;
   n is ; and
   m is an integer 2-10.

Specific examples are benzophenone, a mixture of 2,4,6-trimethylbenzophenone and 4-methylbenzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)benzophenone, 3,3'-dimethyl-4-methoxybenzophenone, methyl-2-benzoylbenzoate, 4-(2-hydroxyethylthio)benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)benzophenone, 4-benzoyl-N,N-dimethyl-N-[2-(1-oxo-2-propenyl)oxy]ethylbenzenemethanaminium chloride; [4-(2-hydroxy-ethylsulfanyl)-phenyl]-(4-isopropylphenyl)-methanone; biphenyl-[4-(2-hydroxy-ethylsulfanyl)-phenyl]-methanone; biphenyl-4-yl-phenyl-methanone; biphenyl-4-yl-p-tolyl-methanone; biphenyl-4-yl-m-tolyl-methanone; [4-(2-hydroxy-ethylsulfanyl)-phenyl]-p-tolyl-methanone; [4-(2-hydroxy-ethylsulfanyl)-phenyl]-(4-isopropyl-phenyl)-methanone; [4-(2-hydroxy-ethylsulfanyl)-phenyl]-(4-methoxy-phenyl)-methanone; 1-(4-benzoyl-phenoxy)-propan-2-one; [4-(2-hydroxy-ethylsulfanyl)-phenyl]-(4-phenoxy-phenyl)-methanone; 3-(4-benzoyl-phenyl)-2-dimethylamino-2-methyl-1-phenyl-propan-1-one; (4-chloro-phenyl)-(4-octylsulfanyl-phenyl)-methanone; (4-chloro-phenyl)-(4-dodecylsulfanyl-phenyl)-methanone; (4-bromo-phenyl)-(4-octylsulfanyl-phenyl)-methanone; (4-dodecylsulfanyl-phenyl)-(4-methoxy-phenyl)-methanone; (4-benzoyl-phenoxy)-acetic acid methyl ester; biphenyl-[4-(2-hydroxy-ethylsulfanyl)-phenyl]-methanone; 1-[4-(4-benzoylphenylsulfanyl)phenyl]-2-methyl-2-(4-methylphenylsulfonyl)propan-1-one.

Examples of suitable alpha-hydroxy ketone, alpha-alkoxyketone or alpha-aminoketone compounds are of the formula (XI) 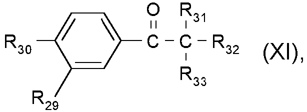 wherein
R₂₉ is hydrogen or C₁-C₁₈alkoxy;
R₃₀ is hydrogen, C₁-C₁₈alkyl, C₁-C₁₂hydroxyalkyl ,C₁-C₁₈alkoxy, OCH₂CH₂-OR₃₄, morpholino, S-C₁-C₁₈alkyl, a group -HC=CH₂, -C(CH₃)=CH₂ , 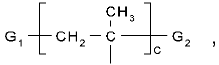 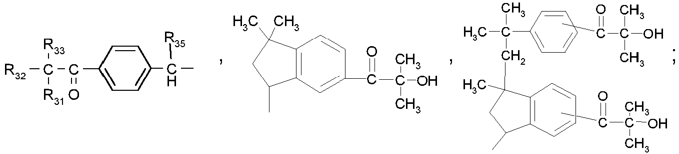 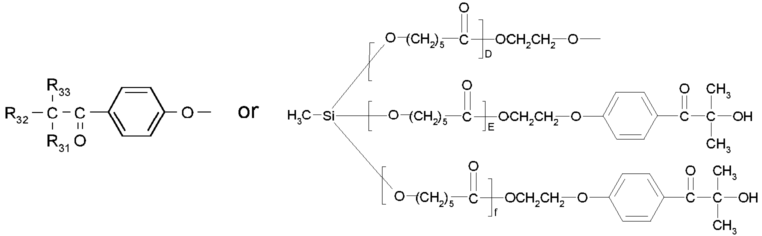
   d, e and f are 1-3;
   c is 2-10;
   G₁ and G₂ independently of one another are end groups of the polymeric structure, preferably hydrogen or methyl;
   R₃₄ is hydrogen, 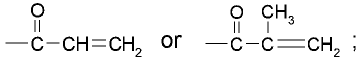
   R₃₁ is hydroxy, C₁-C₁₆alkoxy, morpholino, dimethylamino or -O(CH₂CH₂O)_{g}-C₁-C₁₆alkyl;
   g is 1-20;
   R₃₂ and R₃₃ independently of one another are hydrogen, C₁-C₆alkyl, C₁-C₁₆alkoxy or -O(CH₂CH₂O)_{g}-C₁-C₁₆alkyl; or are unsubstituted phenyl or benzyl; or phenyl or benzyl substituted by C₁-C₁₂-alkyl; or R₃₂ and R₃₃ together with the carbon atom to which they are attached form a cyclohexyl ring;
   R₃₅ is hydrogen, OR₃₆ or NR₃₇R₃₈;
   R₃₆ is hydrogen, C₁-C₁₂alkyl which optionally is interrupted by one or more non-consecutive O-atoms and which uninterrupted or interrupted C₁-C₁₂alkyl optionally is substituted by one or more OH,
   **or** R₃₆ **is** 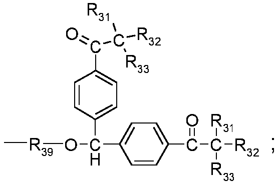
   R₃₇ and R₃₈ independently of each other are hydrogen or C₁-C₁₂alkyl which is unsubstituted or is substituted by one or more OH;
   R₃₉ is C₁-C₁₂alkylene which optionally is interrupted by one or more non-consecutive O, - (CO)-NH-C₁-C₁₂alkylene-NH-(CO)- or 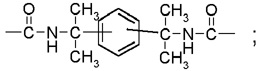
   with the proviso that R₃₁, R₃₂ and R₃₃ not all together are C₁-C₁₆alkoxy or -O(CH₂CH₂O)_{g}-C₁-C₁₆alkyl.

Specific examples are 1-hydroxy-cyclohexyl-phenyl-ketone (optionally in admixture with benzophenone), 2-methyl-1[4-(methylthio)phenyl]-2-morpholinopropan-1-one, 2-benzyl-2-dimethylamino-1-(4-morpholinophenyl)-butan-1-one, 2-dimethylamino-2-(4-methyl-benzyl)-1-(4-morpholin-4-yl-phenyl)-butan-1-one, (3,4-dimethoxy-benzoyl)-1-benzyl-1-dimethylamino propane, 1-[4-(2-hydroxyethoxy)-phenyl]-2-hydroxy-2-methyl-1-propan-1-one, 2,2-dimethoxy-1,2-diphenylethan-1-one, 2-hydroxy-2-methyl-1-phenyl-propan-1-one, 2-hydroxy-1-{4-[4-(2-hydroxy-2-methyl-propionyl)-benzyl]-phenyl}-2-methyl-propan-1-one, 2-hydroxy-1-{4-[4-(2-hydroxy-2-methyl-propionyl)-phenoxy]-phenyl}-2-methyl-propan-1-one, 2-hydroxy-1-{1-[4-(2-hydroxy-2-methyl-propionyl)-phenyl]-1,3,3-trimethyl-indan-5-yl}-2-methyl-propan-1-one.

Examples of suitable phenylglyoxylate compounds are of the formula XIII 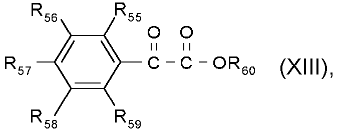 wherein
R₆₀ is hydrogen, C₁-C₁₂alkyl or 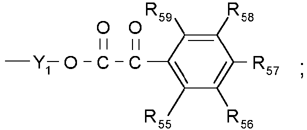
R₅₅, R₅₆, R₅₇, R₅₈ and R₅₉ independently of one another are hydrogen, unsubstituted C₁-C₁₂alkyl or C₁-C₁₂alkyl substituted by one or more OH, C₁-C₄alkoxy, phenyl, naphthyl, halogen or by CN; wherein the alkyl chain optionally is interrupted by one or more oxygen atoms; or R₅₅, R₅₆, R₅₇, R₅₈ and R₅₉ independently of one another are C₁-C₄alkoxy, C₁-C₄alkythio or NR₅₂R₅₃;
R₅₂ and R₅₃ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₂ and R₅₃ independently of one another are C₂-C₁₂-alkenyl, cyclopentyl, cyclohexyl, benzyl or phenyl; and
Y₁ is C₁-C₁₂alkylene optionally interrupted by one or more oxygen atoms.

Specific examples of the compounds of the formula XIII are oxo-phenyl-acetic acid 2-[2-(2-oxo-2-phenyl-acetoxy)-ethoxy]-ethyl ester, methyl α-oxo benzeneacetate. Examples of suitable oxime ester compounds are of the formula XIV 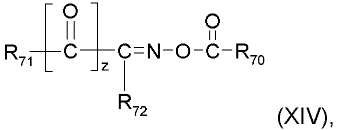
wherein z is 0 or 1;
R₇₀ is hydrogen, C₃-C₈cycloalkyl; C₁-C₁₂alkyl which is unsubstituted or substituted by one or more halogen, phenyl or by CN; or R₇₀ is C₂-C₅alkenyl; phenyl which is unsubstituted or substituted by one or more C₁-C₆alkyl, halogen, CN, OR₇₃, SR₇₄ or by NR₇₅R₇₆; or R₇₀ is C₁-C₈alkoxy, benzyloxy; or phenoxy which is unsubstituted or substituted by one or more C₁-C₆alkyl or by halogen;
R₇₁ is phenyl, naphthyl, benzoyl or naphthoyl, each of which is substituted by one or more halogen, C₁-C₁₂alkyl, C₃-C₈cycloalkyl, benzyl, phenoxycarbonyl, C₂-C₁₂alkoxycarbonyl, OR₇₃, SR₇₄, SOR₇₄, SO₂R₇₄ or by NR₇₅R₇₆, wherein the substituents OR₇₃, SR₇₄ and NR₇₅R₇₆ optionally form 5- or 6-membered rings *via* the radicals R₇₃, R₇₄, R₇₅ and/or R₇₆ with further substituents on the phenyl or naphthyl ring; or each of which is substituted by phenyl or by phenyl which is substituted by one or more OR₇₃, SR₇₄ or by NR₇₅R₆₆;
or R₇₁ is thioxanthyl, or 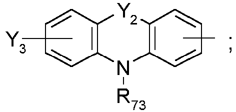
R₇₂ is hydrogen; unsubstituted C₁-C₂₀alkyl or C₁-C₂₀alkyl which is substituted by one or more halogen, OR₇₃, SR₇₄, C₃-C₈cycloalkyl or by phenyl; or is C₃-C₈cycloalkyl; or is phenyl which is unsubstituted or substituted by one or more C₁-C₆alkyl, phenyl, halogen, OR₇₃, SR₇₄ or by NR₇₅R₇₆; or is C₂-C₂₀alkanoyl or benzoyl which is unsubstituted or substituted by one or more C₁-C₆alkyl, phenyl, OR₇₃, SR₇₄ or by NR₇₅R₇₆; or is C₂-C₁₂alkoxycarbonyl, phenoxycarbonyl, CN, CONR₇₅R₇₆, NO₂, C₁-C₄haloalkyl, S(O)_{y}-C₁-C₆alkyl, or S(O)_{y}-phenyl,
y is 1 or 2;
Y₂ is a direct bondor no bond;
Y₃ is NO₂ or 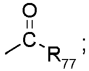
R₇₃ and R₇₄ independently of one another are hydrogen, C₁-C₂₀alkyl, C₂-C₁₂alkenyl, C₃-C₈cycloalkyl, C₃-C₈cycloalkyl which is interrupted by one or more, preferably 2, O, phenyl-C₁-C₃alkyl; or are C₁-C₈alkyl which is substituted by OH, SH, CN, C₁-C₈alkoxy, C₁-C₈alkanoyl, C₃-C₈cycloalkyl, by C₃-C₈cycloalkyl which is interrupted by one or more O, or which C₁-C₈alkyl is substituted by benzoyl which is unsubstituted or substituted by one or more C₁-C₆alkyl, halogen, OH, C₁-C₄alkoxy or by C₁-C₄alkylsulfanyl; or are phenyl or naphthyl, each of which is unsubstituted or substituted by halogen, C₁-C₁₂alkyl, C₁-C₁₂alkoxy, phenyl-C₁-C₃alkyloxy, phenoxy, C₁-C₁₂alkylsulfanyl, phenylsulfanyl, N(C₁-C₁₂alkyl)₂, diphenylamino or by 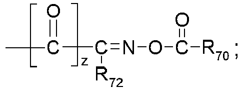
R₇₅ and R₇₆ independently of each other are hydrogen, C₁-C₂ₒalkyl, C₂-C₄hydroxyalkyl, C₂-C₁₀alkoxyalkyl, C₂-C₅alkenyl, C₃-C₈cycloalkyl, phenyl-C₁-C₃alkyl, C₁-C₈alkanoyl, C₃-C₁₂alkenoyl, benzoyl; or are phenyl or naphthyl, each of which is unsubstituted or substituted by C₁-C₁₂alkyl, benzoyl or by C₁-C₁₂alkoxy; or R₇₅ and R₇₆ together are C₂-C₆alkylene optionally interrupted by O or NR₇₃ and optionally are substituted by hydroxyl, C₁-C₄alkoxy, C₂-C₄alkanoyloxy or by benzoyloxy;
R₇₇ is C₁-C₁₂alkyl, thienyl or phenyl which is unsubstituted or substituted by C₁-C₁₂alkyl, OR₇₃, morpholino or by N-carbazolyl.

Specific examples are 1,2-octanedione 1-[4-(phenylthio)phenyl]-2-(O-benzoyloxime), ethanone 1-[9-ethyl-6-(2-methylbenzoyl)-9H-carbazol-3-yl]-1-(O-acetyloxime), 9H-thioxanthene-2-carboxaldehyde 9-oxo-2-(O-acetyloxime), ethanone 1-[9-ethyl-6-(4morpholinobenzoyl)-9H-carbazol-3-yl]-1-(O-acetyloxime), ethanone 1-[9-ethyl-6-(2-methyl-4-(2-(1,3-dioxo-2-dimethyl-cyclopent-5-yl)ethoxy)-benzoyl)-9H-carbazol-3-yl]-1-(O-acetyloxime) (Adeka N-1919), ethanone 1-[9-ethyl-6-nitro-9H-carbazol-3-yl]-1-[2-methyl-4-(1-methyl-2-methoxy)ethoxy)phenyl]-1-(O-acetyloxime) (Adeka NCI831), etc.

In certain cases it may be of advantage to use mixtures of two or more photoinitiators.

In a particularly preferred embodiment the compositions of the present invention comprise at least one radical photoinitiator, which can be activated by irradiation with UV light in the range of 300 to 400 nm, especially 310 to 340 nm.

The photonitiator (D) is preferably a compound of the formula 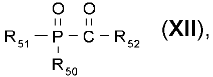 wherein
R₅₀ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄;
or R₅₀ is unsubstituted C₁-C₂₀alkyl or is C₁-C₂₀alkyl which is substituted by one or more halogen, C₁-C₁₂alkoxy, C₁-C₁₂alkylthio, NR₅₃R₅₄ or by -(CO)-O-C₁-C₂₄alkyl;
R₅₁ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄; or R₅₁ is -(CO)R'₅₂; or R₅₁ is C₁-C₁₂alkyl which is unsubstituted or substituted by one or more halogen, C₁-C₁₂alkoxy, C₁-C₁₂alkylthio, or by NR₅₃R₅₄;
R₅₂ and R'₅₂ independently of each other are unsubstituted cyclohexyl, cyclopentyl, phenyl, naphthyl or biphenylyl, or are cyclohexyl, cyclopentyl, phenyl, naphthyl or biphenylyl substituted by one or more halogen, C₁-C₄alkyl or C₁-C₄alkoxy; or R₅₂ is a 5- or 6-membered heterocyclic ring comprising an S atom or N atom;
R₅₃ and R₅₄ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₃ and R₅₄ independently of one another are C₂-C₁₂-alkenyl, cyclopentyl, cyclohexyl, benzyl or phenyl, or the photoinitiator (C) is a compound of the formula 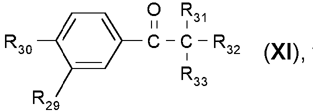 wherein
   R₂₉ is hydrogen or C₁-C₁₈alkoxy;
   R₃₀ is hydrogen, C₁-C₁₈alkyl, C₁-C₁₂hydroxyalkyl ,C₁-C₁₈alkoxy, OCH₂CH₂-OR₃₄, morpholino, S-C₁-C₁₈alkyl, a group -HC=CH₂, -C(CH₃)=CH₂ , 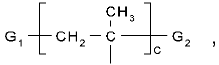 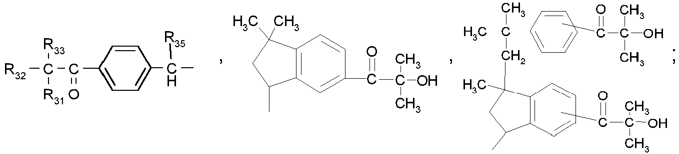 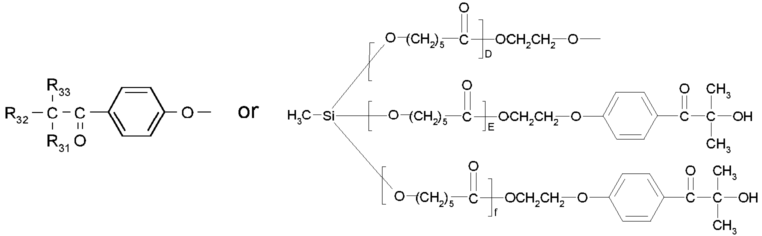
      D, E and f are 1-3;
      c is 2-10;
      G₁ and G₂ independently of one another are end groups of the polymeric structure, preferably hydrogen or methyl;
      R₃₄ is hydrogen, 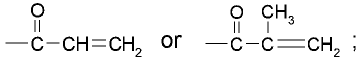
      R₃₁ is hydroxy, C₁-C₁₆alkoxy, morpholino, dimethylamino or -O(CH₂CH₂O)_{g}-C₁-C₁₆alkyl;
      g is 1-20;
      R₃₂ and R₃₃ independently of one another are hydrogen, C₁-C₆alkyl, C₁-C₁₆alkoxy
      or -O(CH₂CH₂O)_{g}-C₁-C₁₆alkyl; or are unsubstituted phenyl or benzyl; or phenyl or benzyl substituted by C₁-C₁₂-alkyl; or R₃₂ and R₃₃ together with the carbon atom to which they are attached form a cyclohexyl ring;
      R₃₅ is hydrogen, OR₃₆ or NR₃₇R₃₈;
      R₃₆ is hydrogen, C₁-C₁₂alkyl which optionally is interrupted by one or more non-consecutive O-atoms and which uninterrupted or interrupted C₁-C₁₂alkyl optionally is substituted by one or more OH,
      **or** R₃₆ **is** 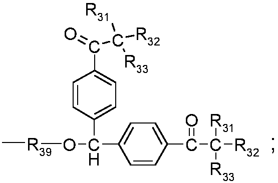
      R₃₇ and R₃₈ independently of each other are hydrogen or C₁-C₁₂alkyl which is unsubstituted or is substituted by one or more OH;
      R₃₉ is C₁-C₁₂alkylene which optionally is interrupted by one or more non-consecutive O, - (CO)-NH-C₁-C₁₂alkylene-NH-(CO)- or 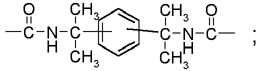
      with the proviso that R₃₁, R₃₂ and R₃₃ not all together are C₁-C₁₆alkoxy or -O(CH₂CH₂O)_{g}-C₁-C₁₆alkyl, or the photoinitiator is a mixture of different compounds of the formula (XII), or the photoinitiator is a mixture of compounds of the formula (XII) and (XI).

### Surfactant (E)

The block copolymer which comprises at least a block A and a block B, wherein
a) the block A comprises
   a1) monomer units (A1) derived from a compound selected from alkyl (meth)acrylates, alkyl (meth)acrylamides, or any mixture thereof, and
   a2) monomer units (A2) derived from a hydroxy group, or ether group containing alkyl (meth)acrylate;
b) the block B comprises monomer units (B) derived from a compound selected from a fluorinated (meth)acrylic esters of formula

   H₂C=CR⁴⁶(C(O)OR_{F-1}) (XX),

   wherein
   R⁴⁶ is H, or a methyl group; and
   R_{F-1} is an organic residue containing a perfluorinated alkyl group.

Preferably, block A comprises monomer units (A1) derived from a compound selected from C₁₋C₁₈alkyl(meth)acrylates , more preferably C₁₋C₁₀alkyl(meth)acrylates (H₂C=CR^{47'}(C(0)OR⁴⁹; wherein R^{47'} is H, or a methyl group; and R⁴⁹ is a C₁₋C₁₈alkyl group, especially a C₁₋C₁₀alkyl group), such as, for example, ethyl(meth)acrylate, n-propyl(meth)acrylate, n-butyl(meth)acrylate, isobutyl(meth)acrylate, t-butyl(meth)acrylate, 2-ethylhexyl(meth)acrylate and isodecyl(meth)acrylate, especially n-propylacrylate, n-butylacrylate, isobutylacrylate and 2-ethylhexylacrylate.

In addition, block A comprises monomer units (A2) derived from a compound selected from a hydroxy group, or ether group containing alkyl (meth)acrylate of formula

H₂C=CR⁴⁷(C(O)OR⁴⁸) (XXIII),

wherein
R⁴⁷ is H, or a methyl group; and
R⁴⁸ is a hydroxyC₁₋C₈alkyl group, especially a hydroxyC₁₋C₄alkyl group, or a C₁₋C₃alkoxyC₁₋C₅alkyl group.

Preferably, block A comprises monomer units (A2) derived from a compound selected from a hydroxy group, or ether group containing alkyl (meth)acrylate of formula

H₂C=CR⁴⁷(C(O)OR⁴⁸) (XXIII),

wherein R⁴⁷ is H; and R⁴⁸ is a hydroxyC₁₋C₄alkyl group, such as, for example, 2-hydroxyethyl(meth)acrylate, hydroxy-n-propyl(meth)acrylate and hydroxy-n-butyl(meth)acrylate.

Preferably, the block A consists of monomer units derived from a compound selected from monomer units (A1) derived from a compound selected from C₁₋C₁₀alkyl(meth)acrylates and monomer units (A2) derived from a compound selected from a hydroxy group, or ether group containing alkyl (meth)acrylate of formula H₂C=CR⁴⁷(C(O)OR⁴⁸) (XXIII), wherein R⁴⁷ is H; and R⁴⁸ is a hydroxyC₁₋C₄alkyl group.

The block copolymer contains one or more blocks of type "A", which may differ in block length (i.e. different number of monomer units).

In a preferred embodiment, the block A of the block copolymer has an average number of monomer units (A1) and (A2) of from 5 to 1000, more preferably from 10 to 500, even more preferably from 15 to 300, most preferred 20 to 100.

Preferably, R_{F-1} is a group of formula -(X³)ₓ-(CF₂)ₓ₁-CF₃ (XXII), wherein x is 0 or 1; x1 is an integer of 2 to 17, especially 3 to 11, very especially 3 to 7; and X³ is a divalent non-fluorinated C₁₋₄alkylene group, which can be substituted or unsubstituted.

Accordingly, the fluorinated (meth)acrylic ester of formula (XX) is preferably a fluorinated (meth)acrylic ester of formula H₂C=CR⁴⁶(C(O)O(X¹)ₓ-(CF₂)ₓ₁-CF₃) (XXa), wherein x is 0 or 1; x1 is an integer of 2 to 17, especially 3 to 11, very especially 3 to 7; and X³ is a divalent non-fluorinated C₁₋₄alkylene group, which can be substituted or unsubstituted; and R⁴⁶ is H, or a methyl group.

In a preferred embodiment, x is 1 and X³ is -(CH₂)₁.₄-; such as, for example, -CH₂-, -CH₂-CH₂-; -CH₂-CH₂-CH₂-; or -CH₂-CH₂-CH₂-CH₂-.

In a preferred embodiment, the fluorinated (meth)acrylic ester compound of formula (XXa) is selected from H₂C=CR⁴⁶(C(O)O(CH₂)₂-(CF₂)₃-CF₃, H₂C=CR⁴⁶(C(O)O(CH₂)₂-(CF₂)₄-CF₃, H₂C=CR⁴⁶(C(O)O(CH₂)₂-(CF₂)₅-CF₃, H₂C=CR⁴⁶(C(O)O(CH₂)₂-(CF₂)₆-CF₃ and H₂C=CR⁴⁶(C(O)O(CH₂)₂-(CF₂)₇-CF₃, wherein R⁴⁶ is H, or a methyl group; and mixtures thereof.

Alternatively, the block B may contain two, or more different monomer units.

If the block copolymer contains two or more blocks of type "B", they may differ in block length (i.e. different number of monomer units).

Preferably, the block B of the block copolymer has an average number of monomer units which are derived from the fluorinated (meth)acrylic ester of formula (XX) of at least 0.25, more preferably at least 0.5, or at least 1.

In a preferred embodiment, the block B of the block copolymer has an average number of monomer units which are derived from the fluorinated (meth)acrylic ester of formula (XX) of from 0.25 to 40, more preferably 0.5 to 30, even more preferably 1 to 20.

Preferably, the block B of the block copolymer has an average numer of monomer units which are derived from the fluorinated acrylic ester of formula (XX) of from 0.25 to 40, more preferably 0.5 to 30, even more preferably 1 to 20.

Preferably, the block copolymer has a number average molecular weight Mₙ of from 1000 to 100,000 g/mol, more preferably from 2,000 to 50,000 g/mol, even more preferably 3,000 to 25,000 g/mol.

Preferably, the block copolymer comprises the monomer units derived from the fluorinated (meth)acrylic ester of formula (XX) in an amount of from 0.1 wt% to 70 wt%, more preferably from 0.5 wt% to 50 wt%, even more preferably from 1 wt% to 35 wt%.

Preferably, the block copolymer has a fluorine content of from 0.05 wt% to 35 wt%, more preferably from 0.25 wt% to 33 wt%, even more preferably from 0.5 wt% to 31 wt%.

Preferably, the block copolymer has a polydispersity index PDI (i.e. Mw/Mn) of less than 1.90, more preferably of less than 1.60, even more preferably of less than 1.40, or even less than 1.30.

The block copolymer is preferably obtained by a controlled free radical polymerization (sometimes also referred to as "controlled radical polymerization"). Methods of "controlled free radical polymerization" are generally known to the skilled person.

In a preferred embodiment, the controlled free radical polymerization is selected from nitroxide-mediated controlled polymerization (NMP), atom transfer radical polymerization (ATRP), or from reversible addition-fragmentation chain transfer polymerization (RAFT).

These polymerization methods and variants thereof are generally known to the skilled person. The reversible addition-fragmentation chain transfer polymerisation RAFT using chain transfer agents which react by reversible addition- fragmentation chain transfer is described, for example, in WO98/01478, WO99/05099, WO99/31144 and WO2009/103613. RAFT describes a method of polymer synthesis by radical polymerization in the presence of a free radical source and using chain transfer agents which react by reversible addition-fragmentation chain transfer. The chain transfer agent is, for example, 2-phenylprop-2-yl dithiobenzoate (Ph-C(CH₃,CH₃)-S-C(S)-Ph), or benzyldithioacetate (Ph-CH₂-S-C(S)-CH₃) as described in WO98/01478, carbamates such as benzyl 1-pyrrolecarbodithioate, as described in WO99/31144; alkylxanthates, such as ethyl α(O-ethylxanthyl propionate), as described in WO 98/58974.

WO96/30421 discloses a controlled polymerisation process of ethylenically unsaturated polymers, such as styrene or (meth)acrylates, by employing the Atomic Transfer Radical Polymerisation (ATRP) method. This method produces defined oligomeric homopolymers and copolymers, including block copolymers. Initiators are employed, which generate radical atoms, such as •Cl, in the presence of a redox system of transition metals of different oxidation states, e.g. Cu(I) and Cu(II), providing "living" or controlled radical polymerisation.

Details about nitroxide-mediated controlled polymerization are described e.g. in WO2005/059048 and WO2009/103613. The initiator compounds described therein can be used in the present invention as well. More preferably, the controlled radical polymerization is selected from nitroxide mediated controlled polymerization (NMP) and atom transfer radical polymerization (ATRP), even more preferably from NMP.

In a preferred embodiment, the controlled radical polymerization is a nitroxide mediated controlled polymerization, which preferably uses a polymerization regulator system based on polymerization regulator compounds being preferably selected from nitroxylether having the structural element 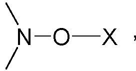 wherein X represents a group having at least one carbon atom and is such that the free radical X• derived from X is capable of initiating polymerization.

The nitroxylether is preferably a compound of formula 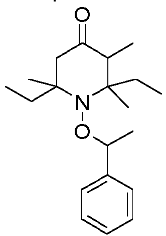 (O1).

The block copolymer can be obtained by a process comprising the steps
**i)** polymerizing in a first step a first monomer (A1) and a second monomer (A2); in the presence of at least one nitroxylether having the structural element 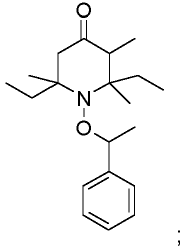 and
ii) a second step, comprising the modification of the polymer or copolymer prepared under i) by chain extension with monomer (B) and residual monomer treatment.

Block copolymers represented by formula 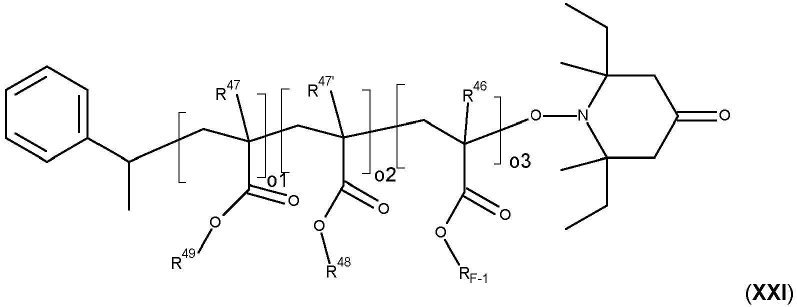 are preferred,
wherein o1 is 30 to 100; o2 is 10 to 40 and o3 is 1 to 15, especially 1 to 10;
R_{F-1} is a group (X³)x-(CF₂)ₓ₁-CF₃, wherein x is 1, x1 is an integer 1 to 7 and X³ is -(CH₂)₁₋₄-;
R⁴⁶ is H, or a methyl group, especially H; R⁴⁷ is H, or a methyl group, especially H; R^{47'} is H, or a methyl group, especially H;
R⁴⁸ is a hydroxyC₁₋C₄alkyl group;
R⁴⁹ is a C₁₋C₁₀alkyl group; and
block copolymers of formula 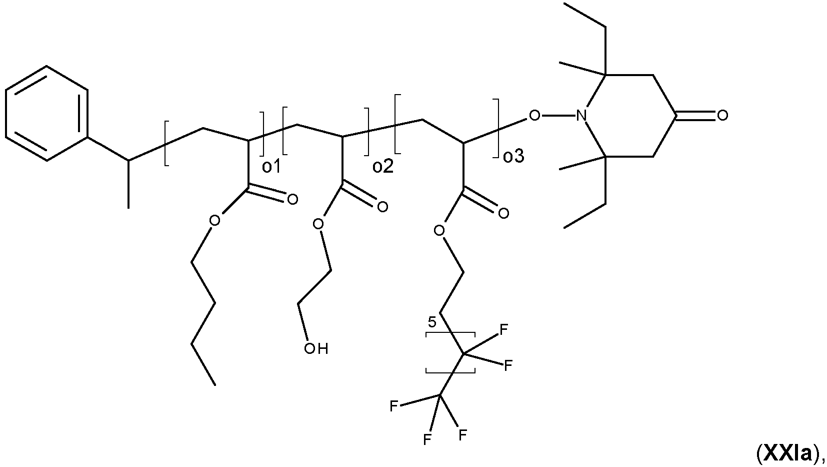 wherein
   o1 is 70 to 80; o2 is 25 to 30 and o3 is 1 to 10, are even more preferred. Most preferred o is o3 is 3 to 10.

### A) Silver Nanoplatelets

In general, the silver nanoplatelets have a number mean diameter in the range of from 15 to 1000 nm, especially 15 nm to 700, very especially 20 to 600 nm. The number mean thickness is preferably in the range of from 2 nm to 40 nm, especially 4 nm to 35, very especially 4 to 30 nm.

The term "silver nanoplatelets" is a term used in the art and as such is understood by the skilled person. In the context of the present invention, silver nanoplatelets are preferably silver nanoplatelets having a number mean diameter of in the range from 15 nm to 700 and a number mean thickness in the range of from 2 nm to 40 nm, especially a number mean diameter in the range of from 20 to 600 nm and a number mean thickness in the range of from 2 nm to 40 nm and very especially a number mean diameter in the range of from 20 nm to 300 nm and a number mean thickness in the range of from 4 to 30 nm.

The diameter is the longer side of the nanoplatelet (width). The thickness is the shorter side of the nanoplatelet (height).

The aspect ratio of the silver nanoplatelets is the ratio of its longest dimension, such as, for example, its diameter to its shortest dimension, such as, for example, its thickness. For example, the aspect ratio of a disk is the ratio of its diameter to its thickness. The mean aspect ratio (defined as the ratio of mean diameter to mean thickness) being larger than 1.5, preferably larger than 1.6 and more preferably larger than 1.7.

The silver nanoplatelets may be in the form of disks, regular hexagons, triangles, especially equilateral triangles, and truncated triangles, especially truncated equilateral triangles, or mixtures thereof. They are preferably in the form of disks, truncated triangles, hexagons, or mixtures thereof.

In the context of the present invention, a "surface modified silver nanoplatelet (nanoparticle)" is a silver nanoplatelet (nanoparticle) having attached to its surface one or more surface stabilizing agents and optionally one, or more stabilizing agents.

Accordingly, surface modified silver nanoplatelets bear one, or more surface stabilizing agents described above, or below and optionally one, or more stabilizing agents described above, or below on their surface.

The mean aspect ratio of the silver nanoplatelets is higher than 1.5.

In a preferred embodiment the present invention relates to compositions comprising silver nanoplatelets, the production of which is described in WO2020/083794.

The diameter of a silver nanoplatelet is the longest dimension of said silver nanoplatelet and corresponds to the maximum dimension of said silver nanoplatelet when oriented parallel to the plane of a transmission electron microscopy image (TEM).

As used herein, the term "number mean diameter of the silver nanoplatelets" refers to the mean diameter determined by transmission electron microscopy (TEM) using Fiji image analysis software based on the measurement of at least 300 randomly selected silver nanoplatelets oriented parallel to the plane of a transmission electron microscopy image (TEM), wherein the diameter of a silver nanoplatelet is the maximum dimension of said silver nanoplatelet oriented parallel to the plane of a transmission electron microscopy image (TEM). TEM analysis was conducted on a dispersion containing nanoplatelets in isopropanol using an EM 910 instrument from ZEISS in bright field mode at an e-beam acceleration voltage of 100kV.

The thickness of a silver nanoplatelet is the shortest dimension of said nanoplatelet and corresponds to the maximum thickness of said silver nanoplatelet. As used herein, the term "number mean thickness of silver nanoplatelets" refers to the mean thickness determined by transmission electron microscopy (TEM) based on the manual measurement of at least 50 randomly selected silver nanoplatelets oriented perpendicular to the plane of the TEM image, wherein the thickness of the silver nanoplatelet is the maximum thickness of said silver nanoplatelet. TEM analysis was conducted on a dispersion containing silver nanoplatelets in isopropanol using an EM 910 instrument from ZEISS in bright field mode at an e-beam acceleration voltage of 100kV.

The wording that the "number mean diameter, or number mean thickness is in the range of from X to Y nm (or is from X to Y nm)" means: X nm ≤ number mean diameter, or number mean thickness ≤ Y nm.

The process described in WO2020/083794 can be used to for the production of
i) compositions comprising silver nanoplatelets, wherein the number mean diameter of the silver nanoplatelets, present in the composition, is in the range of 50 to 150 nm and the number mean thickness of the silver nanoplatelets, present in the composition, is in the range of 5 to 30 nm (a coating, comprising the silver nanoplatelets, shows a turquoise, or blue color in transmission and a yellowish metallic color in reflection); or
ii) compositions comprising silver nanoplatelets, wherein the number mean diameter of the silver nanoplatelets, present in the composition, is in the range of 15 to 35 nm and the number mean thickness of the silver nanoplatelets, present in the composition, is in the range of 5 to 20 nm (a coating, comprising the silver nanoplatelets, shows a brown, or orange color in transmission and a blueish metallic color in reflection); or
iii) compositions comprising silver nanoplatelets, wherein the number mean diameter of the silver nanoplatelets, present in the composition, is in the range of 20 to 70 nm (the standard deviation being less than 50%), the number mean thickness of the silver nanoplatelets, present in the composition, is in the range of 5 to 30 nm (the standard deviation being less than 50%) (a coating, comprising the silver nanoplatelets, shows a magenta color in transmission and a greenish metallic color in reflection).

The number mean diameter of the silver nanoplatelets is preferably in the range of 25 to 65 nm, more preferably 35 to 55 nm. The standard deviation being less than 50%, preferably less than 40%.

The number mean thickness of the silver nanoplatelets is preferably in the range 7 to 25 nm, more preferably 8 to 25 nm. The standard deviation being less than 50%, preferably less than 40%.

The mean aspect ratio (defined as the ratio of mean diameter to mean thickness) being larger than 1.5, preferably larger than 1.6 and more preferably larger than 1.7.

In a more preferred embodiment the mean diameter of the silver nanoplatelets is in the range of 35 to 55 nm with standard deviation being less than 40% and the mean thickness of the silver nanoplatelets is in the range of 8 to 25 nm with standard deviation being less than 40%. The mean aspect ratio of the silver nanoplatelets is higher than 1.7.

The highest wavelength absorption maximum of the population of all silver nanoplatelets in the composition being within the range of 450 to 550 nm, preferably 460 to 540 nm, most preferably 465 to 535 nm (measured in water at ca. 5*10-5 M (mol/l) concentration of silver).

The absorption maximum has a full width at half maximum (FWHM) value in the range of 20 to 180 nm, preferably 30 to 150 nm, more preferably 35 to 130 nm.

In a particularly preferred embodiment the mean diameter of the silver nanoplatelets is in the range of 40 to 50 nm. The standard deviation being less than 30%. The mean thickness of the silver nanoplatelets is in the range of 15 to 22 nm. The standard deviation being less than 30%. The mean aspect ratio of the silver nanoplatelets is higher than 1.7.

In said embodiment the highest wavelength absorption maximum of the population of all silver nanoplatelets in the composition being within the range of 480 to 500 nm (measured in water at ca. 5*10-5 M (mol/l) concentration of silver). The absorption maximum has a full width at half maximum (FWHM) value in the range of 70 to 95 nm.

The molar extinction coefficient of silver nanoplatelets, measured at the highest wavelength absorption maximum of the population of all silver nanoplatelets in the composition, is higher than 4000 L/(cm*mol_{AG}), especially higher than 5000 L/(cm*mol_{Ag}), very especially higher than 6000 L/(cm*mol_{Ag}).

In a preferred embodiment of the present invention the silver nanoplatelets bear one, or more surface stabilizing agents of formula 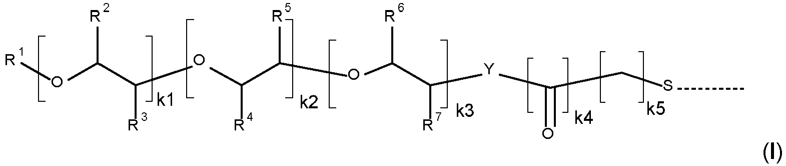 on their
surface, wherein - - - - - - - - - - - indicates the bond to the silver,
R¹ is H, C₁-C₁₈alkyl, phenyl, C₁-C₈alkylphenyl, or CH₂COOH;
R², R³, R⁴, R⁵, R⁶ and R⁷ are independently of each other H, C₁-C₈alkyl, or phenyl;
Y is O, or NR⁸;
R⁸ is H, or C₁-C₈alkyl;
k1 is an integer in the range of from 1 to 500,
k2 and k3 are independently of each other 0, or integers in the range of from 1 to 250;
k4 is 0, or 1,
k5 is an integer in the range of from 1 to 5.
Y is preferably O. k4 is preferably 0.

The surface stabilizing agent of formula (I) has preferably a number average molecular weight of from 1000 to 20000, and more preferably from 1000 to 10000, most preferred from 1000 to 6000. All molecular weights specified in this text have the unit of [g/mol] and refer, unless indicated otherwise, to the number average molecular weight (Mn).

If the compounds comprise, for example, ethylene oxide units (EO) and propylene oxide units (PO), the order of (EO) and (PO) may not be fixed (random copolymers).

Preferably, R' is H, or C₁-C₁₈alkyl; R², R³, R⁴, R⁵, R⁶ and R⁷ are independently of each other H, CH₃, or C₂H₅; k1 is 22 to 450, k2 and k3 are independently of each other 0, or integers in the range of from 1 to 250; k4 is 0, or 1; and k5 is an integer in the range of from 1 to 5.

More preferred, R' is H, or C₁-C₄alkyl; R², R³, R⁴, R⁵, R⁶ and R⁷ are independently of each other H, or CH₃; k1 is 22 to 450; k2 and k3 are independently of each other 0, or integers in the range of from 8 to 200; k4 is 0; k5 is an integer in the range of from 1 to 4.

The most preferred surface stabilizing agent has the formula 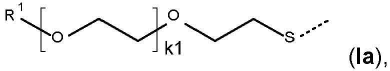 wherein R¹ is H, or a C₁-C₈alkyl group, and
k1 is 22 to 450, especially 22 to 150.
R' is preferably H, or CH₃.

The most preferred surface stabilizing agents are derived from MPEG thiols (poly(ethylene glycol) methyl ether thiols) having an average Mₙ of 2000 to 6000, such as, for example, MPEG 2000 thiol (A-1, average Mₙ 2,000), MPEG 3000 thiol (A-2), MPEG 4000 thiol (A-3) MPEG 5000 thiol (A-4), MPEG 6000 thiol (A-5), PEG thiols (O-(2-mercaptoethyl)-poly(ethylene glycol)) having an average Mₙ of 2000 to 6000, such as, for example, PEG 2000 thiol (A-6, average Mₙ 2,000), PEG 3000 thiol (A-7), PEG 4000 thiol (A-8), PEG 5000 thiol (A-9), PEG 6000 thiol (A-10).

In addition to the surface stabilizing agents the composition may comprise further stabilization agents. Stabilizing agents may include, for example, phosphines; phosphine oxides; alkyl phosphonic acids; oligoamines, such as ethylenediamine, diethylene triamine, triethylene tetramine, spermidine, spermine; compounds of formula **(Ila), (IIb)** and **(IIc)** described below; dendrimers, and salts and combinations thereof.

The stabilizing agent may be a compound of formula R²⁰-X⁴ (Ila), wherein R²⁰ a linear or branched C₁-C₂₅alkyl group, or C₁-C₂₅alkenyl group, which may be substituted by one, or more groups selected from -OH, -SH, -NH₂, or -COOR¹⁹, wherein R¹⁹ is a hydrogen atom, or a C₁-C₂₅alkyl group, and X⁴ is -OH, -SH, -NH₂, or -COOR^{19'}, wherein R^{19'} is a hydrogen atom, a C₁-C₂₅alkyl group, or a C₂-C₂₅alkenyl group, which may be substituted by one, or more groups selected from -OH, -SH, -NH₂, or -COOR¹⁹", wherein R¹⁹" is a hydrogen atom, or a C₁-C₂₅alkyl group.

Examples of compounds of formula (IIa) are 1-methylamine, 1-dodecylamine, 1-hexadecylamine, citric acid, oleic acid, D-cysteine, 1-dodecanethiol, 9-mercapto-1-nonanol, 1-thioglycerol, 11-amino-1-undecanethiol, cysteamine, 3-mercaptopropanoic acid, 8-mercaptooctanoic acid and 1,2-ethanedithiol.

The stabilizing agent may be a compound of formula 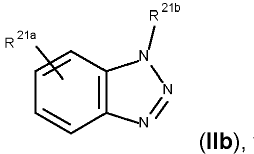 wherein
R^{21a} is a hydrogen atom, a halogen atom, a C₁-C₈alkoxy group, or a C₁-C₈alkyl group,
R^{21b} is a hydrogen atom, or a group of formula -CHR²⁴-N(R²²)(R²³),
R²² and R²³ are independently of each other a C₁-C₈alkyl, a hydroxyC₁-C₈alkyl group, or a group of formula -[(CH₂CH₂)-O]ₙ₁-CH₂CH₂-OH, wherein n1 is 1 to 5, R²⁴ is H or C₁-C₈alkyl.

Examples of compounds of formula **(IIb)** are 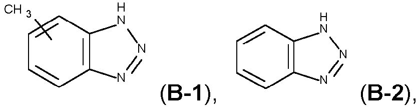 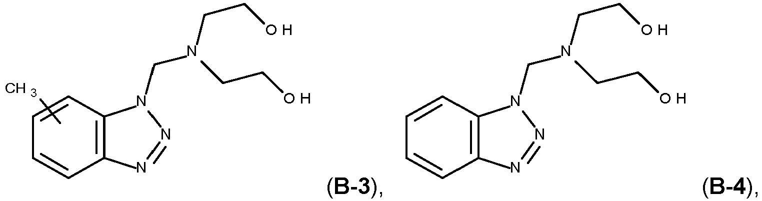 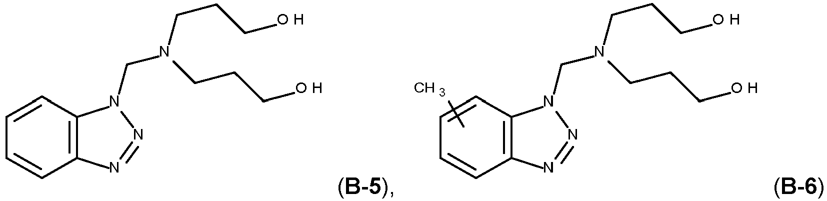 and

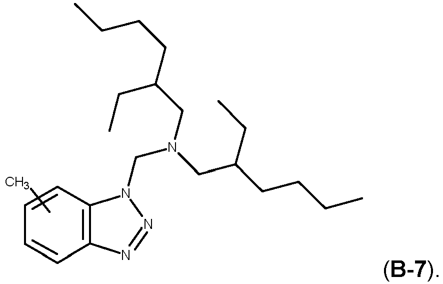

In another preferred embodiment the stabilizing agent is a "polyhydric phenol", which is a compound, containing an optionally substituted benzene ring and at least 2 hydroxy groups attached to it. The term "polyhydric phenol" comprises polyphenols, such as, for example, tannic acid and polycyclic aromatic hydrocarbons which consist of fused benzene rings, wherein at least one benzene ring has at least 2 hydroxy groups attached to it, such as, for example, 1,2-dihydroxynaphthalene. The "polyhydric phenol" may be substituted. Suitable substituents are described below.

The polyhydric phenol is preferably a compound of formula 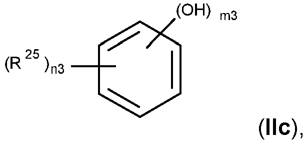
wherein R²⁵ can be the same, or different in each occurrence and is a hydrogen atom, a halogen atom, a C₁₋C₁₈alkyl group, a C₁-C₁₈alkoxy group, or a group -C(=O)-R²⁶,
R²⁶ is a hydrogen atom, a hydroxy group, a C₁₋C₁₈alkyl group, unsubstituted or substituted amino group, unsubstituted or substituted phenyl group, or a C₁-C₁₈alkoxy group, and
n3 is a number of 1 to 4,
m3 is a number of 2 to 4, and
the sum of m3 and n3 is 6.

The polyhydric phenol is more preferably a compound of formula 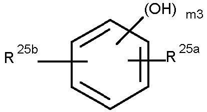 (IIc'), wherein
R^{25a} and R^{25b} are independently of each other a hydrogen atom, a C₁₋C₁₈alkyl group, a C₁-C₁₈alkoxy group, or a group of formula-C(=O)-R²⁶,
R²⁶ is a hydrogen atom, a hydroxy group, a C₁₋C₁₈alkyl group, an unsubstituted or substituted amino group, unsubstituted or substituted phenyl group, or a C₁-C₁₈alkoxy group, and
m3 is a number of 2 to 4, especially 2 to 3. Polyhydric phenols are preferred, which have two hydroxy groups in ortho-position.

Even more preferably, the polyhydric phenol is a compound of formula 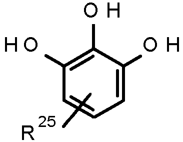 (IIca), wherein R²⁵ is a hydrogen atom, or a group of formula -C(=O)-R²⁶, wherein R²⁶ is a hydrogen atom, a C₁₋C₁₈alkyl group, or a C₁-C₁₈alkoxy group, an unsubstituted or substituted amino group, especially a C₁₋C₁₈alkyl group or C₁-C₈alkoxy group.

Most preferred, the polyhydric phenol is a compound of formula 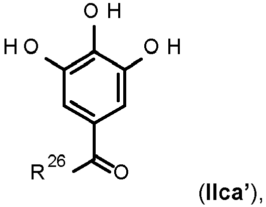 wherein R²⁶ is a hydrogen atom, a C₁₋C₁₈alkyl group, or a C₁-C₁₈alkoxy group, especially a C₁-C₈alkoxy group, such as, for example, 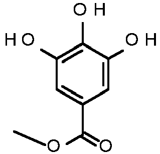 (methyl gallate, C-1), 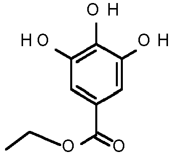 (ethyl gallate, C-2), 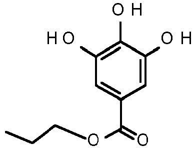 (propyl gallate, C-3), 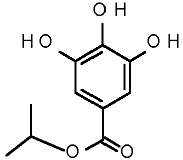 (isopropyl gallate, C-4) 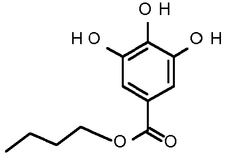 (butyl gallate, C-5), 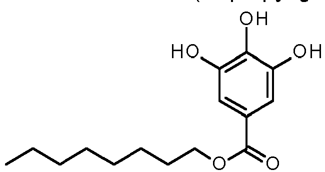 (octyl gallate, C-6) and 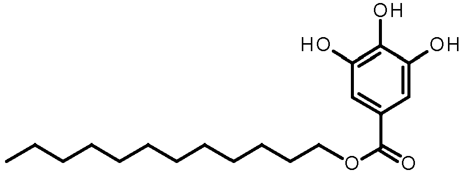 (lauryl gallate, C-7).

In another preferred embodiment of the present invention the polyhydric phenols are compounds of formula 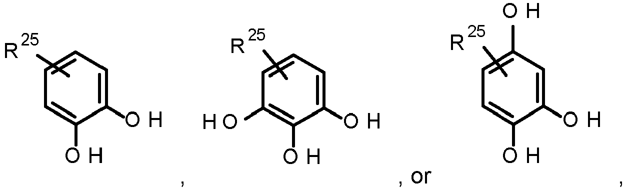 wherein R²⁵ is a hydrogen
atom, a C₁₋C₁₈alkyl group, or a group of formula-C(=O)-R²⁶, wherein R²⁶ is a hydrogen atom, a hydroxy group, a C₁₋C₁₈alkyl group, or a C₁-C₁₈alkoxy group, an unsubstituted or substituted amino group, an unsubstituted or substituted phenyl group, especially a C₁-C₁₈alkyl group or C₁-C₈alkoxy group, such as, for example, 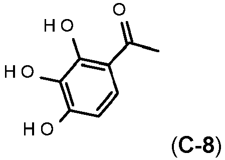 and

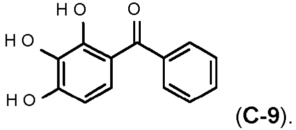

An unsubstituted or substituted amino group is, for example, a group of formula -NR²⁷R²⁸, wherein R²⁷ and R²⁸ are independently of each other a hydrogen atom, a C₁₋C₁₈alkyl group, a phenyl group, preferably a hydrogen atom, or a C₁₋C₁₈alkyl group.

In a particularly preferred embodiment the stabilizing agent is selected from compounds of formula (IIb), (IIc), or mixtures thereof.

The most preferred (surface) stabilizing agents (surface stabilizing agents and stabilizing agents), or mixtures thereof are described in WO2020/083794.

In another particularly preferred embodiment the mean diameter of the silver nanoplatelets is in the range of 40 to 50 nm. The standard deviation being less than 30%. The mean thickness of the silver nanoplatelets is in the range of 15 to 22 nm. The standard deviation being less than 30%. The mean aspect ratio of the silver nanoplatelets is higher than 1.7.

In said embodiment the highest wavelength absorption maximum of the population of all silver nanoplatelets in the composition being within the range of 480 to 500 nm (measured in water at ca. 5*10-5 M (mol/l) concentration of silver). The absorption maximum has a full width at half maximum (FWHM) value in the range of 70 to 95 nm.

In said embodiment the silver nanoplatelets preferably bear a surface stabilizing agent of formula 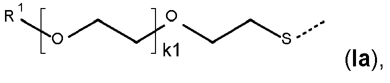 wherein R¹ is H, or a C₁-C₈alkyl group,
especially H, or CH₃, and
k1 is 22 to 450, especially 22 to 150; especially a compound (A-1), (A-2), (A-3), (A-4), (A-5), (A-6), (A-7), (A-8), (A-9), (A-10), or mixtures thereof, very especially a compound (A-4).

In said embodiment the silver nanoplatelets preferably bear a stabilizing agent of formula **(IIb)** and optionally a stabilizing agent of formula (IIc). The stabilizing agent of formula **(IIb)** is especially a compound (B-1), (B-2), (B-3), (B-4), (B-5), (B-6), or (B-7), very especially a compound (B-3).The stabilizing agent of formula **(IIc)** is especially a compound (C-1), (C-2), (C-3), (C-4), (C-5), (C-6), (C-7), (C-8), or (C-9), very especially a compound (C-2).

In another particularly preferred embodiment the mean diameter of the silver nanoplatelets is in the range of 37 to 47 nm. The standard deviation being less than 30% and the mean thickness of the silver nanoplatelets is in the range of 9 to 15 nm. The standard deviation being less than 30%. The mean aspect ratio of the silver nanoplatelets is higher than 1.7.

In said embodiment the highest wavelength absorption maximum of the population of all silver nanoplatelets in the composition being within the range of 510 to 530 nm (measured in water at ca. 5*10-5 M (mol/l) concentration of silver). The absorption maximum has a full width at half maximum (FWHM) value in the range of 70 to 90 nm.

In said embodiment the silver nanoplatelets preferably bear a surface stabilizing agent of formula 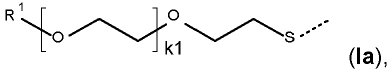 wherein R¹ is H, or a C₁-C₈alkyl group,
especially H, or CH₃, and
k1 is 22 to 450, especially 22 to 150; especially a compound **(A-1), (A-2), (A-3), (A-4), (A-5), (A-6), (A-7), (A-8), (A-9), (A-10),** or mixtures thereof.

In said embodiment the silver nanoplatelets preferably bear a stabilizing agent of formula **(IIb)** and optionally a stabilizing agent of formula (IIc). The stabilizing agent of formula **(IIb)** is especially a compound **(B-1), (B-2), (B-3), (B-4), (B-5), (B-6), or (B-7),** very especially a compound **(B-3).The** stabilizing agent of formula **(IIc)** is especially a compound **(C-1), (C-2), (C-3), (C-4), (C-5), (C-6), (C-7), (C-8), or (C-9),** very especially a compound **(C-2).**

In another preferred embodiment the composition comprises silver nanoplatelets, wherein the number mean diameter of the silver nanoplatelets, present in the composition, is in the range of 50 to 150 nm with standard deviation being less than 60% and the number mean thickness of the silver nanoplatelets, present in the composition, is in the range of 5 to 30 nm with standard deviation being less than 50%.

The mean aspect ratio of the silver nanoplatelets is higher than 2.0.

The highest wavelength absorption maximum of the population of all silver nanoplatelets in the composition being within the range of 560 to 800 nm.

A coating, comprising the silver nanoplatelets, shows a turquoise, or blue color in transmission and a yellowish metallic color in reflection.

The manufacture of the compositions is described in PCT/EP2020/061373.

The mean aspect ratio of the silver nanoplatelets is higher than 2.0.

The surface modified silver nanoplatelets bear a surface modifying agent of formula (V) and optionally further surface stabilizing agents described above, or below on their surface and optionally comprise one, or more stabilizing agents.

The number mean diameter of the silver nanoplatelets is in the range of 50 to 150 nm, preferably 60 to 140 nm, more preferably 70 to 120 nm. The standard deviation being less than 60%, preferably less than 50%.

The number mean thickness of the silver nanoplatelets is in the range of 5 to 30 nm, preferably 7 to 25 nm, more preferably 8 to 25 nm. The standard deviation being less than 50%, preferably less than 30%.

The mean aspect ratio (defined as the ratio of number mean diameter to number mean thickness) being larger than 2.0, preferably larger than 2.2 and more preferably larger than 2.5.

In a particularly preferred embodiment the number mean diameter of the silver nanoplatelets is in the range of 70 to 120 nm. The standard deviation being less than 50% The number mean thickness of the silver nanoplatelets is in the range of 8 to 25 nm. The standard deviation being less than 30%. The mean aspect ratio of the silver nanoplatelets is higher than 2.5.

The highest wavelength absorption maximum of the population of all silver nanoplatelets in the composition being within the range of 560 to 800 nm, preferably 580 to 800 nm, most preferably 600 to 800 nm (measured in water at ca. 5*10-5 M (mol/l) concentration of silver).

The absorption maximum has a full width at half maximum (FWHM) value in the range of 50 to 500 nm, preferably 70 to 450 nm, more preferably 80 to 450 nm.

The molar extinction coefficient of the silver nanoplatelets, measured at the highest wavelength absorption maximum of the population of all silver nanoplatelets in the composition, is higher than 4000 L/(cm*mol_{Ag}), especially higher than 5000 L/(cm*mol_{Ag}), very especially higher than 6000 L/(cm*mol_{Ag}).

In a preferred embodiment of the present invention the silver nanoplatelets bear a surface stabilizing agent of formula (I) described above on their surface.

A surface stabilizing agent of formula 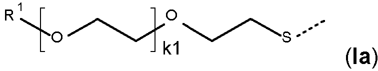 is more
preferred, wherein R¹ is H, or a C₁-C₈alkyl group, and
k1 is 22 to 450, especially 22 to 150. R¹ is preferably H, or CH₃.

The most preferred surface stabilizing agents are derived from MPEG thiols (poly(ethylene glycol) methyl ether thiols) having an average Mₙ of 2000 to 6000, such as, for example, MPEG 2000 thiol **(A-1,** average Mₙ 2,000), MPEG 3000 thiol **(A-2),** MPEG 4000 thiol **(A-3)** MPEG 5000 thiol **(A-4),** MPEG 6000 thiol **(A-5),** PEG thiols (O-(2-mercaptoethyl)-poly(ethylene glycol)) having an average Mₙ of 2000 to 6000, such as, for example, PEG 2000 thiol **(A-6,** average Mₙ 2,000), PEG 3000 thiol **(A-7),** PEG 4000 thiol **(A-8),** PEG 5000 thiol **(A-9),** PEG 6000 thiol **(A-10).**

In another preferred embodiment the silver nanoplatelets bear a surface stabilizing agent which is a polymer, or copolymer described in WO200674969, which can be obtained by a process comprising the steps
i1) polymerizing in a first step one or more ethylenically unsaturated monomers in the presence of at least one nitroxylether having the structural element 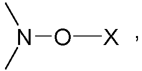 wherein X represents a group having at least one carbon atom and is such that the free radical X• derived from X is capable of initiating polymerization; or
i2) polymerizing in a first step one or more ethylenically unsaturated monomers in the presence of at least one stable free nitroxyl radical 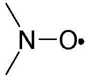 and a free radical initiator; wherein at least one monomer used in the steps i1) or i2) is a C₁-C₆ alkyl or hydroxy C₁-C₆ alkyl ester of acrylic or methacrylic acid; and optionally
ii) a second step, comprising the modification of the polymer or copolymer prepared under **i1)** or **i2)** by a transesterification reaction, an amidation, hydrolysis or anhydride modification or a combination thereof.

The monomer in step **i1)** or **i2)** is preferably selected from 4-vinyl-pyridine or pyridinium-ion, 2-vinyl-pyridine or pyridinium-ion, 1-vinyl-imidazole or imidazolinium-ion, or a compound of formula CH₂=C(Rₐ)-(C=Z)-R_{b}, wherein Rₐ is hydrogen or methyl, R_{b} is NH₂, O⁻(Me⁺), unsubstituted C₁-C₁₈alkoxy, C₂-C₁₀₀alkoxy interrupted by at least one N and/or O atom, or hydroxy-substituted C₁-C₁₈alkoxy, unsubstituted C₁-C₁₈alkylamino, unsubstituted di(C₁-C₁₈alkyl)amino, hydroxy-substituted C₁-C₁₈alkylamino or hydroxy-substituted di(C₁-C₁₈alkyl)amino, -O-(CH₂)_{y}NR¹⁵R¹⁶, or -O-(CH₂)_{y}NHR¹⁵R¹⁶⁺An⁻, -N-(CH₂)_{y}NR¹⁵R¹⁶, or -N-(CH₂)_{y}NHR¹⁵R¹⁶⁺An⁻, wherein
An⁻ is an anion of a monovalent organic, or inorganic acid;
y is an integer from 2 to 10;
R¹⁵ is saturated or unsaturated, linear or branched chain alkyl with 1 -22 carbon atoms,
R¹⁶ is saturated or unsaturated, linear or branched chain alkyl with 1 -22 carbon atoms,
Me is a monovalent metal atom or the ammonium ion.
Z is oxygen or sulfur.

The second step ii) is preferably a transesterification reaction.

In step ii) the alcohol is preferably an ethoxylate of formula

R_{A}-[O-CH₂-CH₂-]ₙ₁-OH (A),

wherein R_{A} is saturated or unsaturated, linear or branched chain alkyl with 1 -22 carbon atoms, or alkylaryl or dialkylaryl with up to 24 carbon atoms and n1 is 1 to 150.

Preferably, step i1) or i2) is carried out twice and a block copolymer is obtained wherein in the first or second radical polymerization step the monomer or monomer mixture contains 50 to 100% by weight, based on total monomers, of a C₁-C₆ alkyl ester of acrylic or methacrylic acid and in the second or first radical polymerization step respectively, the ethylenically unsaturated monomer or monomer mixture contains at least a monomer without primary or secondary ester bond.

In the first polymerization step the monomer or monomer mixture contains from 50 to 100% by weight based on total monomers of a C₁-C₆ alkyl ester of acrylic or methacrylic acid (first monomer) and in the second polymerization step the ethylenically unsaturated monomer or monomer mixture comprises 4-vinyl-pyridine or pyridinium-ion, 2-vinyl-pyridine or pyridinium-ion, vinyl-imidazole or imidazolinium-ion, 3-dimethylaminoethylacrylamide, 3-dimethylaminoethylmethacrylamide, or corresponding ammonium ion, 3-dimethylaminopropylacrylamide, or corresponding ammonium ion, or 3-dimethylaminopropylmethacrylamide, or corresponding ammonium ion (second monomer).

The nitroxylether is preferably a compound of formula 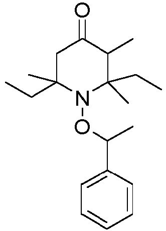 (O1).

The surface stabilizing agent is preferably a copolymer which can be obtained by a process comprising the steps
**i1)** polymerizing in a first step a first monomer, which is a C₁-C₆ alkyl or hydroxy C₁-C₆ alkyl ester of acrylic or methacrylic acid, and a second monomer which is selected from selected from 4-vinyl-pyridine or pyridinium-ion, 2-vinyl-pyridine or pyridinium-ion, 1-vinyl-imidazole or imidazolinium-ion, 3-dimethylaminoethylacrylamide, 3-dimethylaminoethylmethacrylamide 3-dimethylaminopropylacrylamide, and 3-dimethylaminopropylmethacrylamide; in the presence of at least one nitroxylether having the structural element 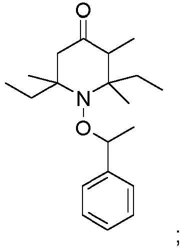 and
**ii)** a second step, comprising the modification of the polymer or copolymer prepared under i) or ii) by a transesterification reaction, wherein the alcohol in step ii) is an ethoxylate of formula R_{A}-[O-CH₂-CH₂-]ₙ₁-OH (A), wherein
R_{A} is saturated or unsaturated, linear or branched chain alkyl with 1 -22 carbon atoms, or alkylaryl or dialkylaryl with up to 24 carbon atoms and n1 is 1 to 150.

Copolymers represented by formula 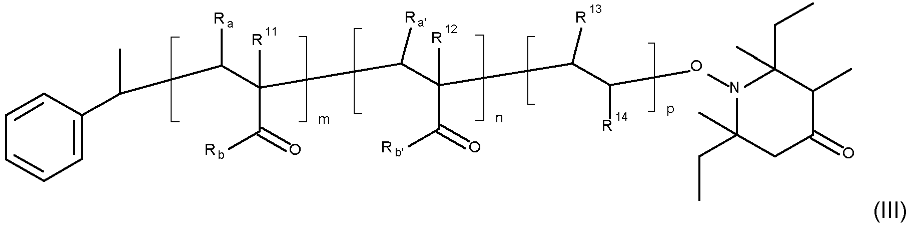 are preferred, wherein
R¹¹ and R¹² are H or methyl,
R¹³, Rₐ and R_{a'} are independently of each other H or methyl,
R_{b} is saturated or unsaturated, linear or branched chain alkyl with 1 -22 carbon atoms,
R_{b'} is R_{A}-[O-CH₂-CH₂-]ₙ₁-O-,
R¹⁴ is 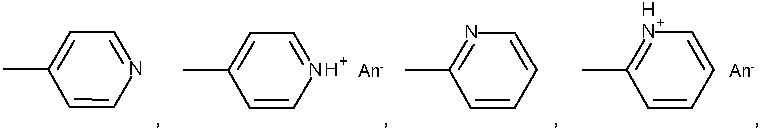 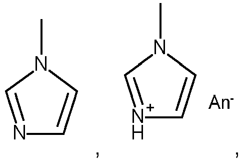 -C(=O)-N-(CH₂)_{y}NR¹⁵R¹⁶, or -C(=O)-N-(CH₂)_{y}NHR¹⁵R¹⁶⁺An⁻, wherein
   An⁻ is an anion of a monovalent organic, or inorganic acid;
   y is an integer from 2 to 10;
   R¹⁵ is saturated or unsaturated, linear or branched chain alkyl with 1 -22 carbon atoms,
   R¹⁶ is saturated or unsaturated, linear or branched chain alkyl with 1 -22 carbon atoms,
   R_{A} is saturated or unsaturated, linear or branched chain alkyl with 1 -22 carbon atoms, or alkylaryl or dialkylaryl with up to 24 carbon atoms and n1 is 1 to 150,
   m, n and p are independently of each other integers from 1 to 200, and
   o is an integer from 1 to 150.

Copolymers represented by formula 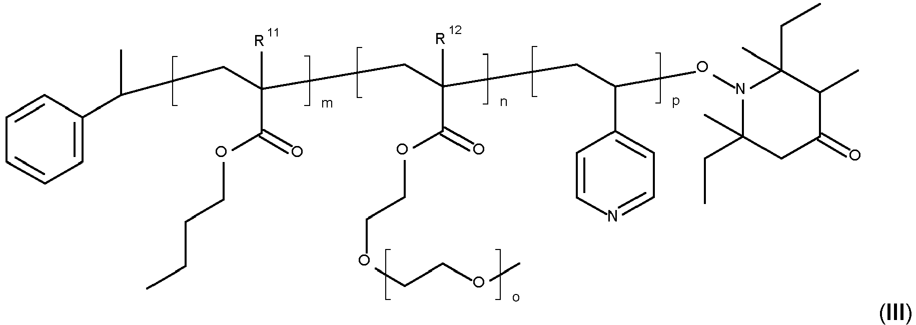 are more preferred, where R¹¹ and R¹² are H or methyl, m, n and p are independently of each other integers from 1 to 200, o is an integer from 1 to 150, especially an integer from 1 to 149. The order of monomers with indices m and n may be fixed (block copolymers) or not fixed (random copolymers).

Examples of preferred copolymers are the copolymers described in Example A3 (D-1), Example A6 **(D-2)** of WO200674969.

In a particularly preferred embodiment the silver nanoplatelets comprise one, or more surface stabilizing agents of formula (I) and one, or more surface stabilizing agents of formula **(III).**

In addition to the surface stabilizing agents the composition may further comprise stabilizing agents. Stabilizing agents may include, for example, phosphines; phosphine oxides; alkyl phosphonic acids; oligoamines, such as ethylenediamine, diethylene triamine, triethylene tetramine, spermidine, spermine; compounds of formula **(Ila), (IIb), (IIc)** and **(IId)** described above; surfactants; dendrimers, and salts and combinations thereof.

The stabilizing agent may be a compound of formula R²⁰-X⁴ **(Ila),** wherein R²⁰ and X⁴ are defined above.

Examples of compounds of formula **(IIa)** are 1-methylamine, 1-dodecylamine, 1-hexadecylamine, citric acid, oleic acid, D-cysteine, 1-dodecanethiol, 9-mercapto-1-nonanol, 1-thioglycerol, 11-amino-1-undecanethiol, cysteamine, 3-mercaptopropanoic acid, 8-mercaptooctanoic acid and 1,2-ethanedithiol.

The stabilizing agent may be a compound of formula 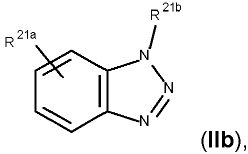 **wherein** R^{21a} and R^{21b} are defined above.

Examples of compounds of formula (IIb) are compounds **(B-1), (B-2),(B-3), (B-4), (B-5), (B-6)** and **(B-7).**

In another preferred embodiment the stabilizing agent is a "polyhydric phenol", which is defined above. The polyhydric phenol is preferably a compound of formula 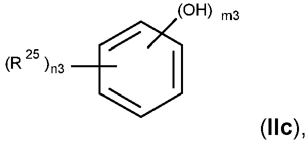 wherein R²⁵, n3 and m3 are defined above, more a compound of formula 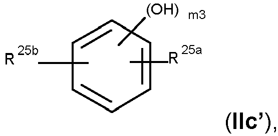 wherein m3, R²⁵⁸ and R^{25b} are defined above.

Even more preferably, the polyhydric phenol is a compound of formula 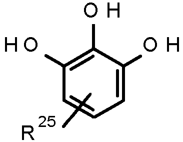 (IIca), wherein R²⁵ is defined above.

Most preferred, the polyhydric phenol is a compound of formula 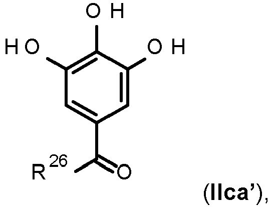 wherein R²⁶ is a hydrogen atom, a C₁₋C₁₈alkyl group, or a C₁-C₁₈alkoxy group, especially a C₁-C₈alkoxy group, such as, for example, methyl gallate **(C-1),** ethyl gallate **(C-2),** propyl gallate **(C-3),** isopropyl gallate **(C-4),** butyl gallate **(C-5),** octyl gallate **(C-6)** and lauryl gallate **(C-7).**

In another preferred embodiment of the present invention the polyhydric phenols are compounds of formula 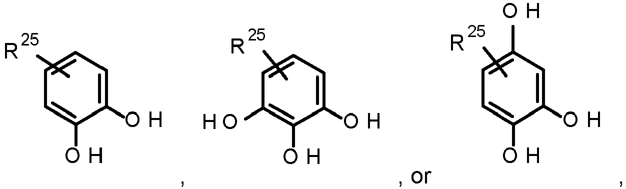 wherein R²⁵ is a hydrogen atom, a C₁₋C₁₈alkyl group, or a group of formula-C(=O)-R²⁶, wherein R²⁶ is a hydrogen atom, a hydroxy group, a C₁₋C₁₈alkyl group, or a C₁-C₁₈alkoxy group, an unsubstituted or substituted amino group, an unsubstituted or substituted phenyl group, especially a C₁-C₁₈alkyl group or C₁-C₈alkoxy group, such as, for example, a compound **(C-8)** and **(C-9).**

In a particularly preferred embodiment the stabilizing agent is selected from compounds of formula **(IIb), (IIc),** or mixtures thereof.

In a particularly preferred embodiment the silver nanoplatelets comprise one, or more surface stabilizing agents of formula **(I)** and one, or more surface stabilizing agents of formula **(III).** In addition, the silver nanoplatelet compositions may comprise one, or more stabilizing agents of formula **(IIb).**

Processes for producing the composition according to the present invention are, for example, described in WO2020/083794 and WO2020/224982.

The composition of the present application is preferably solvent free.

The surfactant (E), such as, for example, the fluorinated block copolymer **E-1,** may be prepared in a form of solution in a solvent, or solvent mixture, such as, for example, 1-methoxy-2-propylacetate, 1-methoxy-2-propanol, or a mixture thereof. The amount of the solvent, or solvent mixture of the surfactant (E), such as, for example, the fluorinated block copolymer **E-1,** contained in the composition is smaller than 2 % by weight, more preferred smaller than 1 % by weight based on the whole amount the composition.

In a preferred embodiment the solvent-free composition comprises
A) 2 to 30 % by weight, preferably, 3 to 25 % by weight, more preferably, 4 to 20 % by weight of the silver nanoplatelets (A),
B) 5 to 90 % by weight, preferably 10 to 90%, more preferably, 20 to 90% by weight of the reactive diluent(s) (B),
C) 0 to 70 % by weight, preferably 0 to 50 %by weight, more preferably 0 to 40% by weight of the oligomer(s) (C),
D) 2 to 10 % by weight, preferably 3 to 8% by weight, more preferably, 3 to 7% by weight of the radical photoinitiator(s) (D),
E) 0.01 to 3 % by weight, preferably 0.01 to 2 % by weight, more preferably 0.05 to 1.5% by weight, most preferably 0.075 to 1% by weight of a surfactant(s) (E),
F) 0 to 30% by weight, preferably 0 to 20% by weight, more preferably 0 to 15% by weight of a polymeric binder; and
H) 0 to 10% by weight, preferably 0 to 7% by weight, more preferably 0 to 5% by weight of further additives (H),
wherein components (A), (B), (C), (D), (E), (F) and (H) add up to 100 % by weight.

In another preferred embodiment the present invention is directed to a UV-Vis radiation radically curable ink, comprising:
I) from about 4 to about 20 wt-% of silver nanoplatelets (A),
II) from about 80 to about 96 wt-% of an ink vehicle comprising
   B) from about 20 to about 90 wt-% of one, or more reactive diluents;
   C) from about 0 to about 40 wt-% of one, or more oligomers, wherein one oligomer is preferably a urethane (meth)acrylate (C), which is obtainable by reaction of the following components:
      (a) at least one isocyanate having two isocyanate groups,
      (b) at least one polyalkylene oxide polyether having at least 2 hydroxyl groups,
      (c) at least one hydroxy-functional (meth)acrylate having one hydroxyl group and one (meth)acrylate group,
      (d) at least one compound having at least one isocyanate reactive group and at least one acid function,
      (e) at least one basic compound which is present for neutralization or partial neutralization of the acid groups of component (d),
      (f) optionally at least one monoalcohol having one hydroxy function;
   D) from about 0.1 to about 10 wt-% one, or more photoinitiators;
   E) 0.075 to 1 % by weight of a surfactant(s) (E); and
   H) 0 to 10% of further additives (H),
the weight percent of (B), (C), (D), (E) and (H) being based on the total weight of the ink vehicle; and the weight percent of I) and II) being based on the total weight of UV-Vis radiation radically curable ink.

In the above embodiments the reactive diluent (B) is selected from divinyladipate, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

The oligomer is preferably a urethane (meth)acrylate (C), which is preferably obtainable by reaction of the following components:
(a) at least one isocyanate having two isocyanate groups,
(b) at least one polyalkylene oxide polyether having at least 2 hydroxyl groups,
(c) at least one hydroxy-functional (meth)acrylate having one hydroxyl group and one (meth)acrylate group,
(d) at least one compound having at least one isocyanate reactive group and at least one acid function,
(e) at least one basic compound which is present for neutralization or partial neutralization of the acid groups of component (d),
(f) optionally at least one monoalcohol having one hydroxy function.

The photonitiator (D) is a compound of the formula (XII), a compound of the formula (XI), or the photoinitiator is a mixture of different compounds of the formula (XII), or the photoinitiator is a mixture of compounds of the formula (XII) and (XI).

The surfactant (E) is preferably a compound of formula (XXI), more preferred a compound of formula (XXla).

For the polymeric binder (F) and further additives (G) the preferences outlined above, below apply.

The composition of the present application is preferably a UV-Vis radically curable ink, especially a UV-Vis radically curable security ink.

### F) Polymeric Binder

The printing (or coating) composition may comprise a polymeric binder.

The p olymeric binder is a high-molecular-weight organic compound conventionally used in coating compositions. High molecular weight organic materials usually have molecular weights of about from 103 to 108 g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

With respect to the polymeric binder, a thermoplastic resin may be used, examples of which include, polyethylene based polymers [polyethylene (PE), ethylene-vinyl acetate copolymer (EVA), vinyl chloride-vinyl acetate copolymer, vinyl alcohol-vinyl acetate copolymer, polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styreneacrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN), also known as nitrocellulose], urethane based polymers (PU), polyesters (alkyl) [polyethylene terephthalate (PET), polybutylene terephthalate (PBT), polycyclohexane terephthalate (PCT)], novolac type phenolic resins, or the like. In addition, thermosetting resins such as resol type phenolic resin, a urea resin, a melamine resin, a polyurethane resin, an epoxy resin, an unsaturated polyester and the like, and natural resins such as protein, gum, shellac, copal, starch and rosin may also be used.

The polymeric binder preferably comprises nitrocellulose, ethyl cellulose, cellulose acetate, cellulose acetate propionate (CAP), cellulose acetate butyrate (CAB), alcohol soluble propionate (ASP), vinyl chloride copolymers, vinyl acetate homo- or copolymers, vinyl ester homo- or copolymers, vinyl ether homo- or copolymers, acrylic polymers, polyurethane, polyamide, rosin ester resins, aldehyde or ketone resins, polyurethane, polyethyleneterephthalate, terpene phenol resins, olefin copolymers, silicone copolymers, cellulose, polyamide, polyester and rosin ester resins, shellac and mixtures thereof.

Most preferred, the polymeric binder is selected from the group consisting of nitro cellulose, vinyl chloride copolymers, vinyl ester, especially, vinyl acetate copolymers, vinyl, acrylic, urethane, polythyleneterephthalate, terpene phenol, polyolefin, cellulose, polyamide, polyester and rosin ester resins or mixtures thereof.

Preferably, polymeric binder is at least partially soluble in the composition.

### G) Solvent

The composition of the present invention is preferably solvent-free.

In the context of the composition of the present invention the term "solvent" means a compound with boiling point of below 250°C, preferably, below 200°C, which substantially evaporates during and/or after coating or printing of the compositions according to the present invention prior to the radiation curing step.

In general, the term "solvent-free" means that the amount of solvent is smaller than 5%, preferably smaller than 3%, more preferably smaller than 2 %, most preferred smaller than 1 % by weight based on the whole amount the composition.

The solvent is preferably selected from alcohols (such as ethanol, 1-propanol, 2-propanol, 1-butanol, 2-butanol, isobutanol, tert-butanol, tert-pentanol), cyclic or acyclic ethers (such as diethyl ether, tetrahydrofuran and 2-methyltetrahydrofurane), cyclic or acyclic ketones (such as acetone, 2-butanone, 3-pentanone, cyclopentanone), ether-alcohols (such as 2-methoxyethanol, 1-methoxy-2-propanol, ethylene glycol monobutyl ether, diethylene glycol monoethyl ether, diethylene glycol monopropyl ether, 1-methoxy-2-propylacetate and diethylene glycol monobutyl ether), esters (such as ethyl acetate, ethyl propionate, 1-methoxy-2-propylacetate and ethyl 3-ethoxypropionate), mixtures thereof and mixtures with water. The preferred solvents include C₂-C₆alcohols, ketones, esters, ether-alcohols and mixtures thereof.

### H) Further Additives

The printing (or coating) composition may comprise various additives (I). Examples thereof include thermal inhibitors, coinitiators and/or sensitizers, light stabilisers, optical brighteners, fillers and pigments, as well as white and coloured pigments, dyes, antistatics, wetting agents, flow auxiliaries, lubricants, waxes, anti-adhesive agents, dispersants, emulsifiers, adhesion promoters, anti-oxidants; fillers, e.g. talcum, gypsum, silicic acid, rutile, carbon black, zinc oxide, iron oxides; reaction accelerators, thickeners, matting agents, antifoams, leveling agents and other adjuvants customary, for example, in lacquer, ink and coating technology.

Examples of coinitiators/sensitisers are especially aromatic carbonyl compounds, for example benzophenone, thioxanthone, especially isopropyl thioxanthone, anthraquinone and 3-acylcoumarin derivatives, terphenyls, styryl ketones, and also 3-(aroylmethylene)-thiazolines, camphor quinone, and also eosine, rhodamine and erythrosine dyes. Amines, for example, can also be regarded as photosensitisers when the photoinitiator consists of a benzophenone or benzophenone derivative.

Examples of light stabilizers are:
Phosphites and phosphonites (processing stabilizer), for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane, phosphorous acid, mixed 2,4-bis(1,1-dimethylpropyl)phenyl and 4-(1,1- dimethylpropyl)phenyl triesters (CAS No. 939402-02-5), Phosphorous acid, triphenyl ester, polymer with alpha-hydro-omega-hydroxypoly[oxy(methyl-1,2-ethanediyl)], C10-16 alkyl esters (CAS No. 1227937-46-3). The following phosphites are especially preferred:

### Tris(2,4-di-tert-butylphenyl) phosphite, tris(nonylphenyl) phosphite,

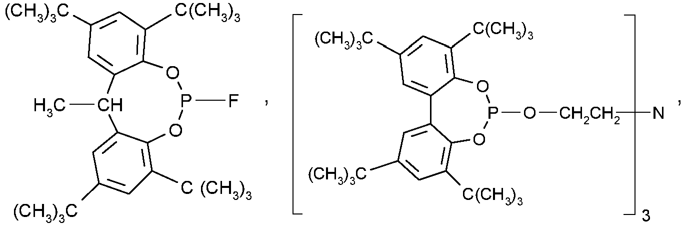

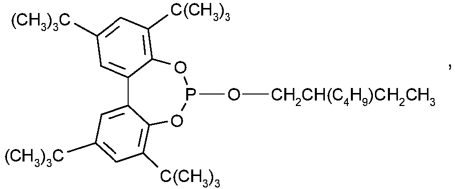

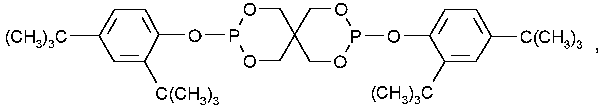

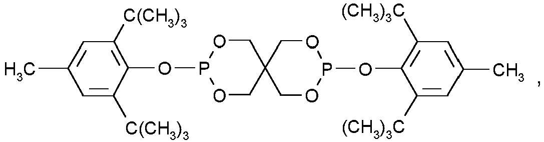

and

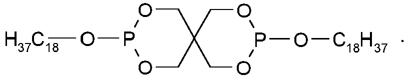

Quinone methides of the formula 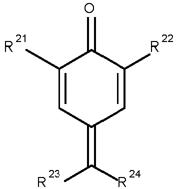 (providing long term shelf life stability), wherein
R²¹ and R²² independently of each other are C₁-C₁₈alkyl, C₅-C₁₂cycloalkyl, C₇-C₁₅-phenylalkyl, optionally substituted C₆-C₁₀aryl;
R²³ and R²⁴ independently of each other are H, optionally substituted C₆-C₁₀-aryl, 2-,3-,4-pyridyl, 2-,3-furyl or thienyl, COOH, COOR²⁵, CONH₂, CONHR²⁵, CONR²⁵R²⁶, -CN, - COR²⁵, -OCOR²⁵, -OPO(OR²⁵)₂, wherein R²⁵ and R²⁶ are independently of each other C₁-C₈alkyl, or phenyl. Quinone methides are preferred, wherein R²¹ and R²² are tert-butyl;
R²³ is H, and R²⁴ is optionally substituted phenyl, COOH, COOR²⁵, CONH₂, CONHR²⁵, CONR²⁵R²⁶, -CN, -COR²⁵, -OCOR²⁵, -OPO(OR²⁵)₂, wherein R²⁵ and R²⁶ are C₁-C₈alkyl, or phenyl. Examples of quinone methides are

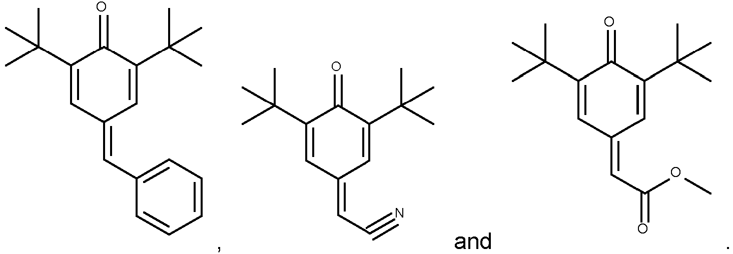

The quinone methides may be used in combination with highly sterically hindered nitroxyl radicals as described, for example, in US20110319535.

The quinone methides are used typically in a proportion of from about 0.01 to 0.3% by weight, preferably from about 0.04 to 0.15% by weight, based on the total weight of the UV curable composition.

Leveling agents used, which additionally also serve to improve scratch resistance, can be the products TEGO^{®} Rad 2100, TEGO^{®} Rad 2200, TEGO^{®} Rad 2300, TEGO^{®} Rad 2500, TEGO^{®} Rad 2600, TEGO^{®} Rad 2700 and TEGO^{®} Twin 4000, likewise obtainable from Tego. Such auxiliaries are obtainable from BYK, for example as BYK^{®}-300, BYK^{®}-306, BYK^{®}-307, BYK^{®}-310, BYK^{®}-320, BYK^{®}-322, BYK^{®}-331, BYK^{®}-333, BYK^{®}-337, BYK^{®}-341, Byk^{®} 354, Byk^{®} 361 N, BYK^{®}-378 and BYK^{®}-388.

Leveling agents are typically used in a proportion of from about 0.005 to 1.0% by weight, preferably from about 0.01 to 0.2% by weight, based on the total weight of the UV curable composition.

The radically curable compositions, in particular the coating, or printing ink compositions of the present invention may be used for the production of decorative, or security elements.

Accordingly, the present application relates to security, or decorative elements, comprising a substrate, which may contain indicia or other visible features in or on its surface, and and on at least part of the said substrate surface, a coating, comprising the composition according to the present invention.

The coating, comprising the composition according to the present invention, shows a color in transmission and a different color in reflection, such as, for example, a red, or magenta color in transmission and a greenish-metallic color in reflection, or a blue color in transmission and a gold color in reflection.

The coating, comprising the composition according to the present invention shows metallic reflection aspect on both sides of the coating, i.e. on the substrate side and on the top side.

Due to the simple buildup of the security element and the specific highest maximum absorption wavelength of the silver nanoplatelets a high protection against counterfeit is possible, making the element ideally suitable for banknotes, credit cards and the like.

As substrate the usual substrates can be used. The substrate may comprise paper, leather, fabric such as silk, cotton, tyvac, filmic material or metal, such as aluminium. The substrate may be in the form of one or more sheets or a web. The substrate may be mould made, woven, non-woven, cast, calendared, blown, extruded and/or biaxially extruded. The substrate may comprise paper, fabric, man made fibres and polymeric compounds. The substrate may comprise any one or more selected from the group comprising paper, papers made from wood pulp or cotton or synthetic wood free fibres and board. The paper/board may be coated, calendared or machine glazed; coated, uncoated, mould made with cotton or denim content, Tyvac, linen, cotton, silk, leather, polythyleneterephthalate, Propafilm^{®} polypropylene, polyvinylchloride, rigid PVC, cellulose, tri-acetate, acetate polystyrene, polyethylene, nylon, acrylic and polyetherimide board. The polyethyleneterephthalate substrate may be Melinex type film (obtainable from DuPont Films Willimington Delaware, such as, for example, product ID Melinex HS-2), or oriented polypropylene.

The substrates being transparent films or non-transparent substrates like opaque plastic, paper including but not limited to banknote, voucher, passport, and any other security or fiduciary documents, self-adhesive stamp and excise seals, card, tobacco, pharmaceutical, computer software packaging and certificates of authentication, aluminium, and the like.

The substrates can be plain such as in metallic (e.g. Al foil) or plastic foils (e.g. PET foil), but paper is regarded also as a plain substrate in this sense.

Non-plain substrates or structured substrates comprise a structure, which was intentionally created, such as a hologram, or any other structure, created, for example, by embossing.

In a particularly preferred embodiment compositions, comprising silver nanoplatelets with different highest wavelength absorption maximums may be used to print dichromic, or trichromic patterns. The patterns may have a defined shape, such as, for example, a symbol, a stripe, a geometrical shape, a design, lettering, an alphanumeric character, the representation of an object or parts thereof. Reference is made to 2020/156858.

The coating (or layer), comprising the composition according to the present invention, which shows a color in transmission and a different color in reflection, can be used as functional semitransparent and/or metallic layer in known decorative, or security elements, which are, for example, described in WO2011/064162, WO2014/041121, WO2014/187750, WO15120975A1, WO16091381A1, WO16173696, WO2017114590, WO2017092865, WO2017080641, WO2017028950, WO2017008897, WO2016173695 WO17054922A1 and WO17008905A3.

Accordingly, the present invention relates to
- a security, or decorative element (the structure of which is described in more detail in WO2014/041121), comprising a) a substrate, b) a component with refractive index modulation, in particular a volume hologram, which is obtainable by exposing a recording material to actinic radiation and thereon c) a coating on at least a portion of the refractive index modulated layer, comprising the composition according to the present invention, which shows a color in transmission and a different color in reflection;
- a security element, or decorative element (the structure of which is described in more detail in WO2014/187750), comprising
   a) a substrate
   b) a coating on at least a portion of the substrate comprising at least one liquid crystal compound, the coating being applied
      on the reverse side of the substrate if the substrate is transparent or translucent or on the surface side if the substrate is transparent, translucent, reflective or opaque and
   c) a further coating on at least a portion of the coating containing the liquid crystal compound or direct on the substrate if the coating containing the liquid crystal compound is
      placed on the reverse side of the substrate,
      the further coating is formed by the composition according to the present invention, which shows a color in transmission and a different color in reflection;
- a security element, or decorative element (the structure of which is described in more detail in WO16173696) for security papers, value documents, or the like, which consists of a mutlilayer structure capable of interference, wherein the multilayer structure capable of interference has a reflection layer, a dielectric layer, and a partially transparent layer, wherein the dielectric layer is arranged between the reflection layer and the partially transparent layer, wherein the reflection layer is formed by a colored layer, comprising the composition according to the present invention, which shows a color in transmission and a different color in reflection;
- a security element, or decorative element (the structure of which is described in more detail in WO2017092865) for protecting documents of value, comprising a transparent carrier substrate, a layer containing a diffractive optical element (DOE) and a semi-transparent functional layer, which is formed by the composition according to the present invention, which shows a color in transmission and a different color in reflection;
- a molded plastic film article (the structure of which is described in more detail in WO2017114590) for a blister, in particular a blister for tablets, comprising a transparent carrier substrate that includes a semi-transparent functional layer, which is formed by the composition according to the present invention, which shows a color in transmission and a different color in reflection;
- a packaging (the structure of which is described in more detail in WO17054922A1) comprising a plastic film shaped part and a cover film, wherein said plastic film shaped part defines the front side of the packaging and the cover film defines the rear side of the packaging, and the cover film is based on a carrier substrate provided with a semi-transparent functional layer, which is formed by the composition according to the present invention, which shows a color in transmission and a different color in reflection;
- a security, or decorative element, comprising a substrate, an UV lacquer layer on at least part of the substrate having on at least part of its surface a nano- or microstructure, such as, for example an OVD, and on at least part of the UV lacquer layer and/or on at least part of the nano- or microstructure layer, a coating, which is formed by the composition according to the present invention;
- a security, or decorative element, capable of interference in the visible range of spectrum, comprising a substrate, optionally, carrying on at least part of its surface a nano- or microstructure, and on at least part of the substrate and/or on at least part of the nano- or microstructure, a coating, which is obtained with the compositions according to the present invention, said coating showing an interference color; or
- a security or decorative element, comprising
   i) a reflective layer, which is obtained with the compositions according to the present invention,
   ii) a transparent or translucent spacer layer and
   iii) additionally a transparent or translucent layer having a refractive index differing from refractive index of said spacer layer by at least 0.1, preferably at least 0.2, most preferably at least 0.3; wherein the spacer layer ii) is located between the reflective layer i) and the layer iii) and the security, or decorative element showing an interference color.

Methods for producing the security, or decorative elements (or security features) comprise the steps of
(a) printing, preferably by a printing process selected from the group consisting of rotogravure processes, flexography processes and screen printing processes the UV-Vis radiation radically curable security inks of the present invention on a substrate, and (b) curing the UV-Vis radiation radically curable security ink so as to form the security, or decorative elements (or one or more security features).

The application of layer (b) is preferably done by gravure, flexographic, ink jet, offset, or screen printing process.

A protective layer (c) may be applied on top of layer (b). The protective layer is preferably transparent or translucent. Examples for coatings are known to the skilled person. For example, water borne coatings, UV-cured coatings or laminated coatings may be used.

UV-cured coatings are preferably derived from UV curable compositions which are preferably deposited by means of gravure, offset flexographic, ink jet, offset and screen printing process.

The UV curable composition comprises
(a) 1.0 to 20.0, especially 1.0 to 15.0, very especially 3.0 to 10.0 % by weight of photoinitiator,
(b) 99.0 to 80.0, especially 99.0 to 85.0, very especially 97.0 to 90.0 % by weight of a binder (unsaturated compound(s) including one or more olefinic double bonds),
wherein the amounts of components a) and b) adds up to 100%.

In a preferred embodiment the UV curable composition comprises (b1) an epoxy-acrylate (10 to 60%) and (b2) one or several (monofunctional and multifunctional) acrylates (20 to 90%) and (a) one, or several photoinitiators (1 to 15%). wherein the amounts of components a), b1) and b2) add up to 100%.

The epoxy-acrylate is selected from reaction products of (meth)acrylic acid with aromatic glycidyl ethers, or aliphatic glycidyl ethers. Aromatic glycidyl ethers are, for example, bisphenol A diglycidyl ether, bisphenol F diglycidyl ether, bisphenol B diglycidyl ether, bisphenol S diglycidyl ether, hydroquinone diglycidyl ether, alkylation products of phenol/dicyclopentadiene, e.g., 2,5-bis[(2,3-epoxypropoxy)phenyl]octahydro-4,7-methano-5H-indene (CAS No. [13446-85-0]), tris[4-(2,3-epoxypropoxy)phenyl]methane isomers (CAS No. [66072-39-7]), phenol-based epoxy novolaks (CAS No. [9003-35-4]), and cresol-based epoxy novolaks (CAS No. [37382-79-9]). Examples of aliphatic glycidyl ethers include 1,4-butanediol diglycidyl ether, 1,6-hexanediol diglycidyl ether, trimethylolpropane triglycidyl ether, pentaerythritol tetraglycidyl ether, 1,1,2,2-tetrakis[4-(2,3-epoxypropoxy)phenyl]ethane (CAS No. [27043-37-4]), diglycidyl ether of polypropylene glycol (α,ω-bis(2,3-epoxypropoxy)poly(oxypropylene), CAS No. [16096-30-3]) and of hydrogenated bisphenol A (2,2-bis[4-(2,3-epoxypropoxy)cyclohexyl]propane, CAS No. [13410-58-7]).

The one or several acrylates are preferably multifunctional monomers which are selected from trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, tripropylene glycol diacrylate (TPGDA), dipropylene glycol diacrylate (DPGDA), pentaerythritol diacrylate, pentaerythritol triacrylate, pentaerythritol tetraacrylate, dipentaerythritol diacrylate, dipentaerythritol triacry¬late, dipentaerythritol tetraacrylate, dipentaerythritol pentaacrylate, dipentaerythritol hexa-acrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol tris-itaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetra methacrylate, sorbitol pentaacrylate, sorbitol hexaacrylate, oligoester acrylates and methacrylates, glycerol diacrylate and triacrylate, 1,4-cyclohexane diacrylate, bisacrylates and bismethacrylates of polyethylene glycol with a molecular weight of from 200 to 1500, triacrylate of singly to vigintuply alkoxylated, more preferably singly to vigintuply ethoxylated trimethylolpropane, singly to vigintuply propoxylated glycerol or singly to vigintuply ethoxylated and/or propoxylated pentaerythritol, such as, for example, ethoxylated trimethylol propane triacrylate (TMEOPTA) and or mixtures thereof.

In another preferred embodiment the UV curable composition comprises:

| | |
|---|---|
| Bisphenol A epoxyacrylate with 25% TPGDA | 1 - 35 % by weight |
| Dipropylene glycol diacrylate (DPGDA) | 30 - 45 % by weight |
| Ethoxylated trimethylol propane triacrylate (TMEOPTA) | 10 - 50% by weight |
| Reactive tertiary amine | 1 - 15% by weight |
| Photoinitiator: | 5 - 10 % by weight |

The amounts of the components-the of UV curable composition add up to 100 % by weight.

In another preferred embodiment the UV curable composition comprises:

| | |
|---|---|
| Tripropylene glycol diacrylate (TPGDA) | 1 - 25 % by weight |
| Dipropylene glycol diacrylate (DPGDA) | 30 - 45 % by weight |
| Ethoxylated trimethylol propane triacrylate (TMEOPTA) | 10 - 50% by weight |
| Reactive tertiary amine | 1 - 15% by weight |
| Photoinitiator: | 5 - 9 % by weight |

The amounts of the components-the of UV curable composition add up to 100 % by weight.

The photoinitiator is preferably a blend of an alpha-hydroxy ketone, alpha-alkoxyketone or alpha-aminoketone compound of the formula (XI) and a benzophenone compound of the formula (X); or a blend of an alpha-hydroxy ketone, alpha-alkoxyketone or alpha-aminoketone compound of the formula (XI), a benzophenone compound of the formula (X) and an acylphosphine oxide compound of the formula (XII).

The UV curable composition may comprise various additives. Examples thereof include thermal inhibitors, coinitiators and/or sensitizers, light stabilisers, optical brighteners, fillers and pigments, as well as white and coloured pigments, dyes, antistatics, wetting agents, flow auxiliaries, lubricants, waxes, anti-adhesive agents, dispersants, emulsifiers, anti-oxidants; fillers, e.g. talcum, gypsum, silicic acid, rutile, carbon black, zinc oxide, iron oxides; reaction accelerators, thickeners, matting agents, antifoams, leveling agents and other adjuvants customary, for example, in lacquer, ink and coating technology.

Examples of coinitiators/sensitisers are especially aromatic carbonyl compounds, for example benzophenone, thioxanthone, especially isopropyl thioxanthone, anthraquinone and 3-acylcoumarin derivatives, terphenyls, styryl ketones, and also 3-(aroylmethylene)-thiazolines, camphor quinone, and also eosine, rhodamine and erythrosine dyes. Amines, for example, can also be regarded as photosensitisers when the photoinitiator consists of a benzophenone or benzophenone derivative.

The security element of the invention can be affixed to a variety of objects through various attachment mechanisms, such as pressure sensitive adhesives or hot stamping processes, to provide for enhanced security measures such as anticounterfeiting. The security article can be utilized in the form of a label, a tag, a ribbon, a security thread, and the like, for application to a variety of objects such as security documents, monetary currency, credit cards, merchandise, etc.

Accordingly, the present invention is also directed to a product, comprising the security element according to the present invention, and to the use of the security element according to the present invention for the prevention of counterfeit or reproduction, on a document of value, right, identity, a security label or a branded good.

A method of detecting the authenticity of the security element according to the present invention may comprise the steps of:
a) measuring an absorbance, reflectance or transmittance spectrum of the security document in the VIS/NIR range of the electromagnetic spectrum; and
b) comparing the spectrum measured under a) and/or information derived therefrom with a corresponding spectrum and/or information of an authentic security element.

The composition of the present invention can used in methods for forming an optically variable image (an optically variable device), which are, for example, described in EP2886343A1, EP2886343A1, EP2886356B1, WO11064162, WO2013/186167 and WO14118567A1.

Accordingly, the present invention relates to
- a method for forming an optically variable image (an optically variable device) on a substrate comprising the steps of: forming an optically variable image (OVI) on a discrete portion of the substrate; and depositing a coating, printing composition, comprising the composition according to the present invention on at least a portion of the OVI;
- a method for forming a surface relief microstructure, especially an optically variable image (an optically variable device, OVD) on a substrate described in WO2013/186167 comprises the steps of:
   A) applying a curable composition to at least a portion of the substrate wherein the curable composition comprises
      a1) at least one ethylenically unsaturated resin, a monomer or a mixture thereof;
      a2) at least one photoinitiator; and
      a3) the composition according to the present invention;
   B) contacting at least a portion of the curable composition with a surface relief microstructure, especially optically variable image forming means;
   C) curing the composition by using at least one UV lamp.

In a preferred embodiment the method of producing the security element of the present invention comprises the steps of
a) providing a substrate having a surface, which surface may contain indicia or other visible features, such as for example polyethylene terephthalate(PET) film, or a biaxially oriented polypropylene (BOPP) film;
b) applying on top of at least part of the said substrate surface a composition according to the present invention, comprising the silver nanoplatelets, and
c) optionally applying a protective layer on top of layer (b).

In another preferred embodiment the method of producing the security element of the present invention comprises the steps of
a) providing a substrate, optionally bearing a surface relief nano- or microstructure,
b) applying a composition according to the present invention to at least a portion of the substrate
c) curing the composition with actinic radiation.

Said method may comprise the steps of:
a) providing a substrate, optionally bearing a surface relief nano- or microstructure,
b1) applying a composition according to claims the present invention to at least a portion of the substrate;
b2) embossing a nano- or microstructure into the coating obtained in step b1), and
c) curing the composition with actinic radiation.

The thickness of the layer obtained in step b) is preferably in the range of 0.2 to 20 micrometer, preferably 0.25 to 15 micrometer, especially, 0.25 to 10 micrometer.

The thickness of a cured coating, obtained with the compositions of the present invention is preferably in the range of 0.2 to 20 micrometer, preferably, 0.2 to 15 micrometer, especially 0.2 to 10 micrometer.

The compositions, comprising silver nanoplatelets, which bear on their surface surface stabilizing agents and stabilizing agents may be used in the production of security elements, comprising prisms (US2014232100, WO18045429), lenses (US2014247499), and/or micromirrors (US2016170219).

The compositions, comprising silver nanoplatelets, which bear on their surface surface stabilizing agents and stabilizing agents may show surface enhanced Raman scattering (SERS).

Various aspects and features of the present invention will be further discussed in terms of the examples. The following examples are intended to illustrate various aspects and features of the present invention.

### Examples

UV-Vis spectra of dispersions were recorded on Varian Cary 50 UV-Visible spectrophotometer at such concentration of dispersions as to achieve the optical density of 0.3 to 1.5 at 1 cm optical path.

TEM analysis of dispersions and coatings was performed on EM 910 instrument from ZEISS in bright field mode at an e-beam acceleration voltage of 100kV. At least 2 representative images with scale in different magnification were recorded in order to characterize the dominant particle morphology for each sample.

The diameter of the particles was determined from TEM images as maximum dimension of nanoplatelets, oriented parallel to the plane of the image, using Fiji image analysis software, based on the measurement of at least 300 randomly selected particles.

The thickness of the particles was measured manually as the maximum thickness of nanoplatelets, oriented perpendicular to the plane of the image, from a TEM image, based on the measurement of at least 50 randomly selected particles.

### Examples

### Synthesis Example 1 - Urethane Acrylate (UA-1)

In a four-necked flask, equipped with reflux condenser, stirrer, dropping funnel and thermometer was provided, 550 g Pluriol^{®} 1010 E (product of BASF SE, polyethylene oxide having molecular weight 1000 g/mol), 0.9 g dimethylolpropionic acid, 102.1 g 2-hydroxyethyl acrylate, 290.4 g dipropylene glycol diacrylate (Laromer^{®} DPGDA, commercial product of BASF SE), 0.9 g 2.6-di-tert-butyl-p-cresol and 0.44 g methyl hydroquinone were mixed at 60 °C . 0.6 dibutyltin dilaurate were added as catalyst. 201 154.5 g tolylene diisocyanate (mixture of 2.4 and 2.6 isomers) (Lupranat^{®} T80, product of BASF SE) were added drop wise to this mixture at 60 to 70 °C within 60 minutes. Then the reaction mixture was stirred at ca. 65 °C (internal temperature) for 6 hours until the NCO value of the reaction mixture was 0.25 %. Then 23.2 g dibutylamine were added and the reaction mixture was stirred at 65 °C for 2 h. The obtained polymer was then diluted with 174 dipropylene glycol diacrylate (Laromer^{®} DPGDA, commercial product of BASF SE).

### Synthesis Example 2 - Fluorinated block copolymer E-1

The production process of the block copolymers described below with O1 as initiator was carried out with 2,6-diethyl-2,3,6-trimethyl-1-(1-phenylethoxy)- 4-piperidinone (hereinafter referred to as alkoxyamine O1) as polymerization initiator.

### a) Synthesis of a linear polybutyl acrylate -co-2-Hydroxyethyl acrylate (BA-co-2HEA)

Under nitrogen atmosphere 18.2 g of alkoxyamine O1 (0.574 mol) was dissolved in 110.3g n-butyl acrylate (0.861 mol), 199.9g 2-Hydroxyethyl acrylate (1.722 mol) and 134.2g Ethyl acetate. The mixture was degassed three times. Following which, it was heated to 95°C and stirred at that temperature until desired monomer conversion was reached. Conversion was determined by solid content measurement according to ISO 3251. As soon as the targeted monomer conversion of n-butyl acrylate and 2-Hydroxyethyl acrylate was obtained a monomer feed of 809.2g n-butyl acrylate and heating profile to 115°C was started. The monomer was fed over 420min. Afterwards the mixture was allowed to further polymerize upon aimed total monomer conversion. As soon as the targeted monomer conversion of n-butyl acrylate and 2-Hydroxyethyl acrylate was obtained, vacuum was applied, and residual monomer was removed by vacuum distillation at 105 °C and <15 mbar. The solid content was >98%.

### b) Synthesis of a linear block copolymer poly(n-BA-co-2HEA-block-CF₆C₂A)

Under nitrogen atmosphere 622,6 g distilled A-block (BA-co-2HEA) was dissolved in 69.2 g 1-methoxy-2-propylacetate and 240 g of perfluorooctyl acrylate was added. The mixture was heated to 115 °C and stirred at that temperature until desired monomer conversion was reached. Conversion was determined by NMR measurement. As soon as desired monomer conversion was obtained, the reaction mixture was cooled and further diluted with 1-methoxy-2-propanol to reach final solid content of 50-52 %.

**Substrate preparation:** Melinex 506 PET foil substrate was coated with a UV-curable varnish Lumogen OVD 311 (commercially available from BASF SE), using K bar wired handcoater #1 and the obtained coating was cured with a medium pressure Hg lamp (total UV dose ca. 500 mJ/cm²).

### Example 1 (cf. Example 1 of WO2020/083794)

### a) Synthesis of silver nanoplatelets

Preparation of Solution A: 925 g of the solution, obtained in Synthesis Example 2, are mixed with 250 g of de-ionized water. Separately, 720.5 g of silver nitrate are dissolved in 450 g of deionized water and both solutions are mixed at room temperature. 485.6 g of diethylenetriamine are added dropwise, while maintaining the temperature between 25 at 30 °C. After the addition is complete, 211 g of 25% w/w ammonia solution in water and 114 g of methylglycine diacetic acid trisodium salt, 40% w/w solution in water, are added and the resulting solution is cooled to ca. +3°C.

Preparation of Solution B: 1170 g of de-ionized water are placed in a reactor and stirred at room temperature under vacuum (100 mbar) for 10 min. Vacuum is released with nitrogen gas, and the procedure is repeated another 2 times for removing the dissolved oxygen. Then 53 g of hydrazine monohydrate is added, followed by addition of 42.4 g of 25% w/w ammonia solution in water and the solution temperature is brought to 45°C. After that, 2 g of 1-octanol and 0.5 g of borane-morpholine complex are added and the mixture is stirred for 5 min at 45°C.

The whole amount of Solution A is dosed into Solution B with a constant rate over 75 min under the surface, while maintaining the temperature of Solution B at 45°C, resulting in a dispersion of silver nanoplatelets (total silver concentration 10.4% w/w).

### b) Isolation and purification

The dispersion is cooled to 25°C, then 24 g of cpd. (**B-3**) are added to the dispersion and the stirring is continued for 1 h. The stirrer is stopped and the dispersion is allowed to sediment for 24 h at room temperature. Then 2300 g of supernatant are pumped out with a peristaltic pump, 2200 g of de-ionized water are added and the mixture is stirred for 1 h at room temperature. After that, 230 g of anhydrous sodium sulfate are added in portions with stirring. Stirring is continued for 20 min after addition of last portion of sodium sulfate, the stirrer is stopped and the dispersion is allowed to sediment for 24 h at room temperature. Then 2900 g of supernatant are pumped out with a peristaltic pump, 1000 g of de-ionized water are added and the mixture is stirred for 1h at RT. The dispersion is subjected to ultrafiltration with an Al₂O₃ membrane (50 nm pore size) until the conductivity of the permeate dropped below 10 µS/cm.

Yield: 2360 g of silver nanoplatelets dispersion in water. Dry content of silver nanoplatelets in the resulting dispersion is 19.4% w/w, yield of silver nanoplatelets (based on total silver, introduced in reaction) is 90%.

Highest wavelength absorption maximum of the obtained silver nanoplatelets is located at 490 nm, when measured in water at ca. 5*10⁻⁵ M concentration of silver). FWHM of this maximum is 85 nm.

Mean diameter of the particles is 45±10 nm. Mean thickness of the particles is 18±2.4 nm (standard deviation is indicated after ± sign).

### c) Solvent switch

100 g of dispersion of silver nanoplatelets in water, obtained in step b) were placed in a round-bottom flask and the solution of 0.7 g of ethyl gallate in 200 g of 1-methoxy-2-propanol is added. The mixture is concentrated on rotary evaporator to ca 40% w/w of dry content, then 100 g of 1-methoxy-2-propanol are added and the mixture is concentrated again to ca. 40% w/w of dry content. 100 g of 1-methoxy-2-propanol are added and the mixture is concentrated to ca. 45% w/w of dry content and filtered through Whatman Grande GF/B = 1u filter. The dry content in filtrate is adjusted to 40% w/w by addition of 1-methoxy-2-propanol.

### Example 2 (cf. Example 1 of WO2020/224982)

**a)** In a 1 L double-wall glass reactor, equipped with anchor-stirrer, 365 g of de-ionized water was cooled to +2°C. 13.62 g of sodium borohydride was added, and the mixture was cooled to -1°C with stirring at 250 rounds per minute (RPM, Solution A).

In a 0.5 L double-wall glass reactor, equipped with anchor-stirrer, 132 g of deionized water and 4.8 g of MPEG-5000-thiol were combined, and the mixture was stirred for 10 minutes at room temperature. 72 g of the product of Example A3 of WO2006074969 was added, and the resulting mixture was stirred for another 10 minutes at room temperature for homogenization. The solution of 30.6 g of silver nitrate in 30 g of de-ionized water was added in one portion and the mixture was stirred for 10 minutes, resulting in an orange-brown viscous solution. To this solution 96 g of deionized water was added, followed by addition of 3 g of Struktol SB2080 defoamer, pre-dispersed in 36 g of de-ionized water. The resulting mixture was cooled to 0°C with stirring at 250 RPM (Solution B).

After that, Solution B was dosed with a peristaltic pump at a constant rate over 2 h into Solution A under the liquid surface *via* a cooled (0°C) dosing tube, resulting in spherical silver nanoplatelets dispersion. During pumping, the Solution A was stirred at 250 RPM.

After dosing was complete, the reaction mixture was warmed up to +5°C within 15 minutes, and a solution of 862 mg of KCI in 10 g of deionized water was added in one portion, followed by addition of 9.6 g of ethylenediaminetetraacetic acid (EDTA) in 4 equal portions with 10 minutes time intervals.

After addition of the last EDTA portion, the reaction mixture was stirred for 15 minutes at +5°C, then warmed up to 35°C over 30 minutes and stirred for 1 h at this temperature. Upon this time, hydrogen evolution is completed.

3.0 mL of 30% w/w solution of ammonia in water was added, followed by addition of 5.76 g of solid NaOH, and the mixture was stirred for 15 min at 35°C. Then 180 mL of 50% w/w hydrogen peroxide solution in water were dosed with a peristaltic pump at a constant rate over 4 h into the reaction mixture under the liquid surface with stirring at 250 RPM, while maintaining the temperature at 35°C. This has led to a deep blue colored dispersion of silver nanoplatelets, which was cooled to room temperature. 1.23 g of compound of formula (B-3) was added, and the mixture was stirred for 1 h at room temperature.

### b) Isolation and purification of Ag nanoplatelets

### b1) Decantation

9.6 g of sodium dodecylsulfate was added to the reaction mixture and then ca. 25 g of anhydrous sodium sulfate powder was added in portions with stirring until the transmission color of the dispersion changed from blue to pink. Then the mixture was kept without stirring at room temperature for 24 h, allowing the coagulated nanoplatelets to sediment at the bottom of the reactor.

890 g of supernatant was pumped out from the reactor with a peristaltic pump, and 890 g of deionized water was added to the reactor. The mixture in reactor was stirred for 1 h at room temperature, allowing the coagulated particles to re-disperse.

### b2) Decantation

Ca. 64 g of anhydrous sodium sulfate powder was added in portions with stirring until the transmission color of the dispersion changed from blue to yellowish-pink. Then the mixture was kept without stirring at room temperature for 12 h, allowing the coagulated nanoplatelets to sediment at the bottom of the reactor. 990 g of supernatant was pumped out from the reactor with a peristaltic pump, and 90 g of deionized water was added to the reactor. The resulting mixture was stirred for 30 minutes at room temperature, allowing the coagulated particles to re-disperse.

### b3) Ultrafiltration in water

The resulting dispersion of Ag nanoplatelets was subjected to ultrafiltration using a Millipore Amicon 8400 stirred ultrafiltration cell. The dispersion was diluted to 400 g weight with de-ionized water and ultrafiltered to the end volume of ca. 50 mL using a polyethersulfone (PES) membrane with 300 kDa cut-off value. The procedure was repeated in total 4 times to provide 60 g of Ag nanoplatelets dispersion in water. After ultrafiltration was completed, 0.17 g of compound (**B-3**) was added to the dispersion.

Ag content 28.9% w/w; yield ca. 89% based on total silver amount; Solids content (at 250°C) 33.5% w/w; Purity 86% w/w of silver based on solids content at 250°C.

### b4) Ultrafiltration in isopropanol

The dispersion was further ultrafiltered in isopropanol. 60 g of Ag nanoplatelets dispersion, obtained after ultrafiltration in water, was placed in a Millipore Amicon 8400 stirred ultrafiltration cell and diluted to 300 g weight with isopropanol. The dispersion was ultrafiltered to the volume of ca. 50 mL using a polyethersulfone (PES) membrane with 500 kDa cut-off value. The procedure was repeated in total 4 times to provide 72 g of Ag nanoplatelets dispersion in isopropanol.

Ag content 24.1% w/w; Solids content (at 250°C) 25.7% w/w; Purity 93.5% w/w of silver based on solids content at 250°C.

The UV-Vis-NIR spectrum was recorded in water at Ag concentration of 9.8*10⁻⁵ M. λₘₐₓ = 700 nm; extinction coefficient at maximum ε=10200 L/(cm*mol Ag), FWHM = 340 nm. Reference is made to Fig. 1. UV-Vis-NIR spectrum of Ag nanoplatelets from Example 1 b4). Number mean particle diameter 93±40 nm, number mean particle thickness 16±2.5 nm.

### Example 3 - Replacement of solvent with dipropylene glycol diacrylate (DPGDA)

100 g of the dispersion, prepared according to Step c) of Example 1, was placed in a 0.5 L round-bottom flask and 50 g of DPGDA was added. 1-methoxy-2-propanol was removed on rotary evaporator at 10 mbar pressure and 50°C bath temperature, until no more solvent was distilled off. The solids content was adjusted to 42% by addition DPGDA to obtain the dispersion of silver nanoplatelets in DPGDA.

### Example 4. Replacement of solvent with dipropylene glycol diacrylate (DPGDA)

50 g (12.85 g of solids) of dispersion, obtained in Example 2, Step b4) was placed in a 250 mL round bottom flask and DPGDA (30.0 g) was added. The resulting mixture was concentrated on rotary evaporator at 20 mbar pressure and 50°C bath temperature, till no more solvent was distilled off. The solids content was adjusted to 25% w/w by addition of DPGDA.

**Preparation of coating compositions:** The dispersions of silver nanoplatelets in Laromer DPGDA, obtained in Example 3 (Comparative Example 1 and Examples 1 to 3 of the present application) or Example 4 (Comparative Examples 2 and 3 and Examples 4 to 8 of the present application) were mixed with additional components and homogenized thoroughly to obtain coating compositions. Reference is made to Tables 1 and 2.

**Preparation of coatings:** The coating compositions from Tables 1 and 2 were coated onto thus prepared substrate using K bar wired handcoater #1 heated for 10 seconds with an air-dryer at 80°C and cured with a medium pressure Hg lamp (total UV dose ca. 500 mJ/cm²). The properties of obtained coatings are shown in Tables 1 and 2.

**Table 1. Compositions and properties of coatings obtained with Ag nanoplatelets from Example 3**

| **Components and observations** | **Comparative Example 1¹⁾** | **Example 1¹⁾** | **Example 2¹⁾** | **Example 3¹⁾** |
|---|---|---|---|---|
| Ag nanoplatelets²⁾ | 10.0 | 10.0 | 9.9 | 9.9 |
| Laromer DPGDA³⁾ | 13.8 | 13.8 | 13.7 | 13.7 |
| Laromer 8863⁴⁾ | 71.4 | 71.3 | 71.1 | 70.7 |
| Omnirad 819⁵⁾ | 4.8 | 4.7 | 4.7 | 4.7 |
| Cpd. **E-1**⁶⁾ | - | **0.1** | **0.3** | **0.5** |
| Solvent of **E-1**⁷⁾ | - | 0.1 | 0.3 | 0.5 |
| Sum of components, %, w/w | 100 | 100 | 100 | 100 |
| Color on the top side of coating | dark brown | greenish-metallic | greenish-metallic | greenish-metallic |
| Color on the substrate side (observed through the foil) | greenish-metallic | greenish-metallic | greenish-metallic | greenish-metallic |
| Reflection strength on the top side of coating | 1 | 4 | 4 | 4 |
| Reflection strength on the substrate side (observed through the foil) | 3 | 3 | 3 | 3 |
| Transmission Color | magenta | magenta | magenta | magenta |
| Transmission color quality | 3 | 3 | 3 | 3 |

| | | | | |
|---|---|---|---|---|
| ¹⁾ Composition is given in weight %, based on the total weight of the composition. ²⁾ Silver nanoplatelets solids (excluding DPGDA) from Example 3. The solids include (surface) stabilizing agents, present in the dispersion and on the surface of Ag nanoplatelets. ³⁾ Dipropylene glycol diacrylate, commercially available from BASF SE. ⁴⁾ Trimethylolpropane ethoxylate (ca. 3.3 mol EO) triacrylate, commercially available from BASF SE. ⁵⁾ Omnirad^{®} 819 = phenyl-bis(2,4,6-trimethylbenzoyl)phosphine oxide. ⁶⁾ Fluorinated block copolymer cpd. **E-1.** ⁷⁾ Mixture of 1-methoxy-2-propylacetate and 1-methoxy-2-propanol described in Synthesis Example 2b. | | | | |

As can be concluded from the data in Table 1, the reflectivity of coatings is significantly improved in presence of cpd. **E-1.**

**Table 2. Compositions and properties of coatings obtained with Ag nanoplatelets from Example 4**

| Components and observations | Comp. Ex. 2¹⁾ | Ex. 4¹⁾ | Ex. 5¹⁾ | Comp. Ex. 3¹⁾ | Ex. 6¹⁾ | Ex. 7¹⁾ | Ex. 8¹⁾ |
|---|---|---|---|---|---|---|---|
| Ag nanoplatelets²⁾ | 7.8 | 7.8 | 7.8 | 9.5 | 9.4 | 9.5 | 9.5 |
| Laromer DPGDA³⁾ | 56.4 | 55.7 | 56.3 | 28.6 | 28.3 | 28.4 | 28.5 |
| UA-1⁴⁾ | 30.8 | 30.5 | 30.7 | - | - | - | - |
| Laromer 8863⁵⁾ | - | - | - | 57.1 | 56.6 | 56.8 | 57.1 |
| Omnirad 819⁶) | 5.0 | 5.0 | 5.0 | 4.8 | 4.7 | 4.7 | 4.7 |
| **Cpd. E-1**⁷) | - | **0.5** | **0.1** | - | **0.5** | **0.3** | **0.1** |
| Solvent of cpd. **E-1)⁸⁾** | - | 0.5 | 0.1 | - | 0.5 | 0.3 | 0.1 |
| Sum of components, %, w/w | 100 | 100 | 100 | 100 | 100 | 100 | 100 |
| Color on the top side of coating | gold | gold | gold | dark-blue | reddish -gold | reddish -gold | reddish -gold |
| Color on the substrate side (observed through the foil) | gold | gold | gold | dark-blue | dark-gold | dark-gold | dark-gold |
| Reflection strength on the top side of coating | 3 | 4 | 4 | 1 | 3 | 3 | 3 |
| Reflection strength on the substrate side (observed through the foil) | 3 | 3 | 3 | 1 | 2 | 2 | 2 |
| Transmission color | blue | blue | blue | blue | blue | blue | blue |
| Transmission color quality | 3 | 3 | 3 | 3 | 3 | 3 | 3 |

| | | | | | | | |
|---|---|---|---|---|---|---|---|
| ¹⁾ Composition is given in weight %, based on the total weight of the composition. ²⁾ Silver nanoplatelets solids (excluding DPGDA) from Example 4. The solids include (surface) stabilizing agents, present in the dispersion and on the surface of Ag nanoplatelets. ³⁾ Dipropylene glycol diacrylate, commercially available from BASF SE. ⁴⁾ Urethane acrylate UA-1 (excluding DPGDA) from Synthesis Example 1. ⁵⁾ Trimethylolpropane ethoxylate (ca. 3.3 mol EO) triacrylate, commercially available from BASF SE. ⁶⁾ Omnirad^{®} 819 = phenyl-bis(2,4,6-trimethylbenzoyl)phosphine oxide. ⁷⁾ Fluorinated block copolymer cpd. **E-1.** ⁸⁾ Mixture of 1-methoxy-2-propylacetate and 1-methoxy-2-propanol as described in Synthesis Example 2b. | | | | | | | |

As can be concluded from the data in Table 2, the reflectivity of coatings is significantly improved in presence of cpd. **E-1.**

Reflectivity was assessed visually according to the grayscale from 1 to 4.

Quality of transmission color was assessed visually according to the grayscale from 1 to 3. The meanings of grey scale ratings for the tests of reflectivity and transmission color quality of the coatings are summarized in Table 3.

**Table 3. Meaning of greyscale ratings for the tests of reflectivity and transmission color quality of the coatings.**

| **Rating** | **Reflection** | **Quality of Transmission Color** |
|---|---|---|
| 1 | No metallic reflection | Grey color |
| 2 | Weak colored metallic aspect | Greyish magenta (Comparative Example 1 and Examples 1 to 3) or blue (Comparative Examples 2, 3 and Examples 4 to 8) color |
| 3 | Strong colored metallic reflection | Deep magenta (Comparative Example 1 and Examples 1 to 3) or blue (Comparative Examples 2, 3 and Examples 4 to 8) color, similar to the color of particles dispersion in THF |
| 4 | Very strong colored metallic reflection | - |

## Claims

1. A radically curable composition, especially a UV-Vis radiation radically curable printing ink, comprising
(A) platelet-shaped transition metal particles, wherein the number mean diameter of the platelet-shaped transition metal particles, present in the composition, is in the range of from 15 nm to 1000 nm, as determined by the method defined in the description, the transition metal is selected from silver, copper, gold and palladium, especially silver and copper, very especially silver;
(B) one, or more reactive diluents (B);
(C) optionally one, or more oligomers (C);
(D) one, or more photonitiators (D);
(E) at least a surfactant (E), which is a block copolymer, comprising at least a block A and a block B, wherein
a) the block A comprises
a1) monomer units (A1) derived from a compound selected from alkyl (meth)acrylates, alkyl (meth)acrylamides, or any mixture thereof, and
a2) monomer units (A2) derived from a hydroxy group, or ether group containing alkyl (meth)acrylate;
b) the block B comprises monomer units (B) derived from a compound selected from fluorinated (meth)acrylic esters of formula
H₂C=CR⁴⁶(C(O)OR_{F-1}) (XX),
wherein
R⁴⁶ is H, or a methyl group; and
R_{F-1} is an organic residue containing a perfluorinated alkyl group;
(F) optionally one, or more polymeric binders; and
(G) optionally one, or more solvents;
(H) optionally further additives.

2. The radically curable composition according to claim 1, wherein the block copolymer comprises at least a block A and a block B, wherein
a) the block A comprises monomer units (A1) derived from a compound selected from C₁₋C₁₈alkyl(meth)acrylates , more preferably C₁₋C₁₀alkyl(meth)acrylates (H₂C=CR⁴⁷'(C(O)OR⁴⁹; wherein R⁴⁷' is H, or a methyl group; and R⁴⁹ is a C₁₋C₁₈alkyl group, and monomer units (A2) derived from a compound selected from a hydroxy group, or ether group containing alkyl (meth)acrylate of formula
H₂C=CR⁴⁷(C(O)OR⁴⁸) (**XXIII**),
wherein
R⁴⁷ is H, or a methyl group; and
R⁴⁸ is a hydroxyC₁₋C₈alkyl group, especially a hydroxyC₁₋C₄alkyl group, or a C₁₋C₃alkoxyC₁₋C₅alkyl group; and
b) the block B comprises monomer units (B) derived from a compound selected from fluorinated (meth)acrylic esters of formula H₂C=CR⁴⁶(C(O)O(X³)ₓ--(CF₂)ₓ₁-CF₃) (**XXa**),
wherein, R⁴⁶ is H, or a methyl group, x is 0 or 1; x1 is an integer of 2 to 17, especially 3 to 11, very especially 3 to 7; and X³ is a divalent non-fluorinated C₁₋₄alkylene group, which can be substituted or unsubstituted; x is preferably 1 and X³ is preferably -(CH₂)₁₋₄-.

3. The radically curable composition according to any of claims 1 to 3, wherein the block copolymer is represented by formula 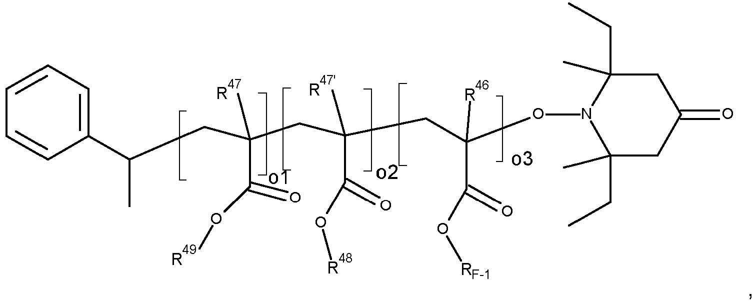 wherein o1
is 30 to 100; o2 is 10 to 40 and o3 is 1 to 15;
R_{F-1} is a group (X³)x-(CF₂)ₓ₁-CF₃, wherein x is 1, x1 is an integer 1 to 7 and X³ is -(CH₂)₁₋₄⁻;
R⁴⁶ is H, or a methyl group, especially H; R⁴⁷ is H, or a methyl group, especially H; R⁴⁷' is H, or a methyl group, especially H;
R⁴⁸ is a hydroxyC₁-C₄alkyl group;
R⁴⁹ is a C₁₋C₁₀alkyl group.

4. The radically curable composition according to any of claims 1 to 4, wherein the block copolymer is represented by formula 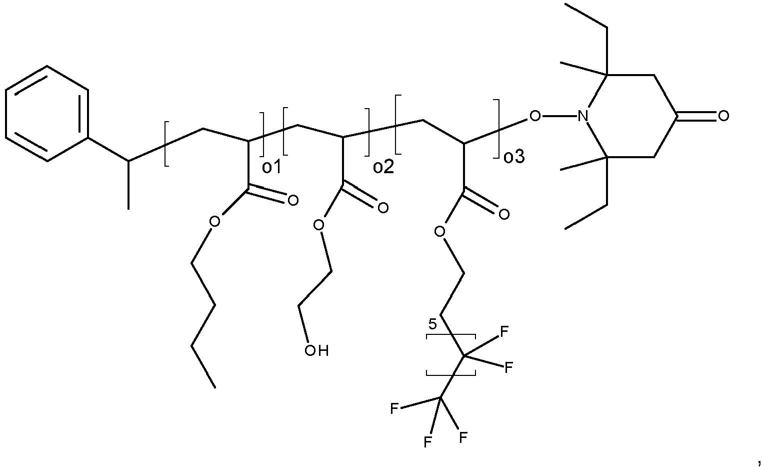 wherein
o1 is 70 to 80; o2 is 25 to 30 and o3 is 1 to 10.

5. The radically curable composition according to any of claims 1 to 3, wherein the transition metal particles are in the form of nanoplatelets and have a number mean diameter of from 20 to 600 nm and a number mean thickness of from 2 nm to 40 nm, especially a number mean diameter of from 20 nm to 300 nm and a number mean thickness of from 4 to 30 nm.

6. The radically curable composition according to any of claims 1 to 5, wherein the silver nanoplatelets bear a surface stabilizing agent on their surface, which is selected from surface stabilizing agents of formula 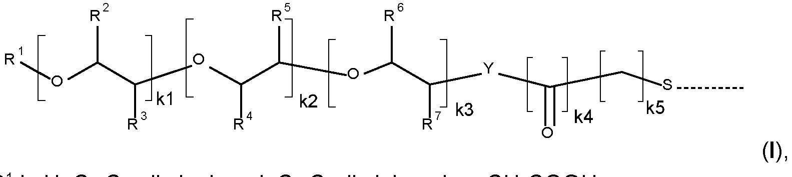 wherein
R¹ is H, C₁-C₁₈alkyl, phenyl, C₁-C₈alkylphenyl, or CH₂COOH;
R², R³, R⁴, R⁵, R⁶ and R⁷ are independently of each other H, C₁-C₈alkyl, or phenyl;
Y is O, or NR⁸;
R⁸ is H, or C₁-C₈alkyl;
k1 is an integer in the range of from 1 to 500,
k2 and k3 are independently of each other 0, or integers in the range of from 1 to 250;
k4 is 0, or 1,
k5 is an integer in the range of from 1 to 5, especially
surface stabilizing agents of formula 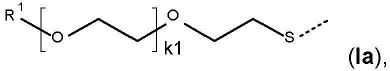 wherein
R¹ is H, or a C₁-C₈alkyl group, and
k1 is 22 to 450, especially 22 to 150; and
surface stabilizing agents, which are polymers, or copolymers, which are obtained by a process comprising the steps
**i1)** polymerizing in a first step one or more ethylenically unsaturated monomers in the presence of at least one nitroxylether having the structural element 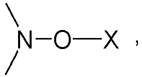 wherein **X** represents a group having at least one carbon atom and is such that the free radical X• derived from X is capable of initiating polymerization; or
**i2)** polymerizing in a first step one or more ethylenically unsaturated monomers in the presence of at least one stable free nitroxyl radical 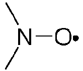 and a free radical initiator; wherein at least one monomer used in the steps **i1)** or **i2)** is a C₁-C₆alkyl or hydroxyC₁-C₆alkyl ester of acrylic or methacrylic acid; and optionally
**ii)** a second step, comprising the modification of the polymer or copolymer prepared under **i1)** or **i2)** by a transesterification reaction, an amidation, hydrolysis or anhydride modification or a combination thereof, especially copolymers represented by formula 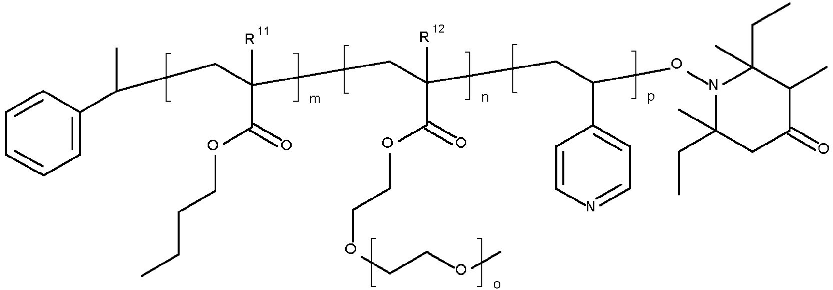
(**III**), wherein R¹¹ and R¹² are H or methyl, m, n and p are independently of each other integers from 1 to 200, o is an integer from 1 to 150, especially an integer from 1 to 149; and mixtures thereof.

7. The radically curable composition according to any of claims 1 to 6, which comprises one, or more stabilizing agents selected from the group consisting of compounds of formula 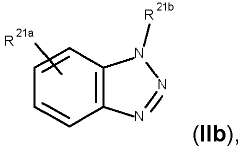 wherein
R^{21a} is a hydrogen atom, a halogen atom, a C₁-C₈alkoxy group, or a C₁-C₈alkyl group,
R^{21b} is a hydrogen atom, or a group of formula -CHR²⁴-N(R²²)(R²³),
R²² and R²³ are independently of each other a C₁-C₈alkyl, a hydroxyC₁-C₈alkyl group, or a group of formula -[(CH₂CH₂)-O]ₙ₁-CH₂CH₂-OH, wherein n1 is 1 to 5,
R²⁴ is H or C₁-C₈alkyl, and compounds of formula 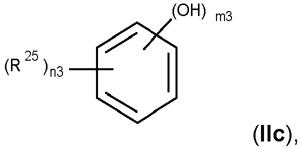
wherein
R²⁵ can be the same, or different in each occurrence and is a hydrogen atom, a halogen atom, a C₁-C₁₈alkyl group, a C₁-C₁₈alkoxy group, or a group -C(=O)-R²⁶,
R²⁶ is a hydrogen atom, a hydroxy group, a C₁-C₁₈alkyl group, unsubstituted or substituted amino group, unsubstituted or substituted phenyl group, or a C₁-C₁₈alkoxy group, and
n3 is a number of 1 to 4,
m3 is a number of 2 to 4, and
the sum of m3 and n3 is 6.

8. The radically curable composition according to any of claims 1 to 7, wherein the photoinitiator (D) is a compound of the formula 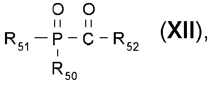 wherein
R₅₀ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄;
or R₅₀ is unsubstituted C₁-C₂₀alkyl or is C₁-C₂₀alkyl which is substituted by one or more halogen, C₁-C₁₂alkoxy, C₁-C₁₂alkylthio, NR₅₃R₅₄ or by -(CO)-O-C₁-C₂₄alkyl;
R₅₁ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄; or R₅₁ is -(CO)R'₅₂; or R₅₁ is C₁-C₁₂alkyl which is unsubstituted or substituted by one or more halogen, C₁-C₁₂alkoxy, C₁-C₁₂alkylthio, or by NR₅₃R₅₄;
R₅₂ and R'₅₂ independently of each other are unsubstituted cyclohexyl, cyclopentyl, phenyl, naphthyl or biphenylyl, or are cyclohexyl, cyclopentyl, phenyl, naphthyl or biphenylyl substituted by one or more halogen, C₁-C₄alkyl or C₁-C₄alkoxy; or R₅₂ is a 5- or 6-membered heterocyclic ring comprising an S atom or N atom;
R₅₃ and R₅₄ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₃ and R₅₄ independently of one another are C₂-C₁₂-alkenyl, cyclopentyl, cyclohexyl, benzyl or phenyl, or the photoinitiator (C) is
a compound of the formula 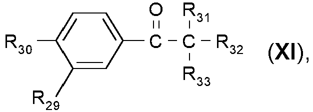 wherein
R₂₉ is hydrogen or C₁-C₁₈alkoxy;
R₃₀ is hydrogen, C₁-C₁₈alkyl, C₁-C₁₂hydroxyalkyl ,C₁-C₁₈alkoxy, OCH₂CH₂-OR₃₄, morpholino, S-C₁-C₁₈alkyl, a group -HC=CH₂, -C(CH₃)=CH₂, 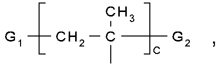 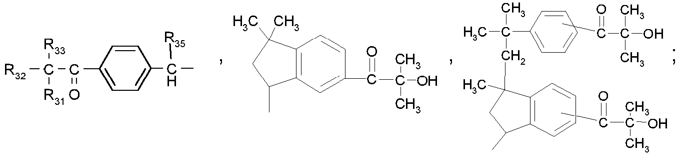 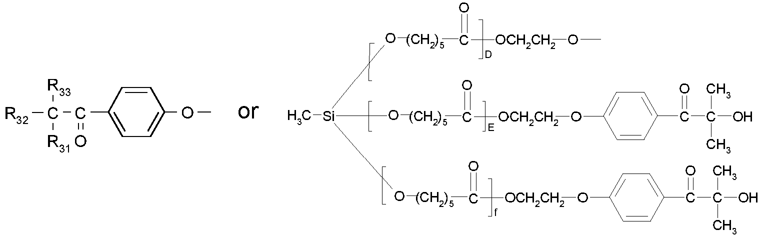
D, E and f are 1-3;
c is 2-10;
G₁ and G₂ independently of one another are end groups of the polymeric structure, preferably hydrogen or methyl;
R₃₄ is hydrogen, 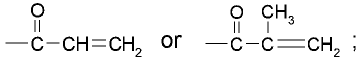
R₃₁ is hydroxy, C₁-C₁₆alkoxy, morpholino, dimethylamino
or -O(CH₂CH₂O)₉-C₁-C₁₆alkyl;
g is 1-20;
R₃₂ and R₃₃ independently of one another are hydrogen, C₁-C₆alkyl, C₁-C₁₆alkoxy or -O(CH₂CH₂O)_{g}-C₁-C₁₆alkyl; or are unsubstituted phenyl or benzyl; or phenyl or benzyl substituted by C₁-C₁₂-alkyl; or R₃₂ and R₃₃ together with the carbon atom to which they are attached form a cyclohexyl ring;
R₃₅ is hydrogen, OR₃₆ or NR₃₇R₃₈;
R₃₆ is hydrogen, C₁-C₁₂alkyl which optionally is interrupted by one or more non-consecutive O-atoms and which uninterrupted or interrupted C₁-C₁₂alkyl optionally is substituted by one or more OH,
or R₃₆ is 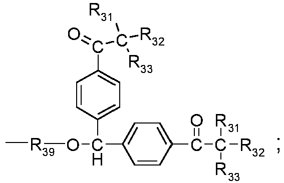
R₃₇ and R₃₈ independently of each other are hydrogen or C₁-C₁₂alkyl which is unsubstituted or is substituted by one or more OH;
R₃₉ is C₁-C₁₂alkylene which optionally is interrupted by one or more non-consecutive O, -(CO)-NH-C₁-C₁₂alkylene-NH-(CO)- or 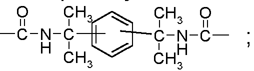
with the proviso that R₃₁, R₃₂ and R₃₃ not all together are C₁-C₁₆alkoxy or -O(CH₂CH₂O)_{g}-C₁-C₁₆alkyl, or the photoinitiator is a mixture of different compounds of the formula (**XII**), or the photoinitiator is a mixture of compounds of the formula (**XII**) and (**XI**).

9. The radically curable composition according to any of claims 1 to 8, wherein the reactive diluent(s) (B) are selected from monofunctional (meth)acrylates, difunctional (meth)acrylates, trifunctional (meth)acrylates, tetrafunctional (meth)acrylates, pentafunctional (meth)acrylates, hexafunctional (meth)acrylates, monofunctional vinylamides, monofunctional vinyl esters, monofunctional (meth)acrylamides, di(meth)acrylamides, divinyl esters, divinyl amide, trimethylolpropane formal (meth)acrylates, N-vinyloxazolidinones, N-Vinyl-caprolactam (NVC) and N-Vinylpyrrolidone (NVP) and mixtures thereof; especially the reactive diluent(s) (B) are selected from divinyladipate, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

10. The radically curable composition according to any of claims 1 to 9, wherein the oligomer(s) (C) are selected from (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers and epoxy (meth)acrylate oligomers and mixtures thereof; especially (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, very especially urethane (meth)acrylates (C), which are obtainable by reaction of the following components:
(a) at least one isocyanate having two isocyanate groups,
(b) at least one polyalkylene oxide polyether having at least 2 hydroxyl groups,
(c) at least one hydroxy-functional (meth)acrylate having one hydroxyl group and one (meth)acrylate group,
(d) at least one compound having at least one isocyanate reactive group and at least one acid function,
(e) at least one basic compound which is present for neutralization or partial neutralization of the acid groups of component (d),
(f) optionally at least one monoalcohol having one hydroxy function.

11. A security, or decorative element, comprising a substrate, which may contain indicia or other visible features in or on its surface, and on at least part of the said substrate surface, a coating, comprising the composition according to any of claims 1 to 10.

12. The security, or decorative element according to claim 11, wherein the security element, or decorative element comprises a substrate, a coating on at least a portion of the substrate comprising at least one liquid crystal compound, the coating being applied on the reverse side of the substrate if the substrate is transparent or translucent or on the surface side if the substrate is transparent, translucent, reflective or opaque and a further coating on at least a portion of the coating containing the liquid crystal compound or direct on the substrate if the coating containing the liquid crystal compound is placed on the reverse side of the substrate, the further coating is formed by the composition according to any of claims 1 to 10; or
the security element, or decorative element consists of a mutlilayer structure capable of interference, wherein the multilayer structure capable of interference has a reflection layer, a dielectric layer, and a partially transparent layer, wherein the dielectric layer is arranged between the reflection layer and the partially transparent layer, wherein the reflection layer is formed by a colored layer, comprising the composition according to any of claims 1 to 10; or
the security element, or decorative element comprises a transparent carrier substrate, a layer containing a diffractive optical element (DOE) and a semi-transparent functional layer, which is formed by the composition according to any of claims 1 to 10; or
the security, or decorative element is a blister for tablets, comprising a transparent carrier substrate that includes a semi-transparent functional layer, which is formed by the composition according to any of claims 1 to 10; or
the security, or decorative element is a packaging comprising a plastic film shaped part and a cover film, wherein said plastic film shaped part defines the front side of the packaging and the cover film defines the rear side of the packaging, and the cover film is based on a carrier substrate provided with a semi-transparent functional layer, which is formed by the composition according to any of claims 1 to 10; or
a security, or decorative element, comprising a substrate, a component with refractive index modulation, in particular a volume hologram, which is obtainable by exposing a recording material to actinic radiation and thereon a coating on at least a portion of the refractive index modulated layer, which is formed by the composition according to any of claims 1 to 10; or
a security, or decorative element, comprising a substrate, an UV lacquer layer on at least part of the substrate having on at least part of its surface a nano- or microstructure, and on at least part of the UV lacquer layer and/or on at least part of the nano- or microstructure layer a coating, which is formed by the composition according to any of claims 1 to 10; ; or
a security, or decorative element, capable of interference in the visible range of spectrum, comprising a substrate, optionally, carrying on at least part of its surface a nano- or microstructure, and on at least part of the substrate and/or on at least part of the nano- or microstructure, a coating, which is obtained with the compositions according to any of claims 1 to 10, said coating showing an interference color; or
a security or decorative element, comprising
i) a reflective layer, which is obtained with the compositions according to any of the claims 1 to 10,
ii) a transparent or translucent spacer layer and
iii) additionally a transparent or translucent layer having a refractive index differing from refractive index of said spacer layer by at least 0.1, preferably at least 0.2, most preferably at least 0.3; wherein the spacer layer ii) is located between the reflective layer i) and the layer iii) and the security, or decorative element showing an interference color.

13. A product, comprising the security or decorative element according to claims 11, or 12.

14. Use of the security or decorative element according to claim 11, or 12 for the prevention of counterfeit or reproduction, on a document of value, right, identity, a security label or a branded good.

15. A method for manufacturing of a security or decorative element, comprising the steps of:
a) providing a substrate, optionally bearing a surface relief nano- or microstructure,
b1) applying a composition according to claims 1 to 10 to at least a portion of the substrate,
b2) optionally embossing a nano- or microstructure into the coating obtained in step b1), and
c) curing the composition with actinic radiation.

## Patentansprüche

1. Radikalisch härtbare Zusammensetzung, insbesondere durch UV-Vis-Strahlung radikalisch härtbare Druckfarbe, umfassend
(A) plättchenförmige Übergangsmetallpartikel, wobei der anzahlgemittelte Durchmesser der in der Zusammensetzung vorhandenen plättchenförmigen Übergangsmetallpartikel in dem Bereich von 15 nm bis 1000 nm liegt, wie durch das in der Beschreibung definierte Verfahren bestimmt, wobei das Übergangsmetall ausgewählt ist aus Silber, Kupfer, Gold und Palladium, insbesondere Silber und Kupfer, besonders Silber;
(B) ein oder mehrere reaktive Verdünnungsmittel (B);
(C) gegebenenfalls ein oder mehrere Oligomere (C);
(D) einen oder mehrere Photoinitiatoren (D);
(E) wenigstens ein Tensid (E), das ein Blockcopolymer umfassend wenigstens einen Block A und einen Block B ist, wobei
a) der Block A umfasst
a1) Monomereinheiten (A1) abgeleitet von einer Verbindung ausgewählt aus Alkyl(meth)acrylaten, Alkyl(meth)acrylamiden und einem beliebigen Gemisch davon, und
a2) Monomereinheiten (A2) abgeleitet von einem Hydroxygruppe- oder Ethergruppe-enthaltenden Alkyl(meth)acrylat;
b) der Block B Monomereinheiten (B) abgeleitet von einer Verbindung ausgewählt aus fluorierten (Meth)acrylsäureestern der Formel
H₂C=CR⁴⁶(C(O)OR_{F-1}) (XX)
umfasst, wobei
R⁴⁶ H oder eine Methylgruppe ist; und
R_{F-1} ein organischer Rest, der eine perfluorierte Alkylgruppe enthält, ist;
(F) gegebenenfalls ein oder mehrere polymere Bindemittel; und
(G) gegebenenfalls ein oder mehrere Lösungsmittel;
(H) gegebenenfalls weitere Zusatzstoffe.

2. Radikalisch härtbare Zusammensetzung nach Anspruch 1, wobei das Blockcopolymer wenigstens einen Block A und einen Block B umfasst, wobei
a) der Block A Monomereinheiten (A1) abgeleitet von einer Verbindung ausgewählt aus C₁₋C₁₈Alkyl (meth) acrylaten, bevorzugter C₁-C₁₀Alkyl (meth) acrylaten (H₂C=CR⁴⁷' (C(O)OR⁴⁹; wobei R⁴⁷' H oder eine Methylgruppe ist; und R⁴⁹ eine C₁₋C₁₈Alkylgruppe ist, und Monomereinheiten (A2) abgeleitet von einer Verbindung ausgewählt aus einem Hydroxygruppe- oder Ethergruppe-enthaltenden Alkyl(meth)acrylat der Formel H₂C=CR⁴⁷(C(O)OR⁴⁸)(XXIII) umfasst, wobei
R⁴⁷ H oder eine Methylgruppe ist; und
R⁴⁸ eine Hydroxy-C₁₋C₈alkylgruppe, insbesondere eine Hydroxy-C₁₋C₄alkylgruppe, oder eine C₁₋C₃Alkoxy-C₁₋C₅alkylgruppe ist; und
b) der Block B Monomereinheiten (B) abgeleitet von einer Verbindung ausgewählt aus fluorierten (Meth) acrylsäureestern der Formel H₂C=CR⁴⁶(C(O)O(X³)ₓ-(CF₂)ₓ₁-CF₃) (XXa) umfasst, wobei R⁴⁶ H oder eine Methylgruppe ist, x 0 oder 1 ist; x1 eine ganze Zahl von 2 bis 17, insbesondere 3 bis 11, besonders 3 bis 7 ist; und X³ eine zweiwertige nichtfluorierte C₁₋₄Alkylengruppe ist, die substituiert oder unsubstituiert sein kann; x vorzugsweise 1 ist und X³ vorzugsweise -(CH₂)₁₋₄- ist.

3. Radikalisch härtbare Zusammensetzung nach einem der Ansprüche 1 bis 3, wobei das Blockcopolymer dargestellt wird durch die Formel 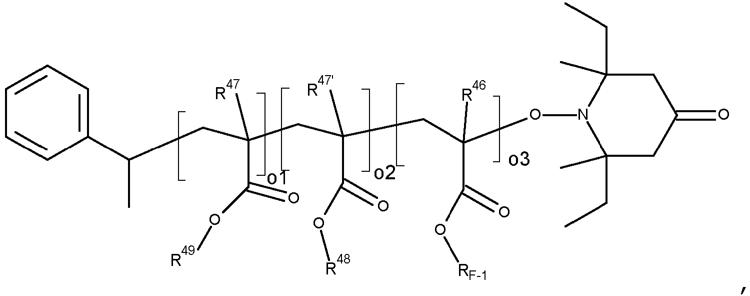
wobei o1 30 bis 100 ist; o2 10 bis 40 ist und o3 1 bis 15 ist;
R_{F-1} eine Gruppe (X³)x-(CF₂)ₓ₁-CF₃ ist, wobei x 1 ist, x1 eine ganze Zahl 1 bis 7 ist und X³ -(CH₂)₁₋₄- ist;
R⁴⁶ H oder eine Methylgruppe ist, insbesondere H; R⁴⁷ H oder eine Methylgruppe ist, insbesondere H; R⁴⁷' H oder eine Methylgruppe ist, insbesondere H;
R⁴⁸ eine Hydroxy-C₁-C₄alkylgruppe ist;
R⁴⁹ eine C₁-C₁₀Alkylgruppe ist.

4. Radikalisch härtbare Zusammensetzung nach einem der Ansprüche 1 bis 4, wobei das Blockcopolymer dargestellt wird durch die Formel 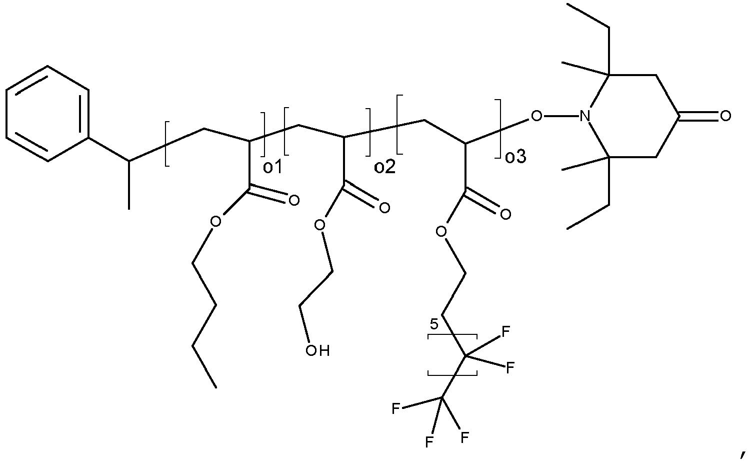 wobei o1 70 bis 80 ist; o2 25 bis 30 ist und o3 1 bis 10 ist.

5. Radikalisch härtbare Zusammensetzung nach einem der Ansprüche 1 bis 3, wobei die Übergangsmetallpartikel in Form von Nanoplättchen vorliegen und einen anzahlgemittelten Durchmesser von 20 bis 600 nm und eine anzahlgemittelte Dicke von 2 nm bis 40 nm, insbesondere einen anzahlgemittelten Durchmesser von 20 nm bis 300 nm und eine anzahlgemittelte Dicke von 4 bis 30 nm, aufweisen.

6. Radikalisch härtbare Zusammensetzung nach einem der Ansprüche 1 bis 5, wobei die Silber-Nanoplättchen auf ihrer Oberfläche ein Oberflächenstabilisierungsmittel tragen, das ausgewählt ist aus Oberflächenstabilisierungsmitteln der Formel 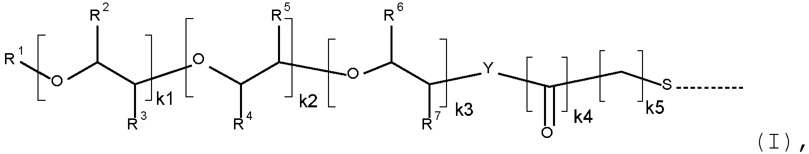 wobei
R¹ H, C₁-C₁₈Alkyl, Phenyl, C₁-C₈Alkylphenyl oder CH₂COOH ist;
R², R³, R⁴, R⁵, R⁶ und R⁷ unabhängig voneinander H, C₁-C₈Alkyl oder Phenyl sind;
Y O oder NR⁸ ist;
R⁸ H oder C₁-C₈Alkyl ist;
k1 eine ganze Zahl in dem Bereich von 1 bis 500 ist;
k2 und k3 unabhängig voneinander 0 oder ganze Zahlen in dem Bereich von 1 bis 250 sind;
k4 0 oder 1 ist;
k5 eine ganze Zahl in dem Bereich von 1 bis 5 ist, insbesondere
Oberflächenstabilisierungsmittel der Formel 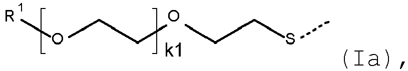 wobei
R¹ H oder eine C₁-C₈Alkylgruppe ist und
k1 22 bis 450 ist, insbesondere 22 bis 150; und Oberflächenstabilisierungsmittel, die Polymere oder Copolymere sind, die durch ein Verfahren erhalten sind, das die Schritte umfasst
i1) bei einem ersten Schritt Polymerisieren eines oder mehrerer ethylenisch ungesättigter Monomere in Gegenwart wenigstens eines Nitroxylethers mit dem Strukturelement 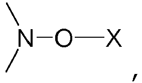
wobei X eine Gruppe mit wenigstens einem Kohlenstoffatom darstellt und so ist, dass das von X abgeleitete freie Radikal X• fähig ist, Polymerisation auszulösen; oder i2) bei einem ersten Schritt Polymerisieren eines oder mehrerer ethylenisch ungesättigter Monomere in Gegenwart wenigstens eines stabilen freien Nitroxylradikals 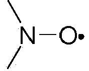 und eines Radikalinitiators;
wobei wenigstens ein bei den Schritten i1) oder i2) verwendetes Monomer ein C₁-C₆Alkyl- oder Hydroxy-C₁-C₆alkylester von Acryl- oder Methacrylsäure ist; und gegebenenfalls
ii) einen zweiten Schritt umfassend Modifizieren des bei i1) oder i2) hergestellten Polymers oder Copolymers durch eine Umesterungsreaktion, eine Amidierung, Hydrolyse oder Anhydridmodifizierung oder eine Kombination davon, insbesondere Copolymere dargestellt durch die Formel 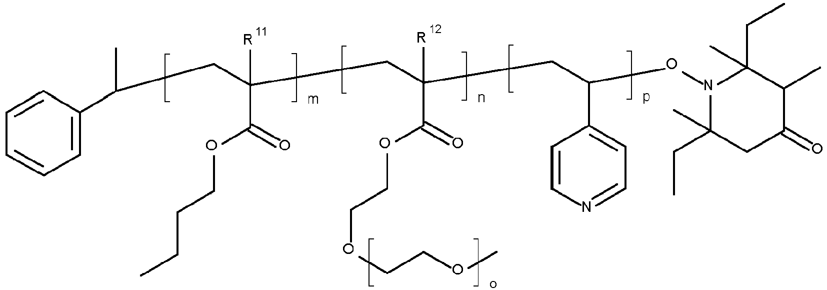
(III), wobei R¹¹ und R¹² H oder Methyl sind, m, n und p unabhängig voneinander ganze Zahlen von 1 bis 200 sind, o eine ganze Zahl von 1 bis 150 ist, insbesondere eine ganze Zahl von 1 bis 149; und Gemische davon.

7. Radikalisch härtbare Zusammensetzung nach einem der Ansprüche 1 bis 6, umfassend ein oder mehrere Stabilisierungsmittel ausgewählt aus der Gruppe bestehend aus Verbindungen der Formel 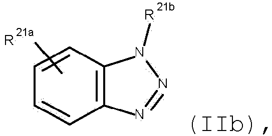 wobei
R^{21a} ein Wasserstoffatom, ein Halogenatom, eine C₁-C₈Alkoxygruppe oder eine C₁-C₈Alkylgruppe ist,
R^{21b} ein Wasserstoffatom oder eine Gruppe der Formel - CHR²⁴-N(R²²)(R²³) ist,
R²² und R²³ unabhängig voneinander eine C₁-C₈Alkyl-, eine Hydroxy-C₁-C₈alkylgruppe sind,
oder eine Gruppe der Formel -[(CH₂CH₂)-O]ₙ₁-CH₂CH₂-OH, wobei n1 1 bis 5 ist,
R²⁴ H oder C₁-C₈Alkyl ist, und Verbindungen der Formel 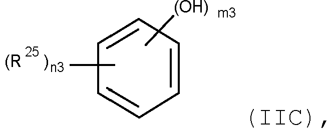 wobei
R²⁵ bei jedem Auftreten gleich oder verschieden sein kann und ein Wasserstoffatom, ein Halogenatom, eine C₁-C₁₈Alkylgruppe, eine C₁-C₁₈Alkoxygruppe oder eine Gruppe - C(=O)-R²⁶ ist,
R²⁶ ein Wasserstoffatom, eine Hydroxygruppe, eine C₁-C₁₈Alkylgruppe, eine unsubstituierte oder substituierte Aminogruppe, eine unsubstituierte oder substituierte Phenylgruppe oder eine C₁-C₁₈Alkoxygruppe ist, und
n3 eine Zahl von 1 bis 4 ist,
m3 eine Zahl von 2 bis 4 ist und
die Summe von m3 und n3 6 ist.

8. Radikalisch härtbare Zusammensetzung nach einem der Ansprüche 1 bis 7, wobei der Photoinitiator (D) eine Verbindung der Formel 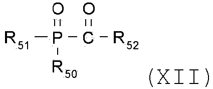 ist, wobei
R₅₀ unsubstituiertes Cyclohexyl, Cyclopentyl, Phenyl, Naphthyl oder Biphenylyl ist; oder Cyclohexyl, Cyclopentyl, Phenyl, Naphthyl oder Biphenylyl ist, das mit einem oder mehreren Halogen, C₁-C₁₂Alkyl, C₁-C₁₂Alkoxy, C₁-C₁₂Alkylthio oder mit NR₅₃R₅₄ substituiert ist;
oder R₅₀ unsubstituiertes C₁-C₂₀Alkyl ist oder C₁-C₂₀-Alkyl ist, das mit einem oder mehreren Halogen, C₁-C₁₂Alkoxy, C₁-C₁₂Alkylthio, NR₅₃R₅₄ oder mit - (CO) -O-C₁-C₂₄Alkyl substituiert ist;
R₅₁ unsubstituiertes Cyclohexyl, Cyclopentyl, Phenyl, Naphthyl oder Biphenylyl ist oder Cyclohexyl, Cyclopentyl, Phenyl, Naphthyl oder Biphenylyl ist, das mit einem oder mehreren Halogen, C₁-C₁₂Alkyl, C₁-C₁₂Alkoxy, C₁-C₁₂Alkylthio oder mit NR₅₃R₅₄ substituiert ist; oder R₅₁ -(CO)R'₅₂ ist; oder R₅₁ C₁-C₁₂Alkyl ist, das unsubstituiert oder mit einem oder mehreren Halogen, C₁-C₁₂Alkoxy, C₁-C₁₂Alkylthio oder mit NR₅₃R₅₄ substituiert ist;
R₅₂ und R'₅₂ unabhängig voneinander unsubstituiertes Cyclohexyl, Cyclopentyl, Phenyl, Naphthyl oder Biphenylyl sind oder Cyclohexyl, Cyclopentyl, Phenyl, Naphthyl oder Biphenylyl sind, das mit einem oder mehreren Halogen, C₁-C₄Alkyl oder C₁-C₄Alkoxy substituiert ist; oder R₅₂ ein 5- oder 6-gliedriger heterocyclischer Ring umfassend ein S-Atom oder ein N-Atom ist;
R₅₃ und R₅₄ unabhängig voneinander Wasserstoff, unsubstituiertes C₁-C₁₂Alkyl oder C₁-C₁₂Alkyl sind, das mit einem oder mehreren OH oder SH substituiert ist, wobei die Alkylkette gegebenenfalls durch ein bis vier Sauerstoffatome unterbrochen ist; oder R₅₃ und R₅₄ unabhängig voneinander C₂-C₁₂Alkenyl, Cyclopentyl, Cyclohexyl, Benzyl oder Phenyl sind, oder der Photoinitiator (C) eine Verbindung der Formel 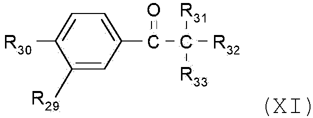 ist, wobei
R₂₉ Wasserstoff oder C₁-C₁₈Alkoxy ist;
R₃₀ Wasserstoff, C₁-C₁₈Alkyl, C₁-C₁₂Hydroxyalkyl, C₁-C₁₈Alkoxy, OCH₂CH₂-OR₃₄, Morpholino, S-C₁-C₁₈Alkyl, eine 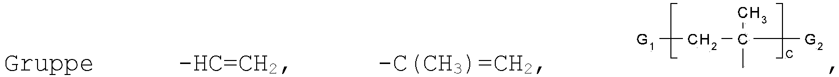 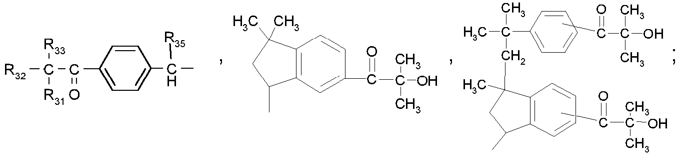 ist 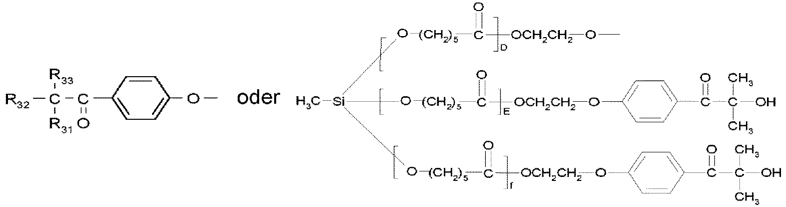 D, E und f 1-3 sind;
c 2-10 ist;
G₁ und G₂ unabhängig voneinander Endgruppen der polymeren Struktur sind, vorzugsweise Wasserstoff oder Methyl;
R₃₄ Wasserstoff, 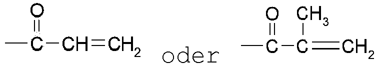 ist;
R₃₁ Hydroxy, C₁-C₁₆Alkoxy, Morpholino, Dimethylamino oder -O(CH₂CH₂O)_{g}-C₁-C₁₆Alkyl ist;
g 1-20 ist;
R₃₂ und R₃₃ unabhängig voneinander Wasserstoff, C₁-C₆Alkyl, C₁-C₁₆Alkoxy oder -O(CH₂CH₂O)_{g}-C₁-C₁₆Alkyl sind; oder unsubstituiertes Phenyl oder Benzyl sind; oder mit C₁-C₁₂Alkyl substituiertes Phenyl oder Benzyl sind; oder R₃₂ und R₃₃ zusammen mit dem Kohlenstoffatom, an das sie gebunden sind, einen Cyclohexylring bilden;
R₃₅ Wasserstoff, OR₃₆ oder NR₃₇R₃₈ ist;
R₃₆ Wasserstoff, C₁-C₁₂Alkyl ist, das gegebenenfalls durch ein oder mehrere nicht aufeinanderfolgende O-Atome unterbrochen ist, welches nicht unterbrochene oder unterbrochene C₁-C₁₂Alkyl gegebenenfalls mit einem oder mehreren OH substituiert ist,
oder R₃₆ 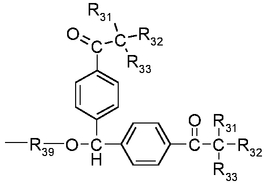 ist;
R₃₇ und R₃₈ unabhängig voneinander Wasserstoff oder C₁-C₁₂Alkyl sind, das unsubstituiert ist oder mit einem oder mehreren OH substituiert ist;
R₃₉ C₁-C₁₂Alkylen, das gegebenenfalls durch ein oder mehrere nicht aufeinanderfolgende O unterbrochen ist, - (CO) -NH-C₁-C₁₂Alkylen-NH-(CO) - oder 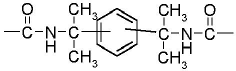 ist;
mit der Maßgabe, dass R₃₁, R₃₂ und R₃₃ nicht alle zusammen C₁-C₁₆Alkoxy
oder -O(CH₂CH₂O)_{g}-C₁-C₁₆Alkyl sind, oder der Photoinitiator ein Gemisch verschiedener Verbindungen der Formel (XII) ist oder der Photoinitiator ein Gemisch von Verbindungen der Formeln (XII) und (XI) ist.

9. Radikalisch härtbare Zusammensetzung nach einem der Ansprüche 1 bis 8, wobei das/die reaktiven Verdünnungsmittel (B) ausgewählt sind aus monofunktionellen (Meth)acrylaten, difunktionellen (Meth)acrylaten, trifunktionellen (Meth)acrylaten, tetrafunktionellen (Meth)acrylaten, pentafunktionellen (Meth)acrylaten, hexafunktionellen (Meth)acrylaten, monofunktionellen Vinylamiden, monofunktionellen Vinylestern, monofunktionellen (Meth)acrylamiden, Di(meth)acrylamiden, Divinylestern, Divinylamid, Trimethylolpropanformal(meth)acrylaten, N-Vinyloxazolidinonen, N-Vinylcaprolactam (NVC) und N-Vinylpyrrolidon (NVP) und Gemischen davon; insbesondere das/die reaktiven Verdünnungsmittel (B) ausgewählt sind aus Divinyladipat, Dipropylenglycoldiacrylat, Tripropylenglycoldiacrylat, Dipropylenglycoldimethacrylat, Diethylenglycoldiacrylat, Triethylenglycoldiacrylat, Diethylenglycoldimethacrylat, Triethylenglycoldimethacrylat, Butandioldiacrylat, Butandioldimethacrylat, Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Cyclohexandioldiacrylat, Cyclohexandioldimethacrylat, Cyclohexandimethanoldiacrylat, Cyclohexandimethanoldimethacrylat, (ethoxyliertem) Neopentylglycoldiacrylat, (propoxyliertem) Neopentylglycoldiacrylat, (ethoxyliertem) Neopentylglycoldimethacrylat, (propoxyliertem) Neopentylglycoldimethacrylat, Trimethylolpropantriacrylat (TMPTA), Trimethylolpropantrimethacrylat (TMPTMA), ethoxylierten Trimethylolpropantriacrylaten, ethoxylierten Trimethylolpropantrimethacrylaten, propoxylierten Trimethylolpropantriacrylaten, propoxylierten Trimethylolpropantrimethacrylaten, ethoxylierten Glycerintriacrylaten, ethoxylierten Glycerintrimethacrylaten, propoxylierten Glycerintriacrylaten, propoxylierten Glycerintrimethacrylaten, Bistrimethylolpropantetraacrylat, Bistrimethylolpropantetramethacrylat, ethoxylierten Bistrimethylolpropantetraacrylaten, propoxylierten Bistrimethylolpropantetraacrylaten, Pentaerythrittetraacrylat, Pentaerythrittetramethacrylat, ethoxylierten Pentaerythrittetraacrylaten, ethoxylierten Pentaerythrittetramethacrylaten, propoxylierten Pentaerythrittetraacrylaten, propoxylierten Pentaerythrittetramethacrylaten, Dipentaerythrithexaacrylat, ethoxylierten Dipentaerythrithexaacrylaten, propoxylierten Dipentaerythrithexaacrylaten und Gemischen davon.

10. Radikalisch härtbare Zusammensetzung nach einem der Ansprüche 1 bis 9, wobei das/die Oligomere (C) ausgewählt sind aus (Meth)acryloligomeren, Urethan(meth)acrylatoligomeren, Polyester(meth)acrylatoligomeren, (Meth)acrylatoligomeren auf Polyetherbasis, aminmodifizierten (Meth)acrylatoligomeren auf Polyetherbasis und Epoxy(meth)acrylatoligomeren, bevorzugter Urethan(meth)acrylatoligomeren und Epoxy(meth)acrylatoligomeren und Gemischen davon; insbesondere (Meth)acryloligomeren, Urethan(Meth)acrylatoligomeren, Polyester(meth)acrylatoligomeren, (Meth)acrylatoligomeren auf Polyetherbasis, aminmodifizierten (Meth)acrylatoligomeren auf Polyetherbasis oder Epoxy(meth)acrylatoligomeren, besonders Urethan(meth)acrylaten (C), die durch Umsetzung der folgenden Komponenten erhältlich sind:
(a) wenigstens ein Isocyanat mit zwei Isocyanatgruppen,
(b) wenigstens ein Polyalkylenoxidpolyether mit wenigstens 2 Hydroxygruppen,
(c) wenigstens ein hydroxyfunktionelles (Meth)acrylat mit einer Hydroxygruppe und einer (Meth)acrylatgruppe,
(d) wenigstens eine Verbindung mit wenigstens einer isocyanatreaktiven Gruppe und wenigstens einer Säurefunktion,
(e) wenigstens eine basische Verbindung, die zur Neutralisation oder teilweisen Neutralisation der Säuregruppen der Komponente (d) vorhanden ist,
(f) gegebenenfalls wenigstens ein Monoalkohol mit einer Hydroxyfunktion.

11. Sicherheits- oder Dekorelement, umfassend ein Substrat, das Zeichen oder andere sichtbare Merkmale in oder auf seiner Oberfläche enthalten kann, und auf wenigstens einem Teil der Substratoberfläche eine Beschichtung umfassend die Zusammensetzung nach einem der Ansprüche 1 bis 10.

12. Sicherheits- oder Dekorelement nach Anspruch 11, wobei das Sicherheitselement oder Dekorelement ein Substrat umfasst, wobei eine Beschichtung auf wenigstens einem Teil des Substrats wenigstens eine Flüssigkristallverbindung umfasst, wobei die Beschichtung auf der Rückseite des Substrats aufgebracht ist, wenn das Substrat transparent oder lichtdurchlässig ist, oder auf der Oberflächenseite, wenn das Substrat transparent, lichtdurchlässig, reflektierend oder lichtundurchlässig ist, und eine weitere Beschichtung auf wenigstens einem Teil der Beschichtung, die die Flüssigkristallverbindung enthält, oder direkt auf dem Substrat, wenn die Beschichtung, die die Flüssigkristallverbindung enthält, auf der Rückseite des Substrats angeordnet ist, wobei die weitere Beschichtung von der Zusammensetzung nach einem der Ansprüche 1 bis 10 gebildet ist; oder
das Sicherheitselement oder Dekorelement aus einer interferenzfähigen Mehrschichtstruktur besteht, wobei die interferenzfähige Mehrschichtstruktur eine Reflexionsschicht, eine dielektrische Schicht und eine teilweise transparente Schicht aufweist, wobei die dielektrische Schicht zwischen der Reflexionsschicht und der teilweise transparenten Schicht angeordnet ist, wobei die Reflexionsschicht von einer Farbschicht gebildet ist, die die Zusammensetzung nach einem der Ansprüche 1 bis 10 umfasst; oder
das Sicherheitselement oder Dekorelement ein transparentes Trägersubstrat, eine Schicht, die ein diffraktives optisches Element (DOE) enthält, und eine halbtransparente Funktionsschicht, die von der Zusammensetzung nach einem der Ansprüche 1 bis 10 gebildet ist, umfasst; oder
das Sicherheits- oder Dekorelement ein Blister für Tabletten ist, der ein transparentes Trägersubstrat umfasst, das eine halbtransparente Funktionsschicht enthält, die von der Zusammensetzung nach einem der Ansprüche 1 bis 10 gebildet ist; oder
das Sicherheits- oder Dekorelement eine Verpackung ist, die einen folienförmigen Kunststoffteil und eine Abdeckfolie umfasst, wobei der folienförmige Kunststoffteil die Vorderseite der Verpackung definiert und die Abdeckfolie die Rückseite der Verpackung definiert, und die Abdeckfolie auf der Grundlage eines Trägersubstrats steht, das mit einer halbtransparenten Funktionsschicht versehen ist, die von der Zusammensetzung nach einem der Ansprüche 1 bis 10 gebildet ist; oder
Sicherheits- oder Dekorelement, umfassend ein Substrat, eine Komponente mit Brechungsindexmodulation,
insbesondere ein Volumenhologramm, das erhältlich ist durch Exponieren eines Aufzeichnungsmaterials gegenüber aktinischer Strahlung, und darauf eine Beschichtung auf wenigstens einem Teil der Brechungsindexmodulationsschicht, die von der Zusammensetzung nach einem der Ansprüche 1 bis 10 gebildet ist; oder
Sicherheits- oder Dekorelement, umfassend ein Substrat, eine UV-Lackschicht auf wenigstens einem Teil des Substrats, das auf wenigstens einem Teil seiner Oberfläche eine Nano- oder Mikrostruktur aufweist, und auf wenigstens einem Teil der UV-Lackschicht und/oder auf wenigstens einem Teil der Nano- oder Mikrostrukturschicht eine Beschichtung, die von der Zusammensetzung nach einem der Ansprüche 1 bis 10 gebildet ist; oder
Sicherheits- oder Dekorelement, fähig zur Interferenz in dem sichtbaren Spektralbereich, umfassend ein Substrat, das gegebenenfalls auf wenigstens einem Teil seiner Oberfläche eine Nano- oder Mikrostruktur trägt, und auf wenigstens einem Teil des Substrats und/oder auf wenigstens einem Teil der Nano- oder Mikrostruktur eine Beschichtung, die mit den Zusammensetzungen nach einem der Ansprüche 1 bis 10 erhalten ist, wobei die Beschichtung eine Interferenzfarbe zeigt; oder
Sicherheits- oder Dekorelement umfassend
i) eine reflektierende Schicht, die mit den Zusammensetzungen nach einem der Ansprüche 1 bis 10 erhalten ist,
ii) eine transparente oder lichtdurchlässige Abstandsschicht und
iii) zusätzlich eine transparente oder lichtdurchlässige Schicht mit einem Brechungsindex, der sich von dem Brechungsindex der Abstandshalterschicht um wenigstens 0,1, vorzugsweise wenigstens 0,2, höchst bevorzugt wenigstens 0,3 unterscheidet; wobei die Abstandshalterschicht ii) zwischen der reflektierenden Schicht i) und der Schicht iii) und dem Sicherheits- oder Dekorelement, das eine Interferenzfarbe zeigt, angeordnet ist.

13. Produkt, umfassend das Sicherheits- oder Dekorelement nach Ansprüchen 11 oder 12.

14. Verwendung des Sicherheits- oder Dekorelements nach Anspruch 11 oder 12 zum Verhindern von Fälschung oder Vervielfältigung auf einem Wert-, Rechts-, Identitätdokument, einem Sicherheitsetikett oder einer Markenware.

15. Verfahren zur Herstellung eines Sicherheits- oder Dekorelements, umfassend die Schritte:
a) Bereitstellen eines Substrats, das gegebenenfalls eine Oberflächenrelief-Nano- oder Mikrostruktur trägt,
b1) Aufbringen einer Zusammensetzung nach Ansprüchen 1 bis 10 auf wenigstens einen Teil des Substrats,
b2) gegebenenfalls Prägen einer Nano- oder Mikrostruktur in die bei Schritt b1) erhaltene Beschichtung und
c) Härten der Zusammensetzung mit aktinischer Strahlung.

## Revendications

1. Composition durcissable par voie radicalaire, en particulier encre d'impression durcissable par voie radicalaire par rayonnement UV-Vis, comprenant
(A) des particules de métal de transition en forme de plaquettes, dans laquelle le diamètre moyen en nombre des particules de métal de transition en forme de plaquettes, présentes dans la composition, est dans la plage de 15 nm à 1 000 nm, comme déterminé par le procédé défini dans la description, le métal de transition étant choisi parmi l'argent, le cuivre, l'or et le palladium, en particulier l'argent et le cuivre, en particulier l'argent ;
(B) un, ou plusieurs diluants réactifs (B) ;
(C) éventuellement un, ou plusieurs oligomères (C) ;
(D) un, ou plusieurs photoinitiateurs (D) ;
(E) au moins un tensioactif (E), qui est un copolymère séquencé, comprenant au moins un bloc A et un bloc B, dans laquelle
a) le bloc A comprend
a1) des motifs monomériques (A1) dérivés d'un composé choisi parmi les (méth)acrylates d'alkyle, les alkyl(méth)acrylamides, ou tout mélange correspondant, et
a2) des motifs monomériques (A2) dérivés d'un (méth)acrylate d'alkyle contenant un groupe hydroxy ou un groupe éther ;
b) le bloc B comprend des motifs monomériques (B) dérivés d'un composé choisi parmi les esters (méth)acryliques fluorés de formule
H₂C=CR⁴⁶(C(O)OR_{F-1}) (XX),
dans laquelle
R^{N} est H, ou un groupe méthyle ; et
R_{F-1} est un radical organique contenant un groupe alkyle perfluoré ;
(F) éventuellement un, ou plusieurs liants polymériques ; et
(G) éventuellement un, ou plusieurs solvants ;
(H) éventuellement d'autres additifs.

2. Composition durcissable par voie radicalaire selon la revendication 1, dans laquelle le copolymère séquencé comprend au moins un bloc A et un bloc B, dans laquelle
a) le bloc A comprend des motifs monomériques (A1) dérivés d'un composé choisi parmi des (méth)acrylates de C₁₋C₁₈alkyle, plus préférablement des (méth)acrylates de C₁-C₁₀alkyle (H₂C=CR⁴⁷' (C(O)OR⁴⁹ ; dans laquelle R⁴⁷' est H, ou un groupe méthyle ; et R⁴⁹ est un groupe C₁₋C₁₈alkyle, et des motifs monomériques (A2) dérivés d'un composé choisi parmi un (méth)acrylate d'alkyle contenant un groupe hydroxy ou un groupe éther de formule
H₂C=CR⁴⁷(C(O)OR⁴⁸) (XXIII),
dans laquelle
R⁴⁷ est H, ou un groupe méthyle ; et
R⁴⁸ est un groupe hydroxyC₁₋C₈alkyle, en particulier un groupe hydroxyC₁₋C₄alkyle, ou un groupe C₁₋C₃alcoxyC₁₋C₅alkyle ; et
b) le bloc B comprend des motifs monomériques (B) dérivés d'un composé choisi parmi des esters (méth)acryliques fluorés de formule H₂C=CR⁴⁶(C(O)O(X³)ₓ-(CF₂)ₓ₁-CF₃) (XXa), dans laquelle, R⁴⁶ est H, ou un groupe méthyle, x est 0 ou 1 ; x1 est un entier de 2 à 17, en particulier 3 à 11, en particulier 3 à 7 ; et X³ est un groupe C₁₋₄alkylène divalent non fluoré, qui peut être substitué ou non substitué ; x est préférablement 1 et X³ est préférablement -(CH₂)₁₋₄-.

3. Composition durcissable par voie radicalaire selon l'une quelconque des revendications 1 à 3, dans laquelle le copolymère séquencé est représenté par la formule 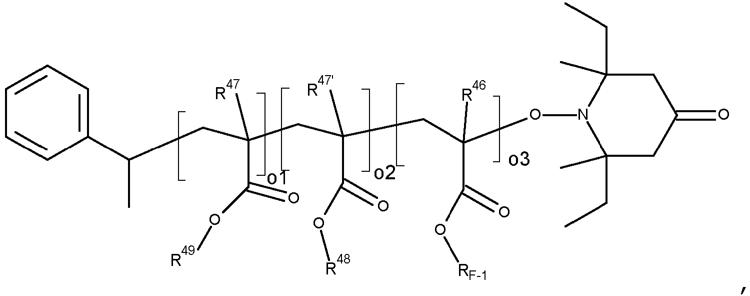 dans
laquelle o1 est 30 à 100 ; o2 est 10 à 40 et o3 est 1 à 15 ;
R_{F-1} est un groupe (X³)x-(CF₂)ₓ₁-CF₃, dans laquelle x est 1, x1 est un entier de 1 à 7 et X³ est -(CH₂)₁₋₄- ;
R⁴⁶ est H, ou un groupe méthyle, en particulier H ; R⁴⁷ est H, ou un groupe méthyle, en particulier H ; R^{47'} est H, ou un groupe méthyle, en particulier H ;
R⁴⁸ est un groupe hydroxyC₁₋C₄alkyle ;
R⁴⁹ est un groupe C₁₋C₁₀alkyle.

4. Composition durcissable par voie radicalaire selon l'une quelconque des revendications 1 à 4, dans laquelle le copolymère séquencé est représenté par la formule 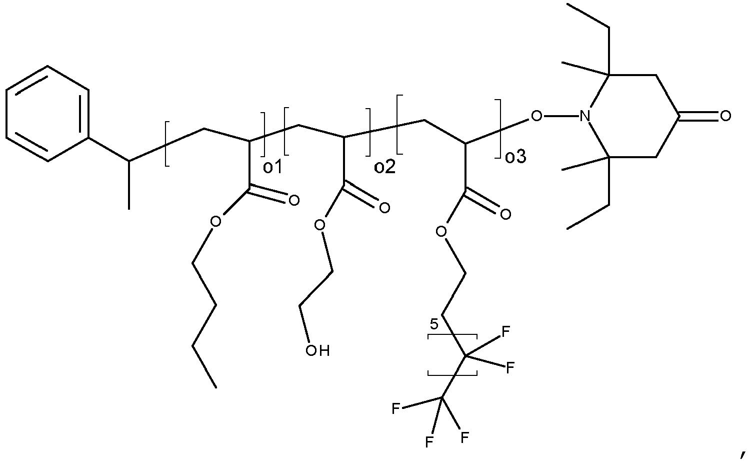 dans
laquelle o1 est 70 à 80 ; o2 est 25 à 30 et o3 est 1 à 10.

5. Composition durcissable par voie radicalaire selon l'une quelconque des revendications 1 à 3, dans laquelle les particules de métal de transition sont sous forme de nanoplaquettes et présentent un diamètre moyen en nombre de 20 à 600 nm et une épaisseur moyenne en nombre de 2 nm à 40 nm, en particulier un diamètre moyen en nombre de 20 nm à 300 nm et une épaisseur moyenne en nombre de 4 à 30 nm.

6. Composition durcissable par voie radicalaire selon l'une quelconque des revendications 1 à 5, dans laquelle les nanoplaquettes d'argent portent un agent stabilisant de surface sur leur surface, qui est choisi parmi les agents stabilisants de surface de formule 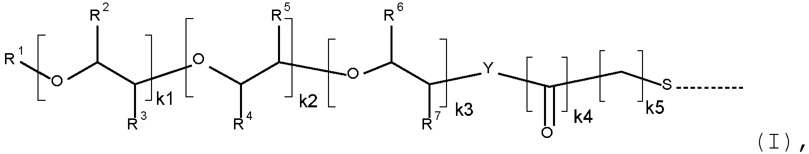 dans laquelle
R¹ est H, C₁₋C₁₈alkyle, phényle, C₁-C₈alkylphényle, ou CH₂COOH ;
R², R³, R⁴, R⁵, R⁶ et R⁷ sont indépendamment les uns des autres H, C₁-C₈alkyle, ou phényle ;
Y est O, ou NR⁸ ;
R⁸ est H, ou C₁-C₈alkyle ;
k1 est un entier dans la plage allant de 1 à 500,
k2 et k3 sont indépendamment les uns des autres 0, ou des entiers dans la plage allant de 1 à 250 ;
k4 est 0, ou 1,
k5 est un entier dans la plage allant de 1 à 5, en particulier
des agents stabilisants de surface de formule 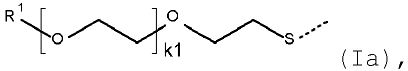 dans laquelle
R¹ est H, ou un groupe C₁-C₈alkyle, et
k1 est 22 à 450, en particulier 22 à 150 ; et
des agents stabilisants de surface, qui sont des polymères, ou des copolymères, qui sont obtenus par un procédé comprenant les étapes
i1) polymérisation dans une première étape d'un ou plusieurs monomères éthyléniquement insaturés en la présence d'au moins un nitroxyléther ayant l'élément structural 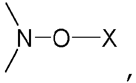 dans lequel X représente un groupe ayant au moins un atome de carbone et est tel que le radical libre X• dérivé de X est capable d'initier une polymérisation ; ou
i2) polymérisation dans une première étape d'un ou plusieurs monomères éthyléniquement insaturés en la présence d'au moins un radical nitroxyle libre stable 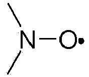 et un initiateur de radicaux libres ;
dans laquelle au moins un monomère utilisé dans les étapes i1) ou i2) est un ester de C₁-C₆alkyle ou d'hydroxyC₁-C₆alkyle d'acide acrylique ou méthacrylique ; et éventuellement
ii) une deuxième étape, comprenant la modification du polymère ou copolymère préparé en i1) ou i2) par une réaction de transestérification, une amidation, une hydrolyse ou une modification par un anhydride ou une combinaison correspondante, en particulier de copolymères représentés par la formule 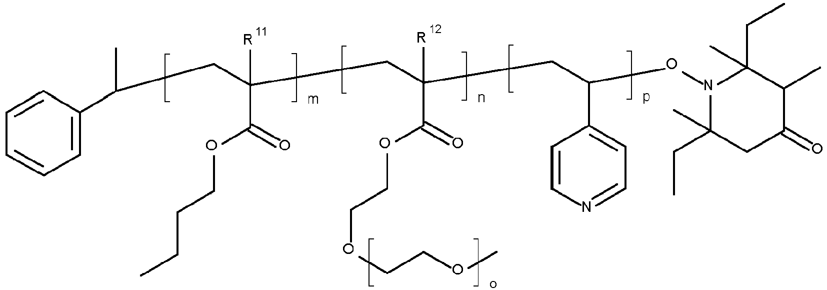
(III), dans laquelle R¹¹ et R¹² sont H ou méthyle, m, n et p sont indépendamment les uns des autres des entiers de 1 à 200, o est un entier de 1 à 150, en particulier un entier de 1 à 149 ; et des mélanges correspondants.

7. Composition durcissable par voie radicalaire selon l'une quelconque des revendications 1 à 6, qui comprend un, ou plusieurs agents stabilisants choisis dans le groupe constitué par les composés de formule 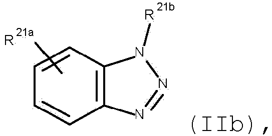 dans laquelle
R^{21a} est un atome d'hydrogène, un atome d'halogène, un groupe C₁-C₈alcoxy, ou un groupe C₁-C₈alkyle,
R^{21b} est un atome d'hydrogène, ou un groupe de formule - CHR²⁴-N(R²²)(R²³),
R²² et R²³ sont indépendamment les uns des autres un groupe C₁-C₈alkyle, un groupe hydroxyC₁-C₈alkyle,
ou un groupe de formule -[(CH₂CH₂)-O]ₙ₁-CH₂CH₂-OH, dans laquelle n1 est 1 à 5,
R²⁴ est H ou C₁-C₈alkyle, et des composés de formule 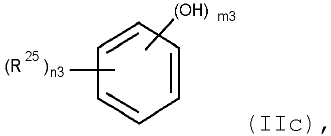 dans laquelle
R²⁵ peut être identique ou différent en chaque occurrence et est un atome d'hydrogène, un atome d'halogène, un groupe C₁-C₁₈alkyle, un groupe C₁-C₁₈alcoxy, ou un groupe -C(=O)-R²⁶,
R²⁶ est un atome d'hydrogène, un groupe hydroxy, un groupe C₁₋C₁₈alkyle, un groupe amino non substitué ou substitué, un groupe phényle non substitué ou substitué, ou un groupe C₁-C₁₈alcoxy, et
n3 est un nombre de 1 à 4,
m3 est un nombre de 2 à 4, et
la somme de m3 et n3 est 6.

8. Composition durcissable par voie radicalaire selon l'une quelconque des revendications 1 à 7, dans laquelle le photoinitiateur (D) est un composé de la formule 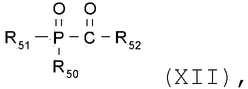 dans laquelle
R₅₀ est cyclohexyle, cyclopentyle, phényle, naphtyle ou biphénylyle non substitué ; ou est cyclohexyle, cyclopentyle, phényle, naphtyle ou biphénylyle substitué par un ou plusieurs halogène, C₁-C₁₂alkyle, C₁-C₁₂alcoxy, C₁-C₁₂alkylthio ou par NR₅₃R₅₄ ;
ou R₅₀ est C₁-C₂₀alkyle non substitué ou est C₁-C₂₀alkyle qui est substitué par un ou plusieurs halogène, C₁-C₁₂alcoxy, C₁-C₁₂alkylthio, NR₅₃R₅₄ ou par -(CO)-O-C₁-C₂₄alkyle ;
R₅₁ est cyclohexyle, cyclopentyle, phényle, naphtyle ou biphénylyle non substitué ; ou est cyclohexyle, cyclopentyle, phényle, naphtyle ou biphénylyle substitué par un ou plusieurs halogène, C₁-C₁₂alkyle, C₁-C₁₂alcoxy, C₁-C₁₂alkylthio ou par NR₅₃R₅₄ ; ou R₅₁ est -(CO)R'₅₂ ; ou R₅₁ est C₁-C₁₂alkyle qui est non substitué ou substitué par un ou plusieurs halogène, C₁-C₁₂alcoxy, C₁-C₁₂alkylthio, ou par NR₅₃R₅₄ ;
R₅₂ et R'₅₂ indépendamment l'un de l'autre sont cyclohexyle, cyclopentyle, phényle, naphtyle ou biphénylyle non substitué, ou sont cyclohexyle, cyclopentyle, phényle, naphtyle ou biphénylyle substitué par un ou plusieurs halogène, C₁-C₄alkyle ou C₁-C₄alcoxy ; ou R₅₂ est un cycle hétérocyclique à 5 ou 6 chaînons comprenant un atome de S ou un atome de N ;
R₅₃ et R₅₄ indépendamment l'un de l'autre sont hydrogène, C₁-C₁₂alkyle non substitué ou C₁-C₁₂alkyle substitué par un ou plusieurs OH ou SH dans laquelle la chaîne alkyle est éventuellement interrompue par un à quatre atomes d'oxygène ; ou R₅₃ et R₅₄ indépendamment l'un de l'autre sont C₂-C₁₂-alcényle, cyclopentyle, cyclohexyle, benzyle ou phényle, ou le photoinitiateur (C) est un composé de la formule 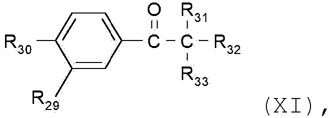 dans laquelle
R₂₉ est hydrogène ou C₁-C₁₈alcoxy ;
R₃₀ est hydrogène, C₁₋C₁₈alkyle, C₁-C₁₂hydroxyalkyle, C₁-C₁₈alcoxy, OCH₂CH₂-OR₃₄, morpholino, S-C₁-C₁₈alkyle, un groupe -HC=CH₂, -C(CH₃)=CH₂, 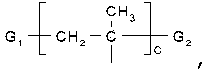 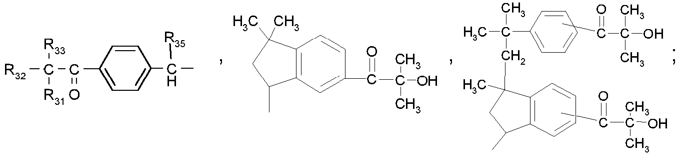 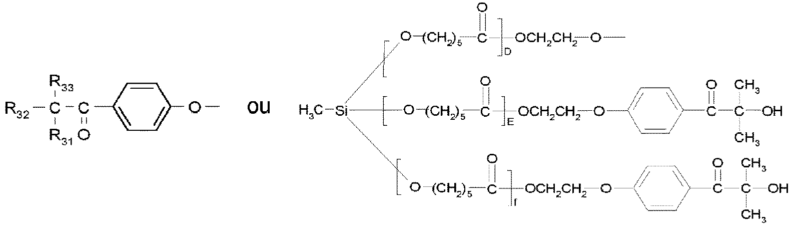
D, E et f sont 1-3 ;
c est 2-10 ;
G₁ et G₂ indépendamment l'un de l'autre sont des groupes terminaux de la structure polymérique, préférablement hydrogène ou méthyle ;
R₃₄ est hydrogène, 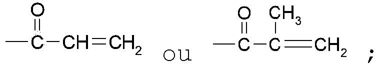
R₃₁ est hydroxy, C₁-C₁₆alcoxy, morpholino, diméthylamino ou -O(CH₂CH₂O)_{g}-C₁-C₁₆alkyle ;
g est 1-20 ;
R₃₂ et R₃₃ indépendamment l'un de l'autre sont hydrogène, C₁-C₆alkyle, C₁-C₁₆alcoxy ou -O(CH₂CH₂O)_{g}-C₁-C₁₆alkyle ; ou sont phényle ou benzyle non substitué ; ou phényle ou benzyle substitué par C₁-C₁₂-alkyle ; ou R₃₂ et R₃₃ conjointement avec l'atome de carbone auxquels ils sont fixés forment un cycle cyclohexyle ;
R₃₅ est hydrogène, OR₃₆ ou NR₃₇R₃₈ ;
R₃₆ est hydrogène, C₁-C₁₂alkyle qui est éventuellement interrompu par un ou plusieurs atomes de O non consécutifs et lequel C₁-C₁₂alkyle non interrompu ou interrompu éventuellement est substitué par un ou plusieurs OH,
ou R₃₆ est 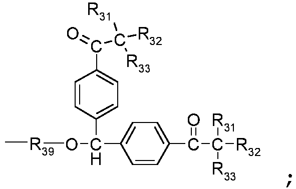
R₃₇ et R₃₈ indépendamment l'un de l'autre sont hydrogène ou C₁-C₁₂alkyle qui est non substitué ou est substitué par un ou plusieurs OH ;
R₃₉ est C₁-C₁₂alkylène qui est éventuellement interrompu par un ou plusieurs O non consécutifs, -(CO)-NH-C₁-C₁₂alkylène-NH- (CO)- ou 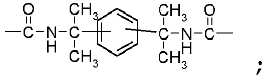
à la condition que R₃₁, R₃₂ et R₃₃ ne soient pas tous ensemble C₁-C₁₆alcoxy
ou -O(CH₂CH₂O)_{g}-C₁-C₁₆alkyle, ou le photoinitiateur est un mélange de différents composés de la formule (XII), ou le photoinitiateur est un mélange de composés de la formule (XII) et (XI).

9. Composition durcissable par voie radicalaire selon l'une quelconque des revendications 1 à 8, dans laquelle le ou les diluants réactifs (B) sont choisis parmi des (méth)acrylates monofonctionnels, (méth)acrylates difonctionnels, (méth)acrylates trifonctionnels, (méth)acrylates tétrafonctionnels, (méth)acrylates pentafonctionnels, (méth)acrylates hexafonctionnels, vinylamides monofonctionnels, esters vinyliques monofonctionnels, (méth)acrylamides monofonctionnels, di(méth)acrylamides, esters divinyliques, divinylamide, (méth)acrylates de triméthylolpropane formal, N-vinyloxazolidinones, N-vinylcaprolactame (NVC) et N-vinylpyrrolidone (NVP) et des mélanges correspondants ; en particulier le ou les diluants réactifs (B) sont choisis parmi l'adipate de divinyle, diacrylate de dipropylène glycol, diacrylate de tripropylène glycol, diméthacrylate de dipropylène glycol, diméthacrylate de tripropylène glycol, diacrylate de diéthylène glycol, diacrylate de triéthylène glycol, diméthacrylate de diéthylène glycol, diméthacrylate de triéthylène glycol, diacrylate de butanediol, diméthacrylate de butanediol, diacrylate d'hexanediol, diméthacrylate d'hexanediol, diacrylate d'octanediol, diméthacrylate d'octanediol, diacrylate de nonanediol, diméthacrylate de nonanediol, diacrylate de décanediol, diméthacrylate de décanediol, diacrylate de cyclohexanediol, diméthacrylate de cyclohexanediol, diacrylate de cyclohexanediméthanol, diméthacrylate de cyclohexanediméthanol, diacrylate de néopentylglycol (éthoxylé), diacrylate de néopentylglycol (propoxylé), diméthacrylate de néopentylglycol (éthoxylé), diméthacrylate de néopentylglycol (propoxylé), triacrylate de triméthylolpropane (TMPTA), triméthacrylate de triméthylolpropane (TMPTMA), triacrylates de triméthylolpropane éthoxylés, triméthacrylates de triméthylolpropane éthoxylés, triacrylates de triméthylolpropane propoxylés, triméthacrylates de triméthylolpropane propoxylés, triacrylates de glycérol éthoxylés, triméthacrylates de glycérol éthoxylés, triacrylates de glycérol propoxylés, triméthacrylates de glycérol propoxylés, tétraacrylate de bistriméthylolpropane, tétraméthacrylate de bistriméthylolpropane, tétraacrylates de bistriméthylolpropane éthoxylés, tétraacrylates de bistriméthylolpropane propoxylés, tétraacrylate de pentaérythritol, tétraméthacrylate de pentaérythritol, tétraacrylates de pentaérythritol éthoxylés, tétraméthacrylates de pentaérythritol éthoxylés, tétraacrylates de pentaérythritol propoxylés, tétraméthacrylates de pentaérythritol propoxylés, hexaacrylate de dipentaérythritol, hexaacrylates de dipentaérythritol éthoxylés, hexaacrylates de dipentaérythritol propoxylés et des mélanges correspondants.

10. Composition durcissable par voie radicalaire selon l'une quelconque des revendications 1 à 9, dans laquelle le ou les oligomères (C) sont choisis parmi les oligomères (méth)acryliques, les oligomères de (méth)acrylates d'uréthane, les oligomères de (méth)acrylates de polyester, les oligomères de (méth)acrylates de polyéther, les oligomères de (méth)acrylates à base de polyéther modifié par une amine ou les oligomères de (méth)acrylates d'époxy, plus préférablement les oligomères de (méth)acrylates d'uréthane et les oligomères de (méth)acrylates d'époxy et les mélanges correspondants ; en particulier les oligomères (méth)acryliques, les oligomères de (méth)acrylates d'uréthane, les oligomères de (méth)acrylates de polyester, les oligomères de (méth)acrylates à base de polyéther, les oligomères de (méth)acrylates à base de polyéther modifié par une amine ou les oligomères de (méth)acrylate d'époxy, en particulier les (méth)acrylates d'uréthane (C), qui peuvent être obtenus par réaction des composants suivants :
(a) au moins un isocyanate ayant deux groupes isocyanate,
(b) au moins un poly(oxyde d'alkylène) polyéther ayant au moins 2 groupes hydroxyle,
(c) au moins un (méth)acrylate fonctionnalisé par hydroxy ayant un groupe hydroxyle et un groupe (méth)acrylate,
(d) au moins un composé ayant au moins un groupe réactif isocyanate et au moins une fonction acide,
(e) au moins un composé basique qui est présent pour la neutralisation ou la neutralisation partielle des groupes acide du composant (d) ;
(f) éventuellement au moins un monoalcool ayant une fonction hydroxy.

11. Élément de sécurité, ou décoratif, comprenant un substrat, qui peut contenir des indices ou d'autres caractéristiques visibles dans ou sur sa surface, et sur au moins une partie de ladite surface de substrat, un revêtement, comprenant la composition selon l'une quelconque des revendications 1 à 10.

12. Élément de sécurité ou décoratif selon la revendication 11, dans lequel l'élément de sécurité ou décoratif comprend un substrat, un revêtement sur au moins une partie du substrat comprenant au moins un composé à cristaux liquides, le revêtement étant appliqué sur le verso du substrat si le substrat est transparent ou translucide ou sur le côté de surface si le substrat est transparent, translucide, réfléchissant ou opaque et un revêtement supplémentaire sur au moins une partie du revêtement contenant le composé à cristaux liquides ou directement sur le substrat si le revêtement contenant le composé à cristaux liquides est placé sur le verso du substrat, le revêtement supplémentaire est formé par la composition selon l'une quelconque des revendications 1 à 10 ; ou
l'élément de sécurité ou décoratif est constitué d'une structure multicouche capable d'interférence, dans lequel la structure multicouche capable d'interférence a une couche réfléchissante, une couche diélectrique, et une couche partiellement transparente, dans lequel la couche diélectrique est disposée entre la couche réfléchissante et la couche partiellement transparente, dans lequel la couche réfléchissante est formée par une couche colorée, comprenant la composition selon l'une quelconque des revendications 1 à 10 ; ou
l'élément de sécurité ou décoratif comprend un substrat de support transparent, une couche contenant un élément optique diffractif (DOE) et une couche fonctionnelle semi-transparente, qui est formée par la composition selon l'une quelconque des revendications 1 à 10 ; ou
l'élément de sécurité ou décoratif est un blister pour comprimés, comprenant un substrat de support transparent qui comprend une couche fonctionnelle semi-transparente, qui est formée par la composition selon l'une quelconque des revendications 1 à 10 ; ou
l'élément de sécurité ou décoratif est un emballage comprenant une partie façonnée en film plastique et un film de couverture, dans lequel ladite partie façonnée en film plastique définit le côté avant de l'emballage et le film de couverture définit le côté arrière de l'emballage, et le film de couverture est basé sur un substrat de support muni d'une couche fonctionnelle semi-transparente, qui est formée par la composition selon l'une quelconque des revendications 1 à 10 ; ou
un élément de sécurité ou décoratif, comprenant un substrat, un composant avec modulation d'un indice de réfraction, en particulier un hologramme volumique, qui peut être obtenu par exposition d'un matériau d'enregistrement à un rayonnement actinique et sur celui-ci un revêtement sur au moins une partie de la couche modulée par l'indice de réfraction, qui est formée par la composition selon l'une quelconque des revendications 1 à 10 ; ou
un élément de sécurité ou décoratif, comprenant un substrat, une couche de vernis UV sur au moins une partie du substrat ayant sur au moins une partie de sa surface une nano- ou microstructure, et sur au moins une partie de la couche de vernis UV et/ou sur au moins une partie de la couche de nano- ou microstructure un revêtement, qui est formé par la composition selon l'une quelconque des revendications 1 à 10 ; ou
un élément de sécurité ou décoratif, capable d'interférer dans la plage visible du spectre, comprenant un substrat, éventuellement, portant sur au moins une partie de sa surface une nano- ou microstructure, et sur au moins une partie du substrat et/ou sur au moins une partie de la nano- ou microstructure, un revêtement, qui est obtenu avec les compositions selon l'une quelconque des revendications 1 à 10, ledit revêtement présentant une couleur d'interférence ; ou
élément de sécurité ou décoratif, comprenant
i) une couche réfléchissante, qui est obtenue avec les compositions selon l'une quelconque des revendications 1 à 10,
ii) une couche d'espacement transparente ou translucide et
iii) en outre, une couche transparente ou translucide ayant un indice de réfraction différent de l'indice de réfraction de ladite couche d'espacement d'au moins 0,1, de préférence d'au moins 0,2, le plus préférablement d'au moins 0,3 ; dans laquelle la couche d'espacement ii) est située entre la couche réfléchissante i) et la couche iii) et l'élément de sécurité ou décoratif présentant une couleur d'interférence.

13. Produit, comprenant l'élément de sécurité ou décoratif selon la revendication 11 ou 12.

14. Utilisation de l'élément de sécurité ou décoratif selon la revendication 11 ou 12 pour la prévention de la contrefaçon ou de la reproduction, sur un document de valeur, de droit, d'identité, une étiquette de sécurité ou un produit de marque.

15. Procédé de fabrication d'un élément de sécurité ou décoratif, comprenant les étapes de :
a) fourniture d'un substrat, portant éventuellement une nano- ou microstructure en relief de surface,
b1) application d'une composition selon les revendications 1 à 10 sur au moins une partie du substrat,
b2) éventuellement embossage d'une nano- ou microstructure dans le revêtement obtenu à l'étape b1), et
c) durcissement de la composition avec un rayonnement actinique.
